## Europäisches Patentamt

(19) **European Patent Office**

**Office européen des brevets**

(11) Veröffentlichungsnummer: **0 031 163**

**B1**

(12) # EUROPÄISCHE PATENTSCHRIFT

(45) Veröffentlichungstag der Patentschrift:
23.09.87

(21) Anmeldenummer: 80108075.5

(22) Anmeldetag: 20.12.80

(51) Int. Cl.⁴: **G 07 C 9/00,** A 61 B 5/10,
G 07 C 11/00

(54) **Verfahren und Vorrichtung zur Durchführung eines Vergleichs gegebener Muster, insbesondere Fingerabdrücke.**

(30) Priorität: 24.12.79 DE 2952402
19.05.80 DE 3018998
28.11.80 DE 3044881

(43) Veröffentlichungstag der Anmeldung:
01.07.81 Patentblatt 81/26

(45) Bekanntmachung des Hinweises auf die Patenterteilung:
23.09.87 Patentblatt 87/39

(84) Benannte Vertragsstaaten:
AT BE CH DE FR GB IT LI NL SE

(56) Entgegenhaltungen:
US-A-3 511 571
US-A-3 928 842
US-A-3 947 128

IBM TECHNICAL DISCLOSURE BULLETIN, Band 18,
Nr. 6. November 1975, Seiten 2018-2020, New York,
US, S.I. RISKIN: "Fingerprint comparator"
IBM TECHNICAL DISCLOSURE BULLETIN, Band 17,
Nr. 12, Mai 1975, Seiten 3741-3743, New York, US, C.
WEST u.a.: "Fingerprint-based person verification
system"

(73) Patentinhaber: EL- DE ELECTRO- OPTIC
DEVELOPMENTS LIMITED, Mercaz Sapir Stage 4,
Jerusalem (IL)

(72) Erfinder: Blonder, Alain, 5, Rue de Docteur
Mouisset, F-69006 Lyon (FR)

(74) Vertreter: Otte, Peter, Dipl.- Ing., Tiroler Strasse
15, D-7250 Leonberg (DE)

LIBER, STOCKHOLM 1987

## Beschreibung

### Stand der Technik

Die Erfindung geht aus von einem Verfahren nach der Gattung des Anspruchs 1 und einer Vorrichtung nach der Gattung des Anspruchs 22. Bei einer bekannten Vorrichtung dieser Art (US-A-3 928 842) wird die Aufzeichnung eines Fingerabdruckmusters mit einer weiteren Aufzeichnung oder mit einem durch unmittelbares Auflegen gewonnenem Abbild eines Fingerabdruckmusters dadurch verglichen, daß mit hoher Strahlungsintensität ein erstes Fingerabdruckmuster beleuchtet und das gewonnene, reflektierte Lichtbündel nach Umlenkung durch zwei koaxiale Linsen auf zwei senkrecht zueinander stehende, motorisch angetriebene Spiegel projiziert wird, zur Durchführung der Suchbewegung. Von den Spiegeln gelangt das optische Bild des ersten Fingerabdruckmusters auf die Ebene eines zweiten Musters und die durch die Überlagerung gewonnene Strahlung wird in einem photoelektrischen Detektor in ein elektrisches Signal umgewandelt. Bei dieser bekannten Vorrichtung glaubt man erkannt zu haben, daß eine Auswertung des durch die geschilderten Maßnahmen und die optische Bearbeitung, insbesondere durch die Suchbewegung gewonnenen elektrischen Signals nur dann möglich ist, wenn dieses Signal vorab einer Differenzierung unterworfen wird, da sich auch der bei einer Übereinstimmung der Fingerabdrücke ergebende Korrelationsimpuls praktisch nicht über die begleitenden Störsignale und das Rauschen hervorhebt.

Bei der Auswertung wird also nicht auf das tatsächlich gewonnene Ausgangssignal des photoelektrischen Detektors abgestellt, sondern auf die Steilheit der in diesem Signal enthaltenden Flanken, da angenommen wurde, daß das Korrelationssignal von allen empfangenen Impulsen des Frequenzgemisches am Ausgang des Detektors den steilsten Anstieg haben müßte. In konsequenter Verfolgung dieses Weges ist es dann jedoch erforderlich, alle Einflüsse bei der Signalgewinnung zu eliminieren, die ebenfalls zu steilen Flanken im Detektorausgangssignal führen könnten; hierzu gehört insbesondere eine Problemlösung, die sich bei der extrem hohen Anstrahlung durch die Beleuchtungseinrichtung dann ergibt, wenn das optisch projizierte Abbild mit seinen Randkonturen bei der Suchbewegung aus dem Erfassungsbereich des lichtelektrischen Wandlers gelangt. Hier ergeben sich, wie ohne weiteres einzusehen, besonders starke Flankensprünge, denen dadurch begegnet werden soll, daß die vorerwähnte Linsenkombination so ausgebildet ist, daß eine Vignettierung erreicht wird; mit anderen Worten, um überhaupt zu durch die Differenzierung gewonnenen, auswertbaren Signalen zu gelangen, muß eine teilweise Verwischung des projizierten Bilds optisch vorgenommen werden, ergänzend zu Maßnahmen, die beispielsweise mit Hilfe von Blenden erreicht werden und die darauf hinauslaufen, die Beleuchtung nicht über das ganze Bildfeld gleichmäßig vorzunehmen, sondern in etwa linear vom Mittelpunkt des Bildfeldes nach außen abfallen zu lassen. Derartige Maßnahmen der Apodisation (Vignettierung), der Differenzierung und der Abblendung - herrührend aus dem Wunsch einer Überhöhung des hier einzig interessierenden Nutz-Korrelationsimpulses-stellen aber letztlich Verfälschungen dar, die die Funktionsfähigkeit insgesamt entscheidend in Frage stellen. Insbesondere ermöglichen solche speziellen Signalverarbeitungsschritte aber gerade das, was die gesamte Einrichtung vermeiden will, nämlich die Gefahr einer gewollten Verfälschung durch Manipulationen bei der Gewinnung des Fingerabdrucks, die zu steilen Flankenanstiegen führen können, auf die bei dieser bekannten Einrichtung ausschließlich abgestellt wird.

Im übrigen wird bei dieser bekannten Einrichtung bei der sich anschließenden elektronischen Signalauswertung auch kein echter Vergleich durchgeführt, sondern das differenzierte Signal lediglich einem Verstärker mit automatischer Verstärkungsregelung zugeführt, wodurch sich eine Egalisierung des störenden Rauschpegels ergeben soll, über den sich der bei Identität des verglichenen Musters gewonnene differenzierte Korrelationsimpuls so weit hinaushebt, daß er eine nachgeschaltete Schwellwertschaltung passieren kann, deren Pegel oberhalb des Stör-Rauschpegels liegt.

Bekannt ist ferner (US-A-3 947 128), ein Verfahren und eine Vorrichtung, um zwei Fingerabdruckmuster miteinander zu vergleichen, und zwar eines unmittelbar gewonnenen Fingerabdrucks einer Person mit einer Aufzeichnung dieses Fingerabdrucks, die sich beispielsweise auf einem Ausweispapier, einer Kreditkarte, einem sonstigen Informationsträger u. dgl. befindet.

Zur Durchführung dieses Vergleichs wird ein Abbild des Fingerabdrucks durch Auflegen des Fingers der betreffenden Person auf ein Prisma hergestellt und dieses Abbild wird durch optische Mittel zur Deckung gebracht mit dem aufgezeichneten Fingerabdruck, der sich mit dem ihn tragenden Aufzeichnungsträger in einem Kartenschlitz des Vergleichsgerätes befindet. Zur Herbeiführung der Deckungsgleichheit wird das ein Abbild des Fingerabdrucks tragende Lichtbündel einer Suchbewegung unterworfen, und zwar mit Hilfe eines ersten trapezförmigen Prismas und anschließend mit Hilfe von zwei prismatischen Keilformen, die um eine Achse eine gleichförmige Drehbewegung ausführen. Bei Identität der Fingerabdruckabbildung mit der Aufzeichnung ergibt sich nach photoelektrischer Umwandlung des den Vergleich bewirkenden Lichtstrahlbündels eine bestimmte Charakteristik der wechselstromartigen Ausgangsgröße des Photodetektors, die ausgewertet werden kann. Dieses Identitätscharakteristikum kann ein maximaler oder ein minimaler Ausgangswert sein, je nachdem, ob negative oder positive Fingerabdruck-Charakteristiken miteinander verglichen worden sind. Angaben über die effektive Auswertung des gewonnenen Detektorausgangssignals sowie deren genauem Verlauf werden nicht gemacht. Erwähnt ist hier auch die optische Abtastung mittels zwei rotierender, einander zugeordneter Keilprismen (ob diese relativ zueinander bewegt werden, ist allerdings nicht erwähnt) sowie die Möglichkeit, die Abbildungen zu codieren bzw. zu verzerren, um so eine Sicherung gegen Mißbrauch zu erzielen.

Schließlich lassen sich der Veröffentlichung IBM Technical Disclosure Bulletin, Bd. 18, Nr. 6, November 1975, Seiten 2018-2020, Maßnahmen zum Vergleich mehrerer Fingerabdruckmuster nacheinander mit einem Referenzmuster sowie die Überprüfung zusätzlicher Informationen entnehmen.

Der vorliegenden Erfindung liegt die Aufgabe zugrunde, die bekannten Vorrichtungen zur Durchführung eines Fingerabdruckmustervergleichs sowohl bezüglich der elektrischen Auswertung als auch der in diesem Zusammenhang verwendeten optischen Aufbereitung der gewonnenen Signale so zu verbessern, daß durch die spezielle Interpretationsweise der gewonnenen elektrischen Größen eine zuverlässige Aussage über den Identitätsgehalt der jeweils miteinander verglichenen Muster gemacht werden kann.

Vorteile der Erfindung

Die Erfindung löst diese Aufgabe mit den kennzeichnenden Merkmalen des Anspruchs 1 bzw. mit den kennzeichnenden Merkmalen des Anspruchs 22 und hat den Vorteil, daß sich ausgehend von einer speziellen, den Strahlverlauf nicht beeinflussenden optischen Signalaufbearbeitung und -gewinnung eine elektrische Auswerteeinrichtung an diese anschließt, die bei sinnrichtiger Interpretation des am lichtelektrischen Wandler gewonnenen elektrischen Gesamtsignals dieses ebenfalls unbeeinflußt, also insbesondere undifferenziert speziellen Vergleichskriterien unterwirft. Hierdurch ergibt sich ein besonders zuverlässiges Maß an Sicherheit bei der Identitätsüberprüfung von Fingerabdrücken, entweder von Aufzeichnungen gegeneinander oder einer Fingerabdrucks-Aufzeichnung mit einem unmittelbar, nämlich durch Auflegen auf ein geeignetes optisches Element (Prisma) gewonnenen Fingerabdruck.

Hierbei können insbesondere die Vergleichs- oder Überprüfungskriterien von vielfältiger Art sein; sie können sich aus dem am lichtelektrischen Wandler (photoelektrischer Detektor) gewonnenen Gesamtsignal ergeben, als elektrische Größe oder als sonstige, in diesem Gesamtsignal enthaltende Angabe, etwa der Periodizität des Auftretens von Korrelationsimpulsen und/oder schließlich bei der optischen bzw. elektrischen Aufbereitung und Auswertung der Signale ergeben.

Vorteilhaft ist daher, daß zusätzlich zu der optischen Suchbewegung in der X-Y-Koordinatenebene, in welcher sich die Aufzeichnung befindet, auch die Aufzeichnung selbst noch einer mechanischen Verschiebebewegung unterworfen werden kann, vorzugsweise gleichzeitig mit der optischen Suchbewegung zur Erzielung einer Deckungsgleichheit, so daß es möglich ist, auch bei etwas schräger Einführung des den zu überprüfenden Fingerabdruck tragenden Fingers in die Fingerführung eine optimale Aussage über den Identitätsgehalt gemacht werden kann. Weitere Unterregelschleifen sind vorhanden, um die Lampenhelligkeit oder die Verstärkung des Systems auf vorgegebenen Werten aufrechtzuerhalten.

Besonders vorteilhaft ist die Möglichkeit einer optischen Verzerrung der Abbildform der zu vergleichenden Muster, wobei gleichzeitig bei der Erstellung der Aufzeichnung dieser Muster eine identische Verzerrung vorgenommen worden ist. Hierdurch schließt man Fälschungen sicher aus, denn es werden dann nicht Aufzeichnungen mit ihrem Abbild verglichen, sondern von Anfang an verzerrte Darstellungen mit entsprechend verzerrten, unmittelbar gewonnenen Abbildern.

Vorteilhaft ist auch, daß in einem gemeinsamen Prüfgerät die Überprüfung sowohl des Fingerabdrucks als auch der Vergleich des Meistersymbols, das ebenfalls auf der Karte angeordnet ist, vorgenommen werden kann, wobei mindestens teilweise Baukomponenten des einen Systems auch vom anderen mitbenutzt werden können, desgleichen auch die gemeinsame Auswertlogik.

Vorteilhaft ist weiterhin, daß eine Beschleunigung des Prüfvorgangs dann erzielt werden kann, wenn zunächst auf Übereinstimmung mit dem Meistersymbol geprüft wird und der weitere Prüfvorgang dann abgewiesen wird, wenn sich schon hier keine Übereinstimmung feststellen läßt. Ergibt sich eine GUT-Bewertung bei der Meistersymbolüberprüfung, dann schließt sich sofort, beispielsweise innerhalb einer 1/2 Sekunde die Überprüfung auf die Musteridentität an und ein den beiden fotoelektrischen Detektoren nachgeschalteter Umschalter legt den Eingang der elektronischen Auswerteschaltung dann auf den jeweils signalführenden Ausgang. Da sich bei jedem vollständigen Abtastzyklus durch einen Bewegungssucher zweimal ein Bereich ergibt, in welchem Identifikationsimpulse im Verlauf des elektrischen Ausgangssignals auftreten, schaltet ein zusätzlicher Bewegungssucher, der dem Kartenhalter eine inkrementale, also schrittweise Rotations-Suchbewegung verleiht, jeweils nach Ablauf eines 1/2 Abtastzyklus weiter, so daß mit doppelter Prüfgeschwindigkeit beim Mustervergleich gearbeitet werden kann.

5       **0 031 163**        6

In Abstimmung auf die Drehgeschwindigkeit des Bewegungssuchers ergeben sich in ihrem zeitlichen Abstand festgelegte Identifikationsimpulse, wobei der zeitliche Abstand zwischen diesen ein zusätzliches Prüfkriterium bilden kann. Außerdem sind Mittel vorgesehen, die eine unscharfe Überprüfung im zentralen Bereich der Abtastebene vermeiden bzw. so gestalten, daß wieder im Randbereich gearbeitet werden kann, wo eine höhere Abtastgeschwindigkeit vorliegt.

Schließlich schlägt die Erfindung noch die Ausbildung eines Bewegungssuchers (Scanners) vor, bei welchem unterschiedliche Abtastgeschwindigkeiten vermieden sind.

Alternativ kann es aber auch von besonderem Vorteil sein, daß die in einem gemeinsamen Prüfgerät vorgenommene Überprüfung der Identität des Träger-Fingerabdrucks mit dem Karten-Fingerabdruck einerseits und des Karten-Meistersymbols mit dem gespeicherten Gerät-Meistersymbol andererseits auch unter Verwendung der gemeinsamen Mittel nur einer optischen Bank und eines elektronischen Auswertesystems durchgeführt werden können.

Durch die Art der Anordnung einmal des Fingerabdrucks und zum anderen des Meistersymbols in optischer Überlagerung an der dann gleichen Stelle der Karte oder der Identifizierungsunterlage wird auch ein besonders hohes Maß an Fälschungssicherheit erreicht, da sich die auf den Fingerabdruck einerseits und das Meistersymbol andererseits zurückgehenden Linien auch mit einem hohen Maß an Aufwand nicht mehr einzeln isolieren und daher auch nicht erfassen lassen.

Mit Vorteil ist diese Ausgestaltung des Prüfgeräts im übrigen so ausgelegt, daß zunächst der gesamte Prüfzyklus, also die Identitätsüberprüfung des Fingerabdrucks und des Meistersymbols durchgeführt wird, bevor dann entweder die Fehleranzeige oder die GUT-Anzeige erfolgt. Ein eine Fälschung beabsichtigender Benutzer erhält daher auch keine Aussage darüber, bei der Überprüfung welches Kriteriums (Fingerabdruck oder Meistersymbol oder bei beiden) das Prüfgerät eine Zurückweisung vorgenommen hat.

Einer weiteren Fälschungsmöglichkeit, die darin bestehen könnte, daß man zur Erzielung von Identifikationsimpulsen ausreichender Größe den Finger sehr schnell auf dem Meßprisma bewegt, beispielsweise abhebt und wieder auflegt, wird dadurch begegnet, daß man ein Signal einer die Lampenhelligkeit auf konstante Auswertehelligkeit regelnden Rückführleitung auswertet.

Weitere Ausgestaltungen der Erfindung sind Gegenstand der Unteransprüche und in diesen niedergelegt.

**Zeichnung**

Ein Ausführungsbeispiel der Erfindung ist in der Zeichnung dargestellt und wird in der nachfolgenden Beschreibung näher erläutert. Es zeigen:

Fig. 1: in schematischer Darstellung die Grundform des optisch-mechanischen Aufbaus des erfindungsgemäßen Systems zum Fingerabdruckvergleich,

die Fig. 2a und 2b: die Arbeitsweise eines rotierenden Keilsystems in schematischer Darstellung sowie die in einer Ebene sich durch diese Suchbewegung ergebende spiralige Verschiebung des Fingerabdruckabbilds,

Fig. 3: einen möglichen Kurvenverlauf des Detektorausgangssignals bei Identität von Abbild und Aufzeichnung des Fingerabdrucks,

Fig. 4: in schematischer Blockbilddarstellung die eine Vielzahl von Überprüfungskriterien sichernde elektronische Auswerteschaltung,

Fig. 5: ein Ausführungsbeispiel einer elektrischen Schaltung in Form eines Blockschaltbildes zur Gewinnung des im Detektorsignal enthaltenden Sinus-Grundschwingungssignals,

die Fig. 6a und 6b: Blockbilddarstellungen von Schaltungen zur Durchführung von Vergleichen eines bei Identität von Abbild und Aufzeichnung auftretenden negativen Spitzenimpulses mit im Detektorsignal ebenfalls enthaltenden elektrischen Signalformen,

Fig. 7: eine Ausführungsform eines Blockschaltbildes für ein weiteres Überprüfungskriterium,

Fig. 8: eine Ausführungsform eines Blockschaltbildes für ein zusätzliches Überprüfungskriterium,

Fig. 9: in Form eines Blockschaltbildes eine mögliche Ausführungsform einer die Ausgangssignale der Überprüfungsblöcke zusammenfassenden Entscheidungsschaltung,

Fig. 10: in einer schematischen Seitenansicht eine weitere mögliche Ausführungsform des Prüfgeräts und der strukturellen Zuordnung der einzelnen Baukomponenten,

Fig. 11: in schematischer Darstellung den Scanner-Bereich und die sich durch die kontinuierliche Phasenverschiebung in der Drehbewegung der Keilprismen des Scanners ergebenden Auswirkungen in Form von Diagrammen,

die Fig. 12a und 12b: Verläufe des Ausgangssignals einmal bei Abtastung im Randbereich der Abtastspirale und einmal im zentralen Bereich,

die Fig. 13a und 13b, 14a und 14b sowie 15a und 15b zeigen in Form von Diagrammen und in einer Aufsicht auf die Abtastebene das Auftreten der Identifikationsimpulsbereiche bei Abtastung im Spiralen-Außenbereich, im Zwischenbereich und im zentralen Bereich und die

Fig. 16 zeigt eine weitere bevorzugte Ausführungsform eines Bewegungssuchers oder Scanners,

4

Fig. 17: in einer schematischen Seitenansicht im wesentlichen den die optische Bank bildenden Teilbereich einer weiteren Ausführungsform eines Prüfgeräts mit der strukturellen Zuordnung der einzelnen Baukomponenten und

Fig. 18: eine Draufsicht auf eine eine Identifizierungsunterlage bildenden Karte mit der optischen Überlagerung von Meistersymbol und Fingerabdruck.

## Beschreibung der Ausführungsbeispiele

Der Grundgedanke vorliegender Erfindung besteht darin, ein zu einem gegebenen Zeitpunkt durch unmittelbare Einwirkung entstandenes Muster mit einem aufgezeichneten Muster zu vergleichen, hauptsächlich also entsprechend dem bevorzugten Ausführungsbeispiel vorliegender Erfindung das Muster eines zu diesem Zeitpunkt abgenommenen oder gewonnenen Fingerabdrucks mit einem als Aufzeichnung existierendem Fingerabdruck, und zwar dadurch, daß der Verlauf einer aus diesem Vergleich resultierenden elektrischen Größe, die wechselspannungsähnlich ist, mit Hilfe mindestens eines Kriteriums, vorzugsweise aber mit Hilfe einer größeren Anzahl von Überprüfungskriterien so ausgewertet wird, daß sich bei einer anschließend zu fällenden Entscheidung bezüglich der Übereinstimmung oder Nichtübereinstimmung des unmittelbar gewonnenen Musters mit dem aufgezeichneten Muster eine an Sicherheit grenzende Wahrscheinlichkeit bezüglich der getroffenen Entscheidung ergibt. Dabei befindet sich das aufgezeichnete Muster, also beispielsweise der aufgezeichnete Fingerabdruck, auf einer Unterlage, die bei Einwirkung elektromagnetischer Strahlung beispielsweise al so sichtbarem Licht, oder Infrarotlicht o. dgl. ein durch die Linien des Fingerabdrucks modifiziertes, also nicht mehr gleichmäßiges Strahlungsbild ergibt. Bevorzugt ist diese Unterlage transparent und die aufgezeichneten Fingerabdrucklinien sind als mehr oder weniger starke Schwärzungen erkennbar; es ist auch möglich, die Fingerabdrucklinien als helle Verläufe auf dunklem Grund auszubilden. Die Unterlage selbst kann dann ihrerseits wieder Bestandteil sein eines beliebigen Dokuments oder Ausweispapiers, beispielsweise also einer Kreditkarte, eines sonstigen Informationsträgers, einer Codekarte, eines Führerscheins oder sonstigen Identifikationspapiers, Paß, Personalausweis, einer Scheckkarte, aber auch Teil sogenannter Schlüsselkarten, mit deren Einschub in vorgegebene Öffnungen Berechtigungspersonen sich Zugang zu Gebäuden oder dgl. verschaffen können.

Durch dieses durch die Erfindung geschaffene zusätzliche Überprüfungsmittel kann jede Person, die über einen Unterlagenträger verfügt, nachweisen, daß sie die berechtigte Person set, diesen Unterlagenträger zu besitzen, denn sie weist beim Gebrauch des Unterlagenträgers nach, daß der auf diesem befindiche Fingerabdruck mit dem Fingerabdruck übereinstimmt, den sie einem Vergleich unterwirft.

Im folgenden wird von diesem Unterlagenträger ausschließlich noch als von der Karte gesprochen, die an einer vorgegebenen Stelle auch eine aufzeichnung des Fingerabdrucks der die Karte tragenden und somit berechtigten Person aufweist, wodurch es gelingt, eine Vielzahl von Tätigkeiten, geschäftlichen Abschlüssen, Käufen mit Hilfe von Kreditkarten u. dgl. absolut fälschungssicher zu machen, desgleichen den Zugang zu Gebäuden ausschließch berechtigten Personen vorzubehalten.

Im folgenden wird zunächst auf den mechanischen Aufbau des erfindungsgemäßen Systems, anschließend auf die elektronischen Auswertungsschaltungen und weitere vorteilhafte Ausgestaltungen der Erfindung eingegangen.

1.) Der mechanische Aufbau

Die mechanischen Baukomponenten sind so angeordnet und ausgebildet, daß sie ein, beispielsweise durch Auflegen eines Fingers 4 auf ein Prisma 5 unmittelbar gewonnenes Abbild eines Fingerabdrucks vergleichen und zur Deckung bringen mit der Aufzeichnung 1 eines Fingerabdrucks, die sich, etwa als transparentes Abbild mit geschwärzter Linienführung auf einem Informationsträger oder einer Karte 2 befindet, die in einen Kartenhalter 3 eingeschoben ist.

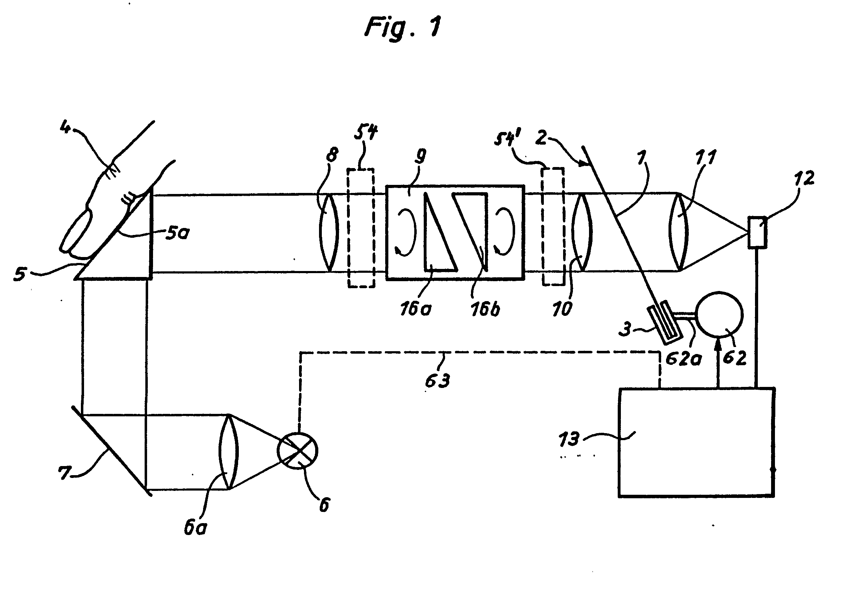

Zur Durchführung dieses Vergleichs fällt von einer Lampe 6 Licht über ein beliebig ausgebildetes Linsensystem 6a zunächst auf einen Spiegel 7 und von dort auf das Prisma, an dessen innerer Prismafläche 5a Totalreflexion stattfindet, aber nur bezüglich der Bereiche, die nicht in einem unmittelbaren Kontakt mit den erhabenen Teilen des Fingerabdrucks stehen. Mit anderen Worten, das aus dem Prisma 5 austretende Lichtbündel trägt ein Abbild des auf diese Weise gewonnenen Fingerabdrucks. Dieses Fingerabdruck-Abbild tritt durch ein weiteres Linsensystem 8 in ein Bauelement ein, welches dem Fingerabdruck-Abbild eine Bewegung in der X-Y-Koordinatenebene verleiht, und zwar eine Suchbewegung so daß man dieses Bauelement am besten als Bewegungssucher 9 bezeichnet oder als Scanner, denn durch diese Bewegung, die dem Fingerabdruck-Abbild vom Bewegungssucher 9 verliehen wird, verschiebt sich das Abbild ständig und, wie weiter unten noch in Verbindung mit dem Aufbau des Bewegungssuchers 9 genauer erläutert wird, in Spiralform in der X-Y-Koordinatenebene, in welcher sich auch die Aufzeichnung 1 des Fingerabdrucks befindet. Zwischen dem Bewegungssucher 9 und der Abbildung 1 befindet sich ein weiteres Linsensystem 10, wobei das durch den transparenten Bereich der Karte 2 und damit durch die Aufzeichnung des Fingerabdrucks 1 tretende Lichtbündel von einem weiteren Linsensystem 11 gebündelt und auf ein lichtempfindliches Element 12 geworfen wird, vorzugsweise eine Photodiode, ein Detektor o. dgl. In diesem Zusammenhang versteht es sich, daß innerhalb des erfindungsgemäßen Rahmens bei diesem Aufbau mechanischer Bauteile auch alternative Lösungen infrage kommen, beispielsweise eine ledigliche Anstrahlung der Aufzeichnung 1 mit dem Fingerabdruck-Abbild und die Auswertung des reflektierten Bündels, die Verwendung sonstiger geeigneter, der Abtastung dienender Strahlungsmittel wie allgemein elektromagnetischer Strahlung, insofern insbesondere auch Licht an den Endbereichen des sichtbaren Lichtbandes wie Infrarotlicht oder ultraviolettes licht.

Am Ausgang des Photodetektors 12 ergibt sich auf jeden Fall ein der einfallenden, sich ändernden Lichtenergie proportionaler elektrischer Strom oder nach Umwandung eine entsprechende proportionale elektrische Spannung, die Wechselstromcharakter hat und die von einer nachgeschalteten, elektronischen Auswerteeinrichtung 13 so ausgewertet wird, daß sich eine Identifizierung des unmittelbar gewonnenen Fingerabdrucks mit dem auf der Karte 2 aufgezeichneten Fingerabdruck mit einer Irrtümer ausschließenden Wahrscheinlichkeit ergibt.

Aufbau und Arbeitsweise des Bewegungssuchers 9 sind dabei wie folgt. Der Bewegungssucher oder Scanner verschiebt das Abbild des Fingerabdrucks fortlaufend in der X-Y-Koordinatenebene der Aufzeichnung 1, so daß zu einem gegebenen, aber nicht vorhersehbaren Zeitpunkt die beiden Fingerabdrücke, der aufgezeichnete und der unmittelbar durch Messung gewonnene, stets auch zu einer absoluten, jedoch sehr kurzzeitigen Deckung gelangen müssen, wenn sie identisch sind.

Es ist weiter vorn schon darauf hingewiesen worden, daß die erhabenen Fingerabdruckstellen bei der Herstellung des Fingerabdruck-Abbildes am Prisma nicht zur Reflexion führen, so daß sich hinter dem Prisma ein negatives Abbild ergibt mit Bereichen fehlender Lichtenergie in der X-Y-Koordinatenebene dort, wo sich bei der Messung die erhabenen Fingerabdruckstellen befunden haben.

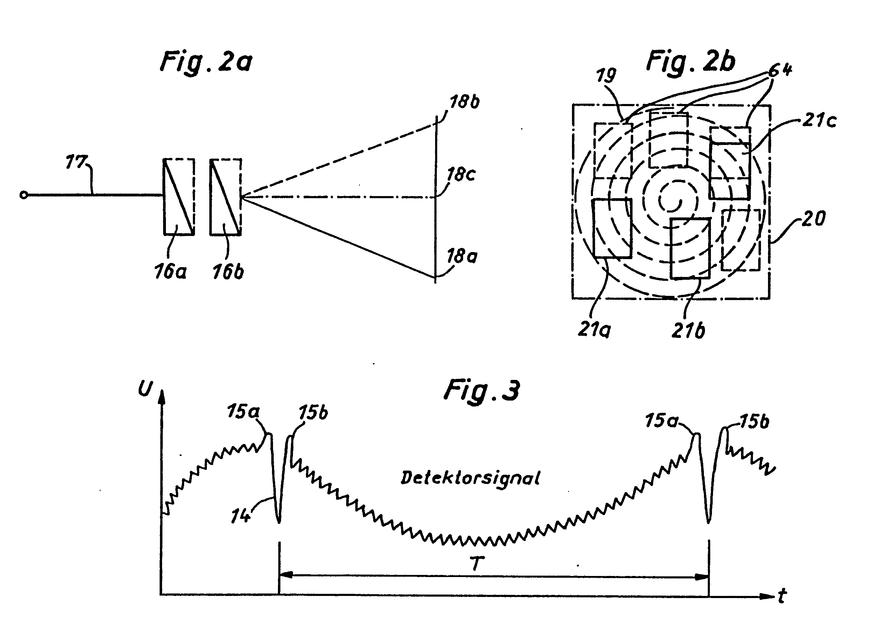

Solange, wie wohlverstanden bei identischen Fingerabdrücken im Abbild und in der Aufzeichnung, diese nicht deckungsgleich sind, ergibt sich eine Art mittlerer Lichtstrom. Dieser mittlere Lichtstrom führt nach Umwandlung in eine elektrische Größe zu dem in Fig. 3 dargestellten Schwingungsverlauf, bestehend aus einer in etwa sinusförmig verlaufenden Schwingung niedriger Frequenz und einer diese überlagernden höherfrequenten Schwingung mit ver gleichsweise kleiner Amplitude. Im Moment der Deckungsgleichheit blendet aber der Verlauf der Fingerabdrucklinien der Aufzeichnung Licht entweder genau an den Stellen aus, wo es durch schwächere Reflexion am Prisma 5 ohnehin nur gering vorhanden war oder es werden die Stellen ausgeblendet, die bei der Prismareflexion eine Totalreflexion erfahren haben. Letzteres trifft zu, wenn die Täler der Fingerlinien bei der Aufzeichnung geschwärzt sind, d. h. der Aufzeichnungsabdruck negativ ist. Diese völlige Deckungsgleichheit führt zu einem kurzzeitigen Abfall des Lichtstroms und zu einem entsprechenden, merklichem negativen Impuls 14 im Kurvenverlauf der Fig. 3, wobei dieser negative Impuls 14, wie festgestellt worden ist, von zwei aus der Masse der anderen Impulse ebenfalls merklich hervorragenden positiven Impulsen 15a, 15b umrahmt ist.

Um diese Deckungsgleichheit durch den Bewegungssucher 9 zu erzielen, verfügt dieser über zwei Prismakeile 16a, 16b, die sich entsprechend den Pfeilen mit vergleichsweise hoher Geschwindigkeit um ihre eigene Achse drehen und außerdem noch eine geringe Differenzgeschwindigkeit aufweisen. Die Fig. 2a verdeutlicht, was gemeint ist. Befinden sich beide Keile 16a, 16b in der mit durchgezogener Linienführung gekennzeichneten Position der Fig. 2a, dann erfährt ein durch die Keile hindurchgeführter Lichtstrahl 17 eine nach unten gerichtete, maximale Ablenkung durch beide Keilprismen. Der Lichtstrahl trifft dann bei 18a auf einen in der X-Y-Koordinatenebene befindlichen, gedachten Schirm auf. Stehen beide Keilprismen, wie gestrichelt angedeutet, bei ihrer schnellen Rotation gleichsinnig mit ihrer Basisfläche nach oben, dann erfährt der Lichtstrahl, wie ohne weiteres einzusehen, eine maximale nach oben gerichtete Ablenkung und trifft bei 18b auf den Schirm auf.

Infolge der geringfügig unterschiedlichen Umdrehungsgeschwindigkeiten der beiden Keilprismen 16a, 16b ergibt es aber Verschiebungen in der Gleichsinnigkeit der Keilprismenposition dahingehend, daß zu einem gegebenen Zeitpunkt die Position eines dick durchgezogenen Keilprismas 16a mit der gestrichelten Position eines Keilprismas 16b zusammentrift, wodurch die Ablenkung des Lichtstrahls durch den einen Keil vom anderen wieder aufgehoben wird und der Lichtstrahl bei 18c auf die Schirmfläche auftrifft. Es ist einzusehen, daß die Ablenkung daher insgesamt spiralförmig verläuft, wie in Fig. 2b durch den spiraligen Verlauf 19 angedeutet und daher das Fingerdruck-Abbild sich zu bestimmten Zeiten an bestimmten Stellen innerhalb eines vorgegebenen Ausschnitts 20 der X-Y-Koordinatenebene befindet, aber an jeder Stelle mindestens einmal bei einem vollständigen Durchlauf der rotierenden Keilprismen, bis eine erneute gleichsinnige Position erreicht ist. Man erkennt, daß innerhalb eines solchen Zyklus einmal eine völlige Deckungsgleichheit erreicht werden muß mit der Aufzeichnung 1 des Fingerabdrucks, die sich in der X-Y-Koordinatenebene befindet. Zu diesem Zeitpunkt ergibt sich der scharfe Negativimpuls 14 im Kurvenverlauf der Fig. 3. In Fig. 2b sind einige mögliche Stellungen des Fingerabdruck-Abbilds in der X-Y-Koordinatenebene mit 21a, 21b und 21c gekennzeichnet.

2.) Die Identifizierung des Fingerabdrucks und die elektronische Schaltung

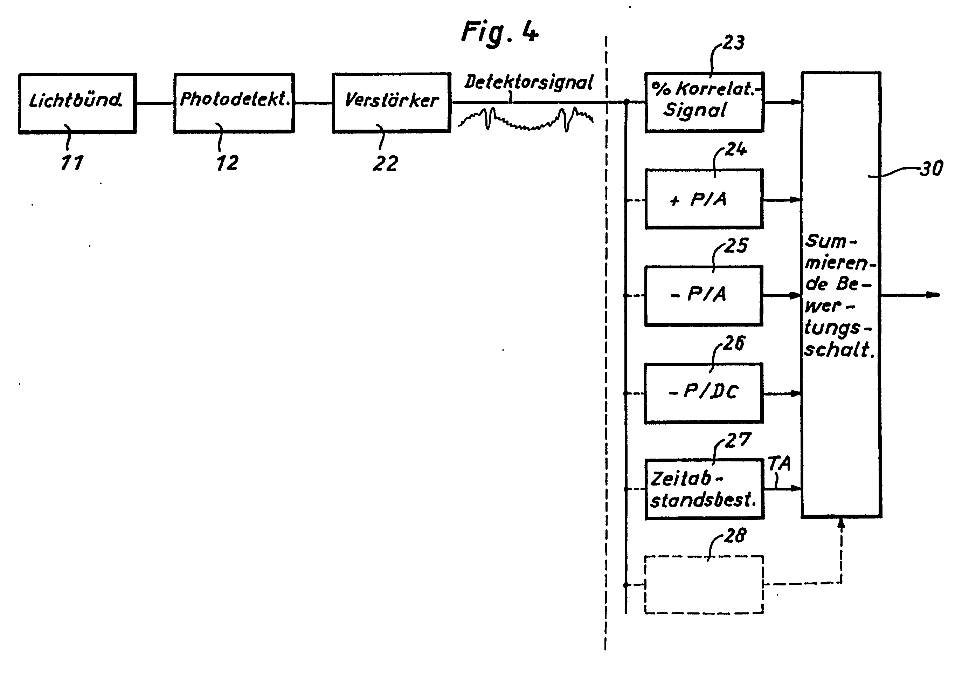

Es ist weiter vorn schon erwähnt worden, daß sich ein herausragender Impuls, der bei dem dargestellten Ausführungsbeispiel als Negativimpuls aufgrund der gewählten Hell-Dunkel-Feldverteilung von Fingerlinienbergen und Fingerlinientälern ergibt, immer dann ergibt, wenn während des Suchvorgangs bei Identität von Aufzeichnung und Abbild des Fingerabdrucks Deckungsgleichheit auftritt; in der Darstellung der Fig. 3 ist gezeigt, daß dieser herausragende Impuls, der im folgenden auch als Identifikationsimpuls 14 bezeichnet wird, begleitet ist von mindestens zwei weiteren Erscheinungen im Verlauf der gewonnenen elektrischen Größe, nämlich dem sogenannten Detektorsignal. Dieses Detektorsignal ergibt sich (siehe Fig. 4) nach der Umwandlung des Lichtbündels am Photodetektor bzw. einer geeigneten Photodiode 12 und nach Verstärkung am Verstärker 13. Die den Identifikationsimpuls begleitenden Erscheinungen sind eine Grundschwingung mit geringer, jedoch nicht vorherbestimmbarer Frequenz sowie eine hochfrequente, sich der Grundschwingung überlagernde und den Identifikationsimpuls 14, am ehesten aber die ihn begleitenden positiven Impulsspitzen 15a, 15b mindestens teilweise maskierende Störschwingung.

Die folgende Auswertung für die Identifikation ist darauf ausgerichtet, den Identifikationsimpuls 14, sein zeitliches Auftreten und seine Größe, bezogen auf die sonstigen Schwingungs-Erscheinungsformen, zu untersuchen, wobei gemäß einem weiteren Merkmal vorliegender Erfindung mindestens ein, bevorzugt aber mehrere Untersuchungskriterien angewendet werden. In Fig. 4 sind die an den Ausgang des Verstärkers 22 angeschlossenen, jeweils Untersuchungskriterien darstellenden Blöcke mit 23 bis 28 ... und die die Ergebnisse der einzelnen Blöcke zusammenfassende und bewertende Schaltung mit 30 bezeichnet. Im folgenden werden einige der bei vorliegender Erfindung bevorzugt angewandten Untersuchungs kriterien bezüglich des Identifikationsimpulses erläutert, die gewählte Reihenfolge stellt aber nicht notwendigerweise auch gleichzeitig die Bewertung dieser Kriterien nach ihrer Bedeutung dar.

a) Ein erstes Untersuchungskriterium wird als die Erfassung der sogenannten prozentualen Korrelation bezeichnet. Es handelt sich hierbei um eine Art prozentuale Amplitudenbestimmung des Identifikationsimpulses 14 mit Bezug auf die Grundschwingung langsamer Amplitude, in welche er eingebettet ist, d.h. mit anderen Worten, um die Bestimmung des Abstandes, den der hier negativ auftretende Identifikationsimpuls 14 zur Grundschwingung an der Stelle aufweist, wo er selbst entstanden ist. Man erkennt am Verlauf des Detektorsignals in Fig. 3, daß das Gesamtsignal durchaus Bereiche aufweist, die noch negativer liegen als der negative Identifikationsimpuls, so daß besondere Mittel zur Diskriminierung erforderlich sind, worauf weiter unten noch eingegangen wird. Das Verhältnis der Amplitude des Identifikationsimpulses 14 zur an dieser gleichen Stelle gegebenen Amplitude des Grundschwingungssignals ergibt das Ausmaß der prozentualen Korrelation und ist, bezogen auf einen empirisch feststellbaren Schwellwert, auf jeden Fall ein Hinweis auf die Identität zwischen Aufzeichnung und Abbild des Fingerabdrucks.

b) Ein weiterer Hinweis auf das Vorhandensein der Identität zwischen Abbild und Aufzeichnung ergibt sich durch die Verhältnisbildung zwischen dem größten auftretenden positiven Impuls 15a, 15b, der jeden negativen Identifikationsimpuls begleitet, zum hochfrequenten Grundschwingungs-Störsignal; je stärker der positive Impuls aus dem Durchschnitt der Hochfrequenzschwingung herausragt, umso sicherer handelt es sich hier um einen einen negativen Identifikationsimpuls 14 begleitenden positiven Impuls. Dieses Kriterium ist in der Zeichnung der Fig. 4 mit +P/A bezeichnet (+peak/average signal).

c) Zusätzlich zu der Auswertung der prozentualen Korrelation des negativen Identifikationsimpulses 14 zur Amplitude der (langsamen) Grundschwingung kann der negative Identifikationsimpuls ins Verhältnis gesetzt werden zum Mittel wert der hochfrequenten Störschwingung, wobei auch hier wieder ein ausreichend starkes Abheben des Identifikationssignals vom Hochfrequenz-Störsignal einen Hinweis auf die Identität zwischen Abbild und Aufzeichnung vermittelt. Dieses Kriterium ist in Fig. 4 im Block 25 mit -P/A gekennzeichnet (-peak/average signal).

d) Ein weiteres zur Bewertung bei der endgültigen Identitätsprüfung heranziehbares Kriterium besteht darin, daß man entsprechend Block 26 in Fig. 4 das Verhältnis des Identifikationsimpulses zum Gleichstromsignal bzw. allgemein zur erforderlichen Verstärkung erstellt, also -P/DC (-peak/DC-signal). Eine solche Verhältnisbildung ist sinnvoll, auf jeden Fall als eines der für die Identifikation verwendeten Kriterien, weil durch beliebig hohe Verstärkung Negativimpulse mit solchen Amplituden gebildet werden können, daß sie in den Grenzbereich echter Identifikationsimpuls-Amplituden hineingeraten könnten. Durch das Kriterium -P/DC des Blocks 26 ist sichergestellt, daß durch eine zu hohe Verstärkung keine Meßfehler entstehen können.

e) Ein in diesem Zusammenhang noch erwähnenswertes Merkmal bei der Identifikationsprüfung besteht schließlich noch darin, daß man den Zeitabstand erfaßt und bewertet, der sich zwischen zwei Identifikationsimpulsen 14 im Kurvenverlauf der Fig. 3 ergibt, also die Zeitdauer T, die eine aus den Parametenn des Geräts herleitbare Größe ist, auf jeden Fall größenordnungsmäßig aus dem Gerät, den Antriebsgeschwindigkeiten des Scanners u. dgl. ableitbar ist.

Läßt sich daher feststellen, daß der negative Identifikationsimpuls 14 im Verlauf des Vergleich des Fingerabdruck-Abbilds mit der Aufzeichnung innerhalb vorgegebener Abstände, und nur in annähernd gleichen Zeitabstäden T auftritt, dann handelt es sich hier um einen echten Identifikationsimpuls und die Auswertung wird im positiven Sinne weitergeführt. Aus der weiter vorn gegebenen Erläuterung bezüglich des Suchverfahrens ergibt sich ja, daß das Abbilddes Fingerabdrucks zu wiederholten Malen kurzzeitig deckungsgleich mit der Aufzeichnung ist, denn der Rahmen 20, der durch die Spiralbewegung des Abbil des abgesucht wird, wird ja bei einer Identifikatien zu wiederholten Malen durchlaufen.

Die Erfindung schließt nicht aus, daß noch zusätzliche Bewertungskriterien in die Endbeurteilung einbezogen werden, die sich letzter Endes ebenfalls auf Merkmale beziehen, die die Position des negativen Identifikationsimpulses 14 mit Bezug auf das restliche Signalspektrum kennzeichnen. Für diese weiteren Kriterien, auf die aus Gründen der Übersicht nicht weiter eingegangen wird, steht in Fig. 4 stellvertretend der Block 28.

3.) Die elektronischen Detailschaltungen

Mit Bezug auf Fig. 4 ist schon darauf hingewiesen worden, daß am Ausgang des Verstärkers 22 das in Fig. 3 in seinem Verlauf gezeigte Detektorsignal auftritt, welches für die Identifikation auszuwerten ist.

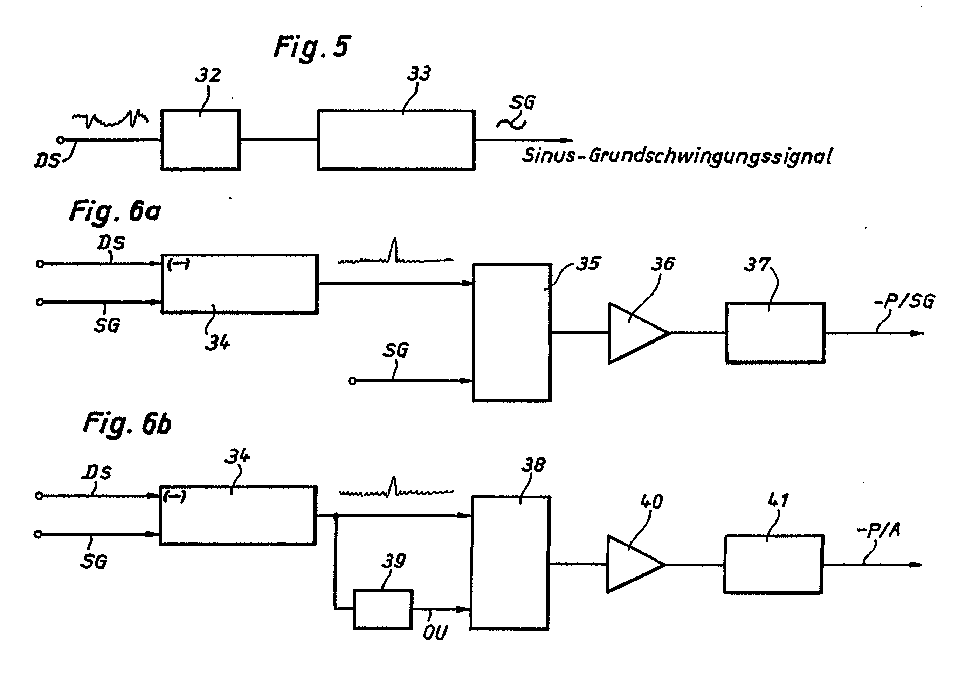

Zunächst wird mit Hilfe der in Fig. 5 dargestellten Schaltung aus dem dem Eingang 31 eines Tiefpaßfilters 32 zugeführten Detektorsignal DS ein Sinus-Grundschwingungssignal SG gebildet, welches lediglich noch die Grundschwingungskomponente des Detektorsignals DS, wie in Fig. 3 gezeigt, aufweist, ohne die hochfrequente Störkomponente und ohne die Peaks 14, 15a, 15b. Dieses Sirusgrundschwingungssignal SG muß jedoch in phasenrichtiger Beziehung zum Detektorsignal stehen und daher ist dem Tiefpaßfilter 32 eine Phasen-Kompensationsschaltung 33 nachgeschaltet, die die phasenrichtige Beziehung des Sinus-Grundschwingungssignals SG zu dem Grundschwingungsanteil im Detektorsignal DS wiederherstellt, die durch das Tiefpaßfilter verlorengegangen ist.

Das Grundschwingungssignal SG wird zur Erstellung des prozentualen Korrelationssignals verwendet, wie in Fig. 6a gezeigt, also eines im folgenden als -P/SG bezeichneten Korrelationssignals. Durch Zuführen des Grundschwingungssignals SG zum einen Eingang eines subtrahierenden Verstärkers 34 und des Detektorsignals DS zum anderen Eingang, nämlich dem -Eingang des gleichen Verstärkers gewinnt man an dessem Ausgang ein negatives Bezugssignal, welches grundschwingungsfrei ist und daher lediglich noch die Hauptimpulse sowie das hochfrequente Störsignal aufweist. Um dieses Bezugssignal am Ausgang des Verstärkers 34 mit dem Grundschwingungssignal SG ins Verhältnis zu setzen, wird das Grundschwingungssignal SG nochmals einem Eingang einer nachgeschalteten analogen Teilerschaltung 35 zugeführt, deren anderer Eingang mit dem Verstärker 34 verbunden ist. Es ergibt sich dann, wie einzusehen, am Ausgang der Teilerschaltung 35 ein Impuls, der, gegebenenfalls nach Zwischenverstärkung bei 36 einem Spitzenwertdetektor 37 zugeführt wird, an dessem Ausgang sich dann das gewünschte Korrelationssignal -P/SG ergibt.

Das gleiche, am Ausgang des Verstärkers 34 gebildete Bezugssignal wird entsprechend dem Ausführungsbeispiel der Fig. 6b dem einen Eingang einer weiteren analogen Teilerschaltung 38 zugeführt. Aus dem am Ausgang des Verstärkers 34 dargestellten kleinen Schaubild bezüglich dieses Bezugssignals geht hervor, daß dieses Signal noch den hochfrequenten Schwingungsanteil, der im folgenden als Oberschwingungsgehalt bezeichnet wird, enthält, so daß es möglich ist, aus diesem Signal das Kriterium -P/A als das Verhältnis des negativen Spitzenwerts zur Oberschwingung zu erzeugen. Nach paralleler Zuführung des Bezugssignals zu einem Tiefpaßfilter 39 ergibt sich an dessem Ausgang ein negatives Oberschwingungs-Mittelsignal und nach Division der beiden Signale in einer Teilerschaltung und nach eventueller Verstärkung bei 40 hinter dem wieder vorgesehenen Spitzenwertdetektor 41 das gewünschte Ausgangssignal -P/A.

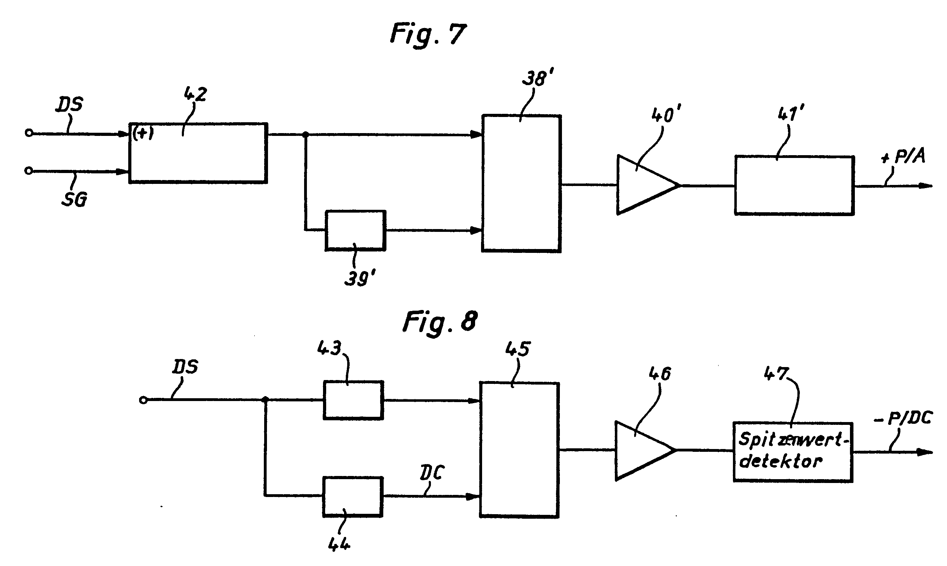

Im Grunde die gleiche Schaltung zeigt in Fig. 7 die Gewinnung des Verhältnisses des positiven Spitzenwertsignals zum Mittelwert der Oberschwingung (+P/A), wobei jedoch der subtrahierende Verstärker 42 am Eingang das Detektorsignal DS jetzt an seinem +Eingang und das -Grundschwingungssignal an seinem anderen, negativen Eingang, zugeführt erhält. Es ergibt sich dann am Ausgang des Verstärkers 42 ein positives Bezugssignal und entsprechend am Ausgang des Tiefpaßfilters 39' ein positives Mittelwertsignal des Oberschwingungsgehaltes, so daß sich nach Verhältnisbildung an der analogen Teilerschaltung 38' und Verstärkung bei 40' hinter dem Spitzenwertdetektor 41' das +P/A-Signal ergibt. Auf die Auswertung dieser Signale wird dann wieter unten eingegangen.

Eine im Vergleich ähnliche Schaltung ergibt sich entsprechend Fig. 8 dann noch zur Erzeugung des -P/DC-Signals, wobei das Detektorsignal DS parallel dem Eingang eines Hochpaßfilters 43 und eines Tiefpaßfilters 44 zugeführt wird. Am Ausgang des Tiefpaßfilters 44 ergibt sich ein Gleichspannungssignal DC, welches auch als maßgebend für die Verstärkung angesehen werden kann, so daß man nach Verhältnisbildung an einer weiteren analogen Teilerschaltung 45, Verstärkung bei 46 und Spitzenwertdetektion bei 47 das das Verhältnis des negativen Identitätsimpulses zum Gleichspannungslevel angebende Aussgangssignal -P/DC gewinnt.

Schließlich läßt sich das durch den Block 27 gewonnene Zeitabstands-Signal TA beispielsweise mit Hilfe einer Zeitverzögerungsschaltung, etwa eines Monoflops erzeugen, indem man den Monoflop jeweils mit dem Spitzenimpuls an einem der Eingänge der Spitzenwertdetektoren 37, 41 oder 41' triggert und die Verzögerungszeit bis zum Rückkippen in die Normallage so ansetzt, daß der nächste Identifikationsimpuls als Spitzenwert den Monoflop wieder triggert, bevor dieser zurückgekippt ist. Das Verbleiben des Monoflops in seinem metastabilen Zustand ist dann als GUT-Signal aufzufassen bezüglich der Zeitabstandsbestimmung; mit anderen Worten, der Spitzenimpuls trifft innerhalb der durch das System vorgegebenen Zeitdauer T zu wiederholten Malen ein. Selbstverständlich sind hier auch andere Lösungen mit Hilfe von Zeitverzögerungsgliedern verschiedenster Art möglich.

Die Spitzenwertdetektoren 37, 41, 41' sind so ausgebildet, daß sich an ihren Ausgängen ein länger andauerndes, der Maximalamplitude des am Eingang zugeführten Spitzenimpulses entsprechendes Signal ergibt, so daß die Höhe des Ausgangssignals der Spitzenwertdetektoren ein Maß ist für die durch die jeweilige Schaltung gemachte Aussage über das Verhältnis der miteinander verglichenen Eingangsgrößen.

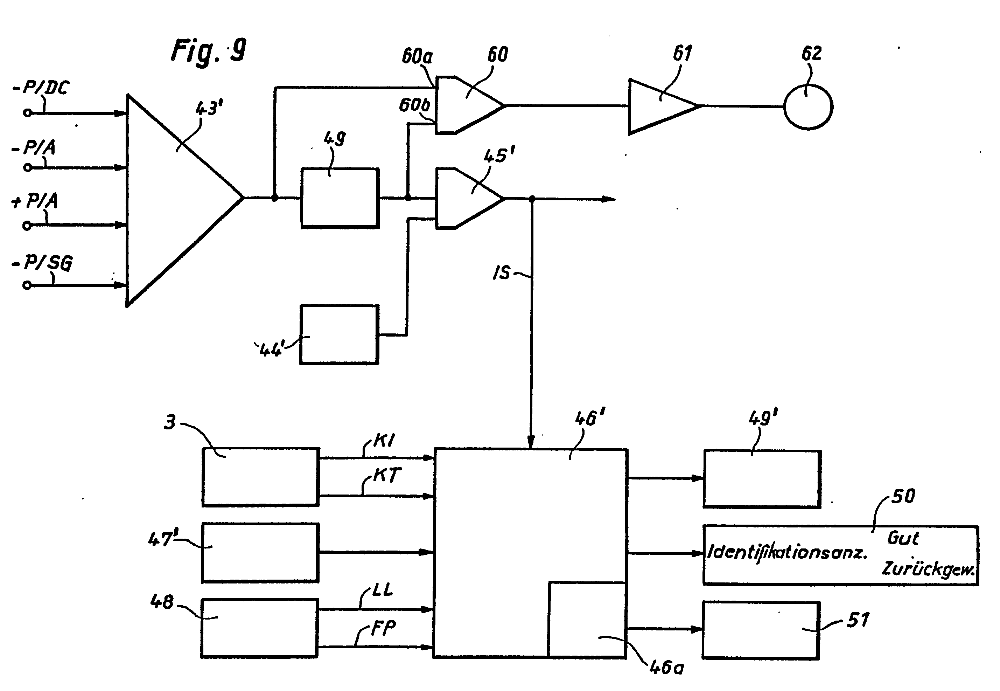

Es ist dann nämlich möglich, wie die Darstellung der Fig. 9 zeigt, die jeweiligen Ausgangssignale der Spitzenwertdetektoren 37, 41, 41' und 47 insgesamt zusammenzufassen, gegebenenfalls mit unterschiedlichen Faktoren $k_i$ noch zu bewerten, ihnen also unterschiedliches Gewicht zu verleihen und dann auszuwerten. Dem in Fig. 9 dargestellten summierenden und seine verschiedenen Eingangssignale gleichzeitig unterschiedlich gewichtenden Verstärker 43' sind daher, von oben nach unten zugeführt, das Spitzenwert zu Gleichspannungssignal -P/DC, das das Verhältnis des negativen Spitzenwert zum Mittelwert der Oberschwingung bildende Signal -P/A, das das Verhältnis des positiven Spitzenwerts zum Mittelwert der Oberschwingung bildende Signal +P/A und das prozentuale Korrelationssignal -P/SG und gegebenenfalls noch weitere Signale, die aber aus Gründen der Klarheit nicht aufgeführt sind.

Der Summierverstärker 43' bildet ein Ausgangssignal, welches als Identifikations-Vorsignal bezeichnet werden kann und welches nach Vergleich mit einem voreingestellten Schwellwertsignal vom Block 44' am Vergleicher 45' das Ausgangs-Identifikationssignal IS ergibt. Zwischen dem Ausgang des Summierverstärkers 43' und dem Eingang des Vergleichers 45' ist noch eine "'Sample and Hold-Schaltung" eingefügt auf deren Aufgabe weiter unten noch eingegangen wird.

Das Identifikationssignal IS wird dann einer logischen Entscheidungsschaltung 46' zugeführt, der an weiteren Eingängen hauptsächlich aus mechanischen Grundbedingungen resultierende Signale zugeführt werden, so daß die logische Entscheidungsschaltung 46' in der Lage ist, an ihrem Ausgang dann ein endgültiges Entscheidungssignal zu erstellen.

So werden der logischen Entscheidungsschaltung 46' vom Kartenhalter 3 (siehe Fig. 1) zwei Signale zugeführt, nämlich ein erstes KI-Signal, welches angibt, daß die die Aufzeichnung des Fingerabdrucks tragende Karte 2 völlig in den Kartenhalter eingeschoben worden ist oder alternativ ein KT-Signal, welches nur einen teilweisen Karteneinschub angibt und daher zum Blockierung bzw. zur Rückweisung führen würde. Ein weiteres Signal gelangt von einer in Fig. 1 nicht dargestellten Fingerführung 47' zur logischen Entscheidungsschaltung 46' welches angibt, daß die Fingerführung ordnungsgemäß niedergedrückt ist und daß sich daher angrenzend an das Prisma 5 ein Finger 4 befindet.

Schließlich ist eine Lichtniveau-Erkennungseinrichtung 48 vorhanden, die ein erstes Signal LL erzeugt, welches angibt, daß das Lichthöhenniveau einwandfrei ist, sowie ein zweites Signal FP, welches angibt, daß sich der Finger in Kontakt mit dem Prisma 5 befindet. Nach Gutbefindung sämtlicher dieser zusätzlichen Eingangssignale erzeugt die logische Entscheidungsschaltung 46 an drei Anzeigeeinrichtungen 49', 50 und 51 Informationen, die sich bei der Anzeigeeinrichtung 49' auf die Position des eingeschobenen Fingers beziehen, nämlich, ob der Finger zurückgezogen werden soll oder erneut auf das Prisma zu legen ist. Bei der Anzeigeeinrichtung 50 handelt es sich um die Ausgabe der Identifikationsanzeige, die eine Gutanzeige oder eine Anzeige erzeugen kann, daß die Identifizierung negativ ausgefallen ist und daher zurückgewiesen wird. Schließlich zeigt die Anzeigeeinrichtung 51 an, ob eine Falschmanipulation an dem System insgesamt festgestellt worden ist. Die logische Entscheidungsschaltung 46 leitet die an den Anzeigeeinrichtungen 49' und 51 sich ergebenden Zustände hauptsächlich aus den Eingangssignalen der Elemente 3, 47' und 48 ab.

4.) Weitere Ausgestaltungen der Erfindung

Der logischen Entscheidungsschaltung ist noch eine, den synchronisierten Zeitablauf der einzelnen Geschehnisse des Identifikationssystems synchronisierende Zeitschaltung 46a zugeordnet, deren Ausgangsimpulse auch dazu verwendet werden können, daß der weiter vorn schon erwähnten Sample and Hold-Schaltung 49 zugeordnete System zeitgerecht zu triggern. Dieses System umfaßt einen Vergleicher 60, dessen beide Eingänge 60a, 60b jeweils mit Eingang bzw. Ausgang der Sample and Hold-Schaltung 49 verbunden sind, eine dem Vengleicher 60 nachgeschaltete Treiberschaltung 61 sowie einen Schrittmotor 62. Die Aufgabe dieses Systems besteht darin, durch mechanische Nachregelung die geometrisch optimale Position des aus dem auf dem Prisma 5 aufliegenden Fingers gewonnenen Fingerabdruck-Abbildes mit Bezug auf die Aufzeichnung 1 einzustellen. Zwar ist, wie erwähnt, eine Fingerführung 47 für den Finger 4 vorgesehen, es ist aber nicht auszuschließen, daß der Finger unter Umständen noch etwas schräg oder verdreht eingeführt wird und durch den Suchvorgang mit Hilfe des Bewegungssuchers oder Scanners 9 wird zwar eine Deckungsgleichheit angestrebt, eine, wenn auch nur geringfügige Schräglage des Fingerabdruck-Abbildes zur Aufzeichnung oder umgekehrt, kann hierdurch aber nicht völlig ausgeglichen werden.

Daher ist mit dem Kartenhalter 3 in Fig. 1 mechanisch die Ausgangswelle 62a des Schrittmotors 62 so verbunden, daß eine graduelle Nachführung durch diesen Schrittmotor, üblicherweise also eine geringe Drehbewegung der Aufzeichnung 1 zur Optimierung der geometrischen Relativposition von Abbild und Aufzeichnung möglich ist. Es versteht sich aber, daß durch eine solche Nachführschaltung auch sonstige beliebige und eine Optimierung der gegenseitigen Position von Abbild und Aufzeichnung ermöglichende Bewegungen, gegebenenfalls unter Verwendung weiterer Schrittmotoren, möglich sind. Die Funktion dieser Zusatzschaltung ist dann wie folgt:

Bei Beginn der Messung ergibt sich am Ausgang des Summierverstärkers 43′ ein zusammengefaßter Vor-Identifikationsimpuls bestimmter Amplitude, der nach Vergleich mit einem vorgegeberen Sicherheits-Schwellwert am Vengleicher 45′ entweder zur Zuführung eines gültigen Identifikationsimpulses zur logischen Entscheidungsschaltung führt oder nicht. Gleichzeitig mit dem Auftauchen dieses ersten Vor-identifikationsimpulses am Ausgang des Summierverstärkers 43′ und/oder mit dem Auflegen des Fingers 4 auf das Prisma 5 mit Hilfe der Fingerführung 47′ wird der Schrittmotormechanismus in Gang gesetzt und es erfolgt zunächst eine ganz geringe Drehbewegung des Schrittmotors 62 in einer beliebigen Richtung. Hieraus resultiert, wie einzusehen, am Ausgang des Summierverstärkers 43′ ein Identifikationsimpuls unterschiedlicher Größe, entweder also geringer als der vorhergehende Identifikationsimpuls, wenn nämlich durch diese Verdrehung eine geringere Annäherung an die ideale Deckungsgleichheit erzielt worden ist, oder die Amplitude dieses Vor-Identifikationsimpulses wird größer, da sich die geometrischen Positionen in Richtung auf eine Optimierung bewegt haben. In diesem Fall veranlaßt der Vergleicher 60, an dessen Eingang 60b der aus dem vorherigen Meßvorgang stammende Impuls anliegt und dessen Eingang 60a der jeweils neue Identifikations-Vorimpuls zugeführt ist, eine weitere Verstellbewegung des Kartenhalters 3 durch den Schrittmotor 62 in der ursprünglich eingeschlagenen Richtung zur Erzielung einer weiteren Optimierung; andernfalls, also wenn das Ergebnis sich verschlechtert hat, erfolgt eine Drehbewegung in der entgegengesetzten Richtung. Man erkennt, daß sich so, bei entsprechend schnellem Ablauf dieser Nachführregelung, auch sehr schnell eine optimale Position zwischen Abbild und Aufzeichnung herstellen läßt, so daß es auch bei ungünstiger, unüberlegter oder nicht sorgfältig genug durchgeführter Kontaktierung zwischen Finger 4 und Prisma 5 noch ein Identifikationsimpuls am Ausgang des Vergleichers 45′ von so ausreichender Größe realisieren läßt, daß das Sicherheitsniveau der Schaltung 44′ als Schwellwert überwunden wird. Es versteht sich, daß dieses Sicherheitsniveau der Schaltung 44′ so ausreichend hoch angesetzt ist, daß sämtliche, aus miteinander nicht identischen Fingerabdrucksvergleichen eventuell doch herrührenden Impulsspitzen sicher unter dem Schwellwert liegen. In diesem Fall kann auch die mechanische Nachführregelung für den Kartenhalter 3 nicht zu einer merklichen Verbesserung des Ergebnisses betragen, eben weil die miteinander zu vergleichenden Fingerabdrücke nicht identisch sind. Bei Identität ergibt sich aber so eine die Übereinstimmung und Identität unterstreichende Optimierung.

Eine weitere vorteilhafte Ausgestaltung vorliegender Erfindung besteht darin, daß unterschiedlichen Beleuchtungsverhältnissen, die sich etwa durch unterschiedliche Schwärzung im Aufzeichnungsbereich der Karte 2, durch unterschiedliche Färbung des aufgelegten Fingers 4 o.dgl. ergeben, dadurch Rechnung getragen wird, daß eine Regelschaltung vorgesehen ist, die die Lampenhelligkeit 6 über eine Verbindungsleitung 63 zwischen der elektronischen Auswerteschaltung 13 und der Lampe 6 nachregelt. Ergibt sich beispielsweise am Ausgang des Photodetektors 12 daher eine insgesamt zu schwache Signalhöhe, dann ist dies hauptsächlich auf eine zu starke Schwächung des die Auswertung und den Vergleich durchführenden Lichtbündels zurückzuführen und die Lampe 6 wird entsprechend in ihrer Helligkeit nachgeregelt. Außerdem kann am Ausgang des Verstärkers 22 noch eine vergleichende Schwellwertschaltung vorgesehen sein, die bei einem zu geringen elektrischen Niveau des auszuwertenden Signalverlaufs die Verstärkung entsprechend nachregelt. Die Nachregelung der Lampenhelligkeit und/oder die Nachregelug des Verstärkungsgrades etwa des Verstärkers 22 können aber Einfluß auf das Signalkriterium -P/DC haben, so daß es empfehlenswert ist, diesen jeweiligen Verstärkungsgrad und/oder die Nachregelung der Lampenhelligkeit in die Verhältnisbildung für das Teilkriterium -P/DC einzubeziehen.

Eine weitere Ausgestaltung der Erfindung beruht auf folgender Überlegung. Durch die durch die Erfindung gewährleistete Identifikationsprüfung wird zwar sichergestellt, daß der Fingerabdruck des Karteninhabers übereinstimmt mit dem aufgezeichneten Fingerabdruck der Karte 2 und daher dieser Inhaber der allein berechtigte Träger der Karte ist; nicht sichergestellt werden kann aber, daß man sich mit dieser Karte beispielsweise Zugang zu Räumen verschafft, die zu einem Betrieb gehören, der zwar ebenfalls ein solches Fingerabdruck-Vergleichssystem benutzt, zu dem man aber selbst nicht gehört, daß Kreditkarten gefälscht oder in anderem Zusammenhang verwendet werden u. dgl. Man benötigt für solche Fälle dann zusätzliche Unterscheidungskriterien auf der Karte, beispielsweise Magnetcodierung, Infrarotcodierung o. dgl. Die Erfindung bietet aber einen besonders eleganten Ausweg aus diesem Problem, indem eine zusätzliche optische Codierung vorgenommen wird, die völlig fälschungssicher ist.

Es ist ja bei der ersten Herstellung der Aufzeichnung des Fingerabdrucks auf jeden Fall erforderlich, daß der spätere Kartenbenutzer anwesend ist und die Aufnahme beispielsweise dadurch durchgeführt wird, daß anstelle der Karte 2 mit Aufzeichnung ein photographischer Apparat angeordnet wird, wobei in etwa eine gleiche Anordnung verwendet werden kann, wie in Fig. 1 gezeigt, mit Ausnahme der durch den Scanner 9 verursachten Suchbewegung. Bringt man während dieser Anfertigung der Aufzeichnung in den Strahlengang, etwa bei 54 oder 54' eine Einrichtung ein, die im allgemeinen Sinn wie ein optischer Codegeber wirkt, die also beispielsweise die Strahlen vergrößert, unterschiedlich bricht, verzerrt o. dgl., dann ist auch die Aufzeichnung des Fingerabdrucks von Anfang an entsprechend verzerrt. Es versteht sich dann, daß der optische Codegeber 54 in der absolut gleichen Form bei sämtlichen Geräten der einen Firma oder des einen Kunden, Kreditkartengebers o. dgl. verwendet wird, die nachher den Vergleich zwischen Abbild und Aufzeichnung durchführen.

Da die Möglichkeiten der optischen Codierung praktisch nahezu unendlich sind, ist es auch möglich, jede mit dem erfindungsgemäßen System arbeitende Firma, jeden Verein, jeden Kreditkartengeber, jede Bank u.dgl. mit Geräten auszustatten, die sämtlich eine identische optische Codierung aufweisen und daher den Kreis der Beteiligten durch dieses fälschungssichere "Kennwort" einer optischen Verzerrung einwandfrei gegen andere Kartenbesitzer abzugrenzen, die sich des gleichen Fingerabdruck-Identifikationssystems im allgemeinen Sinn bedienen.

Als optische Codegeber 54 kommen beispielsweise zusätzliche Linsen im Strahlengang beliebiger, aber vorbestimmter Brechungsfähigkeit in Frage, vorzugsweise aber die Einbringung einer teleskopartigen Einrichtung mit sogenannten zylindrischen Linsen, die eine Vielfalt von Modifikationen und Codierungen erlauben. Da aber die identische optische Codierung auch schon bei der Anfertigung der Aufzeichnung des Fingerabdrucks selbst angewendet worden ist, ist diese zusätzliche Codierung für den eigentlichen Identifizierungsvorgang ohne Belang, denn das jeweils mit der verzerrten Aufzeichnung verglichene Fingerabdruck-Abbild ist in genau der gleichen Weise verzerrt.

Es ist im übrigen empfehlenswert, das in Fig. 1 gezeigte optische System bzw. dessen Strahlengang so zu justieren, daß die Wendel der Lampe 6 genau in der optischen Achse liegt, d.h. daß diese Wendel bei den verschiedenen Dreh-Suchbewegungen durch die Prismenkeile 16a, 16b des Bewegungssuchers 9 keine optische Positionsverlagerung erfärt, da sich die prismatischen Gegebenheiten, also deren Brechungsmöglichkeiten genau in der optischen und gleichzeitig Drehachse geometrisch nicht verändern.

Eine weitere, besonders vorteilhafte Ausgestaltung vorliegender Erfindung betrifft eine Verbesserung der Identifizierungsqualität des Systems. Zweifelsohne läßt sich der Identifizierungsfehler des erfindungsgemäßen Systems bei tatsächlicher Übereinstimmung der Aufzeichnung mit dem durch Auflegen des Fingers auf das Prisma gewonnenen Fingerabdruckabbild dadurch reduzieren, daß man den gesamten Prüfvorgang mehrfach wiederholt. Durch die im folgenden geschilderte Maßnahme erübrigt sich ein mehrfaches, gegebenenfalls lästiges Wiederholen, da es durch diese vorteilhafte Ausgestaltung möglich ist, die Identifizierungsgenauigkeit praktisch so weit zu steigern, daß sich schon beim ersten Versuch eine an Sicherheit grenzende Wahrscheinlichkeit für die Identität oder Nichtidentität zwischen Aufzeichnung und Abbild engibt.

Die Ausgestaltung beruht darauf, daß man zur gleichen Zeit parallel das einmal durch Auflegen auf das Prisma gewonnene Abbild des Fingerabdrucks vergleicht mit einer größeren Anzahl von Aufzeichnungen, die sich beispielsweise auf der Karte befinden können; man führt also eine Art Mehrfachabbild-Aufzeichnungsvergleich durch.

Es ist weiter vorn schon mit Bezug auf die Darstellung der Fig. 2b erwähnt worden, daß durch die Suchbewegung des Scanners 9 in der X-Y-Ebene die Abbildverschiebung zur Erzielung einer Deckungsgleichheit mit der Aufzeichnung, die sich ebenfalls in dieser X-Y-Ebene befindet, vorgenommen wird. Diese Suchbewegung verläuft in der Regel spiralig, kann aber auch, speziell angewendet auf diese vorliegende Ausgestaltung, hierzu unterschiedlich, etwa lediglich einen peripheren Rand abtastend, durchgeführt werden. In Fig. 2b sind gestrichelt eine größere Anzahl von Aufzeichnungen angegeben und mit 64 bezeichnet, die dem Mehrfach-Abbildvergleich dienen. Mit anderen Worten, während eines Durchlaufzyklus der Suchbewegung des Abbilds in der Aufzeichnungsebene trifft dieses Abbild auf beispielsweise 6 oder 8 Aufzeichnungen, wodurch sich die Wahrscheinlichkeit der sofort feststellbaren Identität durch Koinzidenz zwischen dem Abbild und mindestens einer der Aufzeichnungen außerordentlich stark erhöht, nämlich im Sinne einer exponentiellen Steigerung.

Diese Mehrfachabtastung muß nicht notwendigerweise auf den Vergleich nur eines Fingerabdruck-Abbildes auf dann 6 oder 8 oder noch mehr identische Aufzeichnungen beschränkt sein, sondern es ist auch möglich, im einen Extremfall so viele unterschiedliche Aufzeichnungen, vorzusehen, wie beispielsweise zu vergleichende Firger des Kartenträgers ausgewählt sind, also für beispielsweise 6 oder für 10 Finger jeweils 6 oder 10 entsprechende Aufzeichnungen, so daß der Kartenträger nacheinander verschiedene unterschiediche Finger zum Vergleich auf das Prisma legt. Hierdurch erhöht sich die Identifizierungs-Sicherheit selbstverständlich außerordentlich, denn bei einer Person, von welcher zwei Fingerabdrücke gleichzeitig identifiziert worden sind, ist die Möglichkeit eines Irrtums oder Fehlers praktisch ausgeschlossen. Gleichzeitig kann man sich dieser ersten Möglichkeit des Vielfachvergleichs dann bedienen, wenn aufgrund einer Verletzung oder Verschmutzung einer der Finger, dessen aufzeichnung sich auf der Karte befindet zum Vergleich nicht herangezogen werden kann, aber noch weitere Fingerabdrucks-Aufzeichnungen auf der Karte sind, so daß die Identitätsprüfungen mit anderen Fingerabdrücken durchführbar sind.

Im anderen Extremfall kann der Aufzeichnungsträger über die schon erwänten 6 oder 8 identischen Aufzeichnungen bezüglich eines Fingerabdrucks verfügen und den Vergleich praktisch parallel und zur gleichen Zeit bei einem zyklischen (spiraligen) Durchlauf durchführen.

Die Auswerteelektronik braucht nicht wesentlich unterschiedlich zu sein, denn trotz der dann in schnellerer Folge eintreffenden Identifikationsimpulse (bei vorhandener Identität) ergeben sich diese dennoch in einem zeitlichen Abstand, der sich aus der Abtastgeschwindigkeit ergibt. Gegebenenfalls kann die Geschwindigkeit hierbei verringert weden, um der Elektronik ausreichend Zeit zu lassen, oder die Elektronik kann in parallel arbeitende, im Zeitmultiplex angesteuerte Zweige aufgespalten werden.

Ohnehin ist es empfehlenswert, die wesentlichsten Elektronikbereiche doppelt vorzusehen, um eine ausreichend hohe Zuverlässigkeit sicherzustellen. Es versteht sich, daß in diesem Fall der Mehrfachabtastung eine entsprechende Umstellung der Zeitdauer-Überwachung vorzunehmen ist, da die Peaks oder Identifikationsimpulse in kürzeren Abständen eintreffen.

Es ist weiter vorn schon erwähnt worden, daß es im Grunde belanglos ist, ob positive oder negative Fingerabdruck-Abbilder oder -Aufzeichnungen miteinander verglichen werden, d.h. mit anderen Worten, ob bei der Aufzeichnung auf eine Schwärzung der Fingerabdrucktäler oder der Fingerabdruckberge abgestellt wird bzw. ob bei der Gewinnung des Abbildes aus dem Fingerabdruck die Totalreflexion auf die Fingerabdrucktäler, wie erwänt, bezogen ist.

Tatsächlich ist es ein weiteres bevorzugt es Ausführungsbeispiel vorliegender Erfindung, nicht nur Fingerabdruck-Aufzeichnungen mit zu diesem Zeitpunkt durch den physikalischen Kontakt des Fingers mit dem Prisma gewonnenen Abbildem zu vergleichen, sondern das erfindungsgemäße System eignet sich gleichermaßen zum Vergleich von Fingerabdruck-Aufzeichnungen mit anderen Aufzeichnungen, gegebenenfalls in einem schnellen, rechnergesteuertem Ablauf, so daß es auch möglich ist, beispielsweise einen auf beliebige art und Weise gewonnenen Fingerabdruck mit einer Vielzahl gesammelter Fingerabdruckdaten schnell und mit hoher Sicherheit zu vergleichen. Gerade diese Möglichkeit ist von erheblicher Bedeutung auf dem Gebiet der Kriminalistik, denn sehr häufig können bei Verbrechen Fingerabdrücke der Täter gewonnen werden, die dann schnell und sicher mit Hilfe des erfindungsgemäßen Systems mit schon vorabgespeicherten Fingerabdrücken verglichen werden. Es versteht sich, daß in diesem Fall zur Beschleunigung eines solchen Vergleichs eine Transporteinrichtung im Bereich der Aufzeichnungsebene sinnvollerweise vorgesehen ist, die, etwa im getakteten Ablauf, gespeicherte Fingerabdruckdaten in schneller Folge der Überprüfung zuführt.

Die Erfindung ermöglicht daher neben dem unmittelbar vorzunehmenden Vergleich mit einem physikalisch vorhandenen Finger auch den Vergleich von positiven oder negativen Fingerabdrücken miteinander, also praktisch den Vergleich von zwei "Karten", die Fingerabdruck-Aufzeichnungen aufweisen.

5.) Weitere bevorzugte Ausgestaltungen

Die im folgenden beschriebenen Maßnahmen und Möglichkeiten beziehen sich im wesentlichen auf Ausgestaltungen und Weiterentwicklungen des weiter vorn beschriebenen Grundsystems.

Eine bevorzugte Ausgestaltung der Erfindung besteht darin, daß das den Vergleich durchführende Hauptgerät gleichzeitig beziehungsweise praktisch gleichzeitig auch noch überprüft, ob der Träger einer Karte, eines Ausweises, einer Kreditkarte oder eines sonstigen Identifikationsdokuments berechtigt ist, diese Karte, wie sie im folgenden lediglich noch genannt wird, auch befugt in Besitz hat. Das weiter vorn beschriebene System ist im wesentlichen so aufgebaut, daß es primär überprüft, ob, angewendet auf die Überprüfung von Identifikationsdokumenten, der

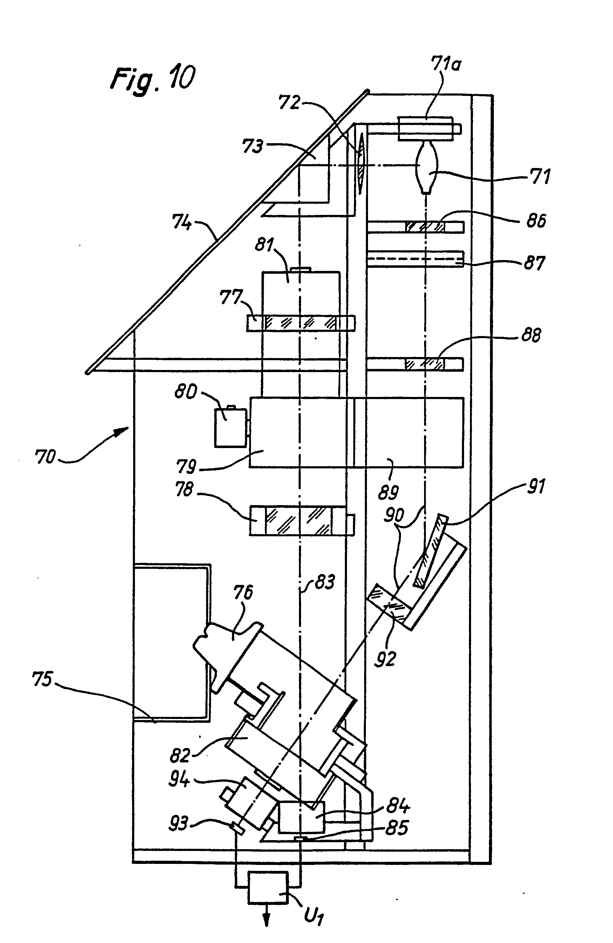

Fingerabdruck des Trägers identisch ist mit dem auf der Karte gespeicherten Fingerabdruck. Wird aber beispielsweise die Karte gleichzeitig oder lediglich als Ausweis oder Dokument betrachtet, um einen Zugang etwa zu bestimmten Räumlichkeiten zu ermöglichen, dann ist nicht nur Gegenstand der Überprüfung, ob die Karte dem jeweiligen Träger gehört (Fingerabdruckvergleich), sondern auch, daß diese Karte eine bestimmte Berechtigung zu beliebigem Tun ermöglicht, also beispielsweise das Betreten eines Gebäudes. Zu diesem Zweck muß die Karte selbst noch einer Überprüfung und einem Vergleich unterworfen werden, ob sich an ihr bestimmte Zeichen, Markierungen oder Kodierungen befinden, die den Ausweis- oder Kartenträger als Berechtigten identifizieren. In diesem Fall kann durch Einführen der Karte in einen entsprechenden Aufnahmeschlitz eines Überprüfungsgeräts und durch Auflegen des Fingers des Trägers auf einen bestimmten Bereich gleichzeitig von dem Gerät festgestellt werden, 1.) ob der Kartenträger über einen identischen Fingerabdruck verfügt, wie er auf der Karte festgehalten ist, und ob 2.) die Karte solche Zeichen oder Markierungen aufweist, daß der Träger als berechtigter ausgewiesen ist. Im positiven Überprüfungsfall kann beispielsweise eine automatische Türöffnung bewirkt werden, so daß sich ein Zugang zu einem sonst verschlossenem Gebäude ergibt. Eine Ausführungsform eines Gerätes, welches diese Möglichkeiten eröffnet, ist in einer Ausgestaltung der Erfindung in Figur 10 dargestellt und mit 70 bezeichnet. Es versteht sich hierbei, daß der Aufbau und die äußere Gestaltung eines solchen kombinierten Überprüfungsgerätes auch unterschiedlich sein kann; es kommt daher im wesentlichen an lediglich auf das Vorhandensein und die strukturelle Zuordnung der einzelnen vorhandenen Baukomponenten. Bei dem in Figur 10 dargestellten Ausführungsbeispiel umfaßt ein erster, weiter vorn schon beschriebener Teilaufbau für die Durchführung eines (Fingerabdruck)-Mustervergleichs eine Lampe 71 mit Lampenhalterung 71a und eine Kondensorlinse 72, die den von der Lampe 71 ausgehenden Strahlungsteil auf ein Prisma 73 lenkt, welches angrenzend an einen pultartigen vorderen Bereich 74 des Gerätes angeordnet ist und bei diesem Ausführungsbeispiel der unmittelbaren Auflage des jeweiligen Fingers des Trägers dient, dessen Fingerabdruckmuster mit dem Muster zu vergleichen ist, welches sich auf einer Karte befindet, die der Träger vorher in eine Aufnahmeöffnung eingeschoben hat, die sich im unteren Geräteteil befindet und mit 75 bezeichne ist. Von dieser Geräteöffnung aus ist der Einlaßschlitz eine Kartenhalters 76 zugänglich, der der Aufnahme und richtigen Positionierung der eingeschobenen Karte dient. Zwischen dem Kartenhalter 76 und dem Prisma 73, welches den Strahlengang der Lampe 71 umlenkt, befindet sich, abgesehen von zwei Linsen 77 und 78, der schon in der Hauptanmeldung erwähnte Bewegungssucher oder Scanner 79, wie er im folgenden lediglich noch bezeichnet werden soll. Bei dem bevorzugten Ausführungsbeispiel vorliegender Erfindung umfaßt der Scanner 79 zwei Antriebsmotoren, etwa einen ersten Schrittmotor, der mit 80 bezeichnet ist, und einen normalen schnellen Antriebsmotor 81, auf deren Aufgabe und Verbindung mit den Scannerelementen weiter unten noch genau eingegangen wird.

Nach Durchstrahlung des Fingerabdruck-Musterbereichs auf der Karte fällt der vom Prisma 73 ausgehende und vom Scanner 79 abgelenkte Strahlengang, von dem lediglich der Mittenstrahl 83 dargestelltist, auf eine weitere Detektorlinse 84 und von dort auf den eigentlichen Detektor 85, der die auffallende Lichtmenge in ein elektrisches, von Impulsen überlagertes, wechselspannungsähnliches Ausgangssignal umwandelt, wie dies in Figur 12 a nochmals angedeutet ist. Dieses Teilsystem ermittelt und überprüft, ob die Karte dem Träger gehört; ob die Karte zu dem allgemeinen Überprüfungssystem gehört, stellt eine ergänzte Ausführungsform im gleichen Gerät fest, die bei der Darstellung der Figur 10 einen in etwa parallelen Strahlengang aufweist und als besonderen Vorteil die schon vorhandenen Antriebsmittel für den Scanner oder Bewegungssucher mitverwenden kann. In diesem zweiten Teilbereich zur Identifizierung einer Markierung, Kodierung oder eines sonstigen Zeichens aur der Karte und zur Überprüfung der Übereinstimmung dieses Zeichens mit einem im Gerät körperlich gespeicherten Zeichen, welches im folgenden als sogenanntes Meistersymbol bezeichnet werden soll, ist zunächst eine Kondensorlinse 86 vorgesehen, die den hier rechtwinklig von der Lampe 71 ausgehenden Strahlengang aufnimmt und einem Transparent 87 zuführt. Dieses Transparent enthält das Meistersymbol, dessen korrektes Vorhandensein auf der Karte ebenfalls zu überprüfen ist. Der Strahlengang läuft dann weiter zu einer Linse 88 und zu einem zweiten Bewegungssucher 89, der im Aufbau mit dem ersten Bewegungssucher 79 identisch sein kann und der auch dessen Antriebsmotoren 80 und 81 mitverwenden kann, wenn man davon absieht, den Strahlengang beispielsweise optisch abzulenken und durch den ersten und dann einzigen Scanner 79 überhaupt laufen zu lassen, was als Alternative ebenfalls innerhalb des erfindungsgemäßen Rahmens liegt. Vom zweiten Scanner 89, dessen Aufbau weiter unten ebenfalls noch beschrieben wird, gelangt der Strahl, der wieder als Mittenstrahl 90 dargestellt ist, aufeinen Ablenkspiegel 91 und von diesem durch eine weitere Linse 92 zum gleichen Kartenhalter 76, wo der Strahl 90 für das Meistersymbol die eingeführte Karte ebenfalls durchsetzt, und zwar an der Stelle, an welcher sich im Kartenbereich das dortige Meistersymbol befindet - für das genaue Aufsuchen ist der Scanner 89 vorgesehen - so daß sich bei Übereinstimmung an einem zweiten Ausgangsdetektor 93 ein entsprechendes Ausgangssignal auch für das Meistersymbol ergibt. Dem Detektor 93 ist noch eine Detektorlinse 94 vorgeschaltet.

Der zeitliche Ablauf ist so, daß zunächst für einen ersten Zeitraum, der beispielsweise eine halbe Sekunde betragen kann, die Zugehörigkeit der Karte zum System überprüft wird, was in einem speziellen Anwendungsfall beispielsweise dem Kartenträger den Zugang zu einem Gebäude öffnet. Sobald die Karte auf das Vorhandensein des Meistersymbols ordnungsgemäß überprüft und für richtig befunden worden ist - bei dieser Überprüfung erfolgt keine zusätzliche Dreh-Suchbewegung auch des Kartenhalters 76 -, setzt dann die Überprüfung der Fingerabdrucksmuster auf Übereinstimmung ein.

Die zusätzliche Dreh-Suchbewegung des Kartenhalters mit Hilfe der Antriebsmittel 82 ist deshalb nicht erforderlich, weil der Kartenhalter für eine einwandfreie Positionierung und Einlegen der Karte mit dem Meistersymbol sorgt und das Meistersymbol als Transparent 87 ohnehin einwandfrei justiert in dem Gerät vorhanden ist. Daher ergibt sich hier aber auch ein weiterer Freiheitsgrad für die Vielzahl der Ausbildungs- und Verzerrungsmöglichkeiten für das Meistersymbol, denn die Verdrehung jeweils um Winkelgrade stellt einen Freiheitsgrad dar, der als multiplikativer Faktor in die erhebliche Anzahl von Möglichkeiten eingeht, das Meistersymbol unterschiedlich zu gestalten und entsprechen zu diskriminieren. Durch die gemeinsame Verwendung der motorischen Antriebe für die Scanner, durch einen gemeinsammen Kartenhalter, durch ein gemeinsammes optisches System, welches mindestens die Lampe umfaßt und durch eine gemeinsame Auswerteelektronik ergeben sich erhebliche Kostenvorteile sowie Vorteile in der Überprüfungsgeschwindigkeit, denn es können zwei verschiedene Kriterien (Karte gehört zum Träger - Karte gehört zum System ) nahezu gleichzeitig überprüft und entschieden werden.

Eine weitere vorteilhafte Ausgestaltung vorliegender Erfindung besteht darin, daß der Bewegungssucher oder Scanner und die durch ihn gegebenen Auswertemöglichkeiten des Ausgangssignals dadurch verbessert sind, daß Mittel vorgesehen sind, die eine Information über den Ort in der X-Y-Ebene ermöglichen, an welchem die Abtastung soeben stattfindet. Hierzu ist zunächst allgemein folgendes zu bemerken: Die Klarheit und Eindeutigkeit der "Gut-Aussage" bezüglich des hier negativ auftretenden Identifikationsimpulses hängt davon ab, ob die Abtastung in einem zentralen Bereich oder in einem Randbereich der Abtastebene erfolgt. Tatsächlich ist die Größe, also die Amplitude und das spitze, scharfe Auftreten des negativen Identifikationsimpulses eine Funktion der Abtastgeschwindigkeit durch den Scanner. Diese Abtastgeschwindigkeit ändert sich aber und ist eine Funktion des Radius, weil, wie in der Hauptanmeldung beschrieben, der aus zwei relativ zueinander verdrehbaren Keilprismen bestehenden Scanner mit konstanter Winkelgeschwindigkeit arbeitet, was aber bei sich verändernden Radien eine unterschiedliche Abtastgeschwindigkeit hervorruft. Durch die relative Verdrehung der Keilprismen erfolgt die Abtastungin der Abtastebene (X-Y-Ebene) in Form einer sich auf den Mittelpunkt (zentralen Bereich) bewegenden Spirale. Die Abtastung im Randbereich ergibt negative Identifikationsimpulse, wie in Figur 12a anschaulich im Verlauf des Detektorausgangssignals insgesamt dargestellt und mit 14 bezeichnet sind; erfolgt die Abtastung jedoch im zentralen Bereich bzw. nähert sich die Abtastung diesem zentralen Bereich, dann ergeben sich verzerrte Identifikationsimpulse 14', die als solche praktisch nichtmehr zu identifizieren sind, da sie nach Aufbau und Frequenz in der Größenordnung der allgemeinen sinusförmigen Grundschwingung geraten (siehe Figur 12b).

Es ist daher vorteilhaft, jeweils genau zu wissen, an welchem Punkt sich die jeweilige Abtastung durch den Scanner abspielt und wo dieser sich befindet, um entsprechende, die Auswertung betreffende Maßnahmen treffen zu können.

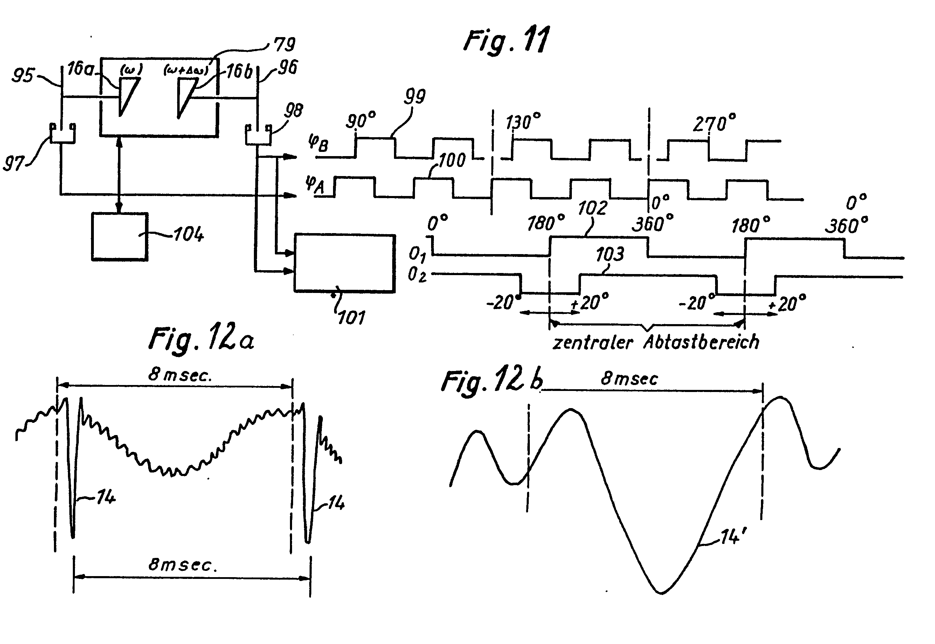

Zu diesemn Zweck laufen synchron mit den Keilprismen 16a, 16b des Scanners Scheiben 95, 96 oder sonstige geeignete Mittel um, die es jeweiligen Abtasteinrichtungen 97 und 98 ermöglichen, die Relativposition der Keilprismen 16a und 16b zueinander festzustellen. Die Abtastung im zentralen Bereich wird bei aus solchen Keilprismen aufgebauten Scannern jedenfalls dann erfolgen, wenn die Scanner zueinander sich in einer eine Rechteckform ergänzenden komplementären Position befinden, denn in diesem Fall wird der Strahl praktisch nicht abgelenkt und fällt auf den Mittenbereich der Abtastebene. Eine maximale Ablenkung ergibt sich bei einer Gegen-Keilprismaposition, wie sie in Figur 11 schematisch angedeutet ist.

Entsprechend einem bevorzugten Ausführungsbeispiel sind die mitlaufenden Scheiben 95, 96 zur Hälfte transparent und zur Hälfte opak, so daß sich beim Umlaufunterschiedliche Durchstrahlungsverhältnisse ergeben, die von optischen Sensoren 97, 98 erfaßt werden können. Diese optischen Sensoren 97, 98 können beispielsweise bestehen aus je einem Fototransistor und einer lichtemittierenden Diode, wobei sich als Ausgänge der beiden optischen Sensoren 97, 98 die in Figur 11 dargestellten und mit 99 und 100 bezeichneten Rechteckimpulse ergeben. Die Phasenverschiebung dieser beiden Rechteckimpulsfolgen 99 und 100, die sich aufgrund der Verdrehungen der Keilprismen und der mit ihnen umlaufenden Markierungen 95, 96 ergeben, entsprechen der jeweiligen dynamischen Relativposition der Keilprismen 16a, 16b während des Abtastvorgangs, so daß ein Phasendetektor 101 von üblicher Ausgestaltung in der Lage ist, festzustellen, zu welchen Zeitpunkten sich die beiden Rechteckimpulsfolgen 99, 100 und damit auch die Keilprismen in Phase oder in einer fortlaufenden Phasenverschiebung von schließlich auch 18 befinden. Ein entsprechendes erstes Ausgangssignal des die jeweilige Phasenverschiebung feststellenden Detektors 101 ist mit 102 bezeichnet und gibt an, ob sich die relative Phasenverschiebung zwischen den Keilprismen 16a und 16b zwischen 0 und 180 Grad bzw. zwischen 180 und 360 Grad befindet. Jeweils an den Stellen, an denen die Keilprism en um 180 Grad zueinander verdreht sind, d.h. in welcher sie sich in der komplementär ergänzenden Position befinden, ergibt sich die Zentralbereichsabtastung und in einem Bereich von $\pm$ 20 Grad um die 180° Phasenverschiebung herum wie dies der Kurvenverlauf 103 in Figur 11 deutlich macht, liegt dann die Mittenbereichabtastung vor, die entweder ganz zu verbieten ist oder bei welcher sonstige Maßnahmen zu treffen sind, um eine einwandfreie Identifizierung sicherzustellen.

Diese Erfassung der relativen Phasenverhältnisse bei der Drehbewegung der Scanner-Keilprismen 16a und 16b ermöglicht die Synchronisation der Bewertungssysteme im elektronischen Bereich auf die jeweilige Phasenverschiebungim Scanner. Bei dem Phasendetektor 101, der die beiden Ausgangsrechteckimpulsfolgen 99 und 100 der optischen Sensoren zugeführt erhält, kann es sich um einen Operationsverstärker-Vergleicher mit zwei Eingängen (negativer und positiver Eingang) handeln, der so gestaltet ist, daß sich am Ausgang dieses Operationsverstärkers beispielsweise das Signal log 0 ergibt vom Punkt der Phasenverschiebung 0 bis zum Erreichen der völligen Gegenphasigkeit (Phasenverschiebung 180 Grad); ab diesem Moment ergibt sich das Ausgangssignal log 1 am Operationsverstärker bis wieder die Phasenverschiebung 360 Grad bzw 0° erreicht ist. Aus diesem Kurvenverlauf 102 ergibt sich dann die Kurve 103, beispielsweise durch eine Zeitschaltung, die durch das Auftreten der sich jeweils bei 180 Grad ergebenen positiven Flanken der Impulsfolge 102 entsprechend synchronisiert wird.

Eine erste Möglichkeit zur Ausnutzung des durch ein entsprechendes log 0-Signal kenntlich gemachten zentralen Abtastbereichs im Kurvenverlauf 103 besteht dann darin, daß man - zur Vermeidung dieser zentralen langsamen Abtastung - innerhalb dieses Zeitraums von $\pm$ 20 Grad um die 180° Phasenverschiebung herum ein drittes, beispielsweise solenoidgesteuertes Keilprisma im Scannerbereich (in der Zeichnung nicht dargestellt) vorsieht, welches während dieses Zeitraums vom Solenoid in den Strahlengang gebracht wird, wodurch sich sofort eine Ablenkung in den Randbereich ergibt mit der entsprechenden Folge einer klaren und präzisen Identifikationsmöglichkeit für den negativen Identifikationsimpuls. Dieser tritt dann so auf, wie in Figur 12a dargestellt, auch wenn die beiden Abtastprismen 16a und 16b des Scanners gegeneinander örtlich um 180 Grad in ihrer Position verschoben sind, wie leicht einzusehen. Durch diese Synchronisation des dynamischen Bewegungsablaufs des Scanners auf den Auswertevorgang ist eine fortlaufende Auswertung möglich ohne Unterbrechung, auch dann, wenn sich während des Abtastvorgangs wiederholt eine Überstreichung auch des zentralen Bereichs in der Abtastebene ergibt.

Ein Ausführungsbeispiel im Scannerbereich kann so ausgelegt sein, daß sich beispielsweise eine Umdrehungsgeschwindigkeit von 125 Umdrehungen pro Sekunde des Keilprisma 16a ergibt, wobei das Keilprisma 16b dann so angetrieben ist, daß dieses sich etwa um 1/2 % schneller dreht. Man erkennt, daß sich ein jeweiliger Gleichstand der Keilprismen 16a, 16b dann immer nach 200 Umdrehungen insgesamt wieder ergibt. Das langsamer drehende Keilprisma 16a gibt dabei die Zeitbasis vor; eine automatische Geschwindigkeit - Reglungseinrichtung 104 ist vorgesehen und dem Scanner 79 zugeordnet.

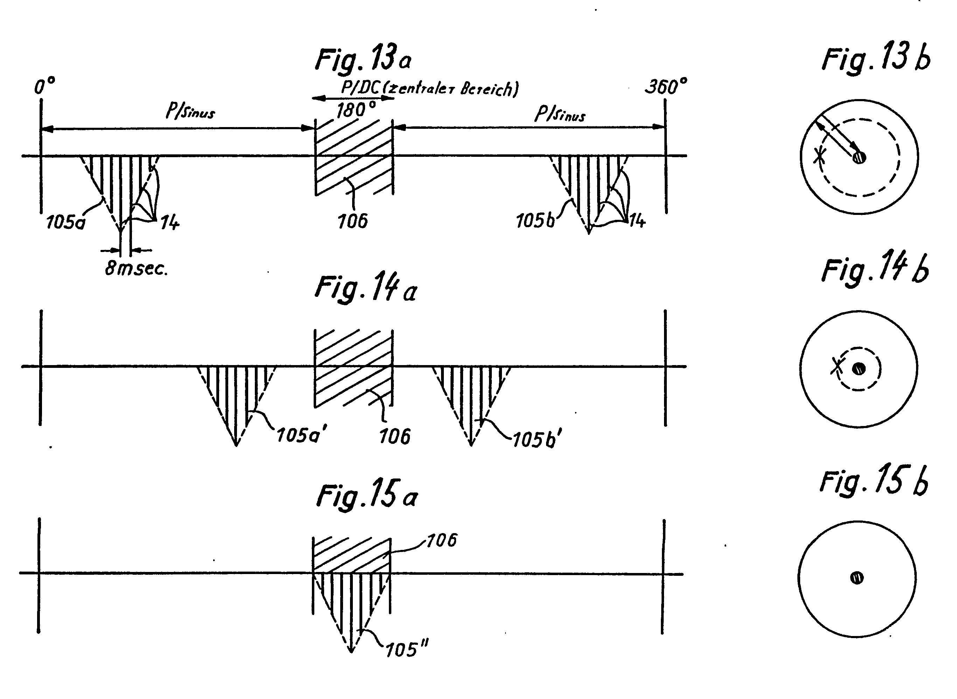

Der zeitliche Abstand zwischen jeweils zwei beim dynam ischen Umlauf der Scanner-Keilprismen 16a, 16b erreichten Gleichständen kann als ein Abtastzyklus bezeichnet werden und umfaßt wie schon erwähnt, 200 Umdrehungen des die Zeitbasis bestimmenden Prismas, in welchem Zeitraum das geringfügig schnellere Prisma 16b 201 Umdrehungen zurückgelegt hat. Die Figuren 13a, 14a und 15a, jeweils in Verbindung mit den Figuren 13b, 14b und 15b, zeigen graphisch die sich ändernden Verhältnisse, je nach dem, ob man im Außenbereich der Abtastspirale (Figur 13a, 13b) arbeitet oder sich dem zentralen Bereich allmählich annähert, der in den Figuren 15a, 15b dargestellt ist.

Kann die Identifizierung in einem Außenbereich der Spirale entsprechend der Figuren 13a, 13b vorgenommen werden, dann ergeben sich während einem vollständigen Abtastzyklus, der beginnt bei der Phasenverschiebung 0 zwischen den beiden Keilprismnen bis zur erneuten Erreichung der Phasenverschiebung 0° (bei 360 Grad) zwei Bereiche, in denen die Identifikationsimpulse 14 auftreten können. Diese beiden Bereiche, die mit 105a und 105b bezeichnet sind, liegen vergleichsweise weit auseinander und vom zentralen Abtastbereich 106 entfernt. Der Grund hierfür ist darin zu sehen, daß durch die Relativverscheibung der beiden Keilprismen beim schnellen, dynamischen Ablauf bei jedem vollen Abtastzyklus zweimal die gleichen Relativpositionen bezüglich der Strahlablenkung auftreten, getrennt durch die komplementäre Position der 180 Grad-Phasenverschiebund, wie ohne weiteres einzusehen ist. Dabei ergibt sich bei jedem schnellen Umlauf der beiden Keilprismen ein negativer Identifikationsimpuls, der zunächst von schwacher Amplitude ist, da der Relativstand der Keilprismen sich erst allmählich der jeweils optimalen, geometrischen Relativposition annähert, bei welcher der Scanner die beiden Muster maximal zur Deckung bringen kann. Es ergibt sich daher ein allmählicher Anstieg der Identifikationsimpulsamplitude und ein allmählicher Abfall, wenn die Relativpositionen der Keilprismen zueinander aus dem Bereich herauswandern, bei welchem die kongruente Deckung oder Übereinstimmung der beiden Muster erzielbar ist. Bei der erwähnten Umdrehungsgeschwindigkeit von 125 Umdrehungen pro Sekunde des zeitbestimmenden Keilprismas 16a ergibt sich ein zeitlicher Abstand der Identifikationsimpulse von 8 msec. Liegt der Bereich, in welchem eine Identifikation möglich ist, annähernd in der Mitte zwischen dem Spiralen-Außenbereich und dem zentralen Bereich, wie dies in den Figuren 14a, 14b gezeigt ist, dann rücken die beiden Identifikatonsimpulsbereiche 105a' und 105b' näher zusammen, wobei die absolute Amplitude der Identifikationsimpulse selbst geringer werden kann, weil die Abtastgeschwindigkeit im inneren Spiralbereich ebenfalls geringer wird; wie schon erwähnt, ist ja die Umdrehungsgeschwindigkeit der Keilprismen konstant und daher ist bei abnehmendem Radius die Absolutgeschwindigkeit des die Abtastebene kreisförmig-spiralig überstreichenden Strahlenbündels geringer, dem entsprechend verschleifen sich auch die Unterschiede zwischen dem Identifikationsimpuls und den begleitenden Grundschwingungs- und sonstigen Störsignalen.

Bei Abtastung im zentralen Bereich entsprechend den Figuren 15a und 15b fallen die beiden Identifikationsbereiche zu einem gemeinsamen Identifikationsbereich 105'' zusammen, der sich dann in dem Gebiet von ± 20 Grad um den 180 Grad-Phasenverschiebungspunkt befindet.

In den beiden in den Figuren 13a, 13b und 14a, 14b dargestellten Abtastzuständen können Identifikationen ohne weiteres vorgenommen werden, d.h. die Überprüfungen des Identifikationsimpulses entsprechend den schon beschriebenen Kriterien finden statt und es ergibt sich eine "GUT-Anzeigen" insgesamt dann, wenn der Algorithmus der Identifikations-Kriterien einen vorgegebenen Wert überschreitet. Auf sich in diesem Zusammenhang zusätzlich ergebende Identifikationskriterien wird weiter unten noch eingegangen.

Im zentralen Bereich entsprechend den Figuren 15a und 15b findet grundsätzlich zunächst keine Identifizierung statt; es kann aber die Betätigung des vorgesehenen dritten Keilprismas durch Solenoidwirkung erfolgen, um aus diesem zentralen Bereich herauszukommen. Bevorzugt wird das dritte Keilprisma in den Strahlengang zur Ablenkung dann eingeschoben, wenn das schon beschriebene Prüfkriterium Identifikationsimpuls bezogen auf Grundschwingung (P/SG) kleiner ist als das Identifikations-Kriterium Identifikationsimpuls bezogen auf Gleichstrompegel (P/DC).

Es ist schon erwähnt worden, daß die zusätzliche Rotations-Suchbewegung des Kartenhalters deshalb erfolgt, um auch bei einer Verdrehung der beiden miteinander zu vergleichenden Mustern (als allgemeiner Ausdruck) optimale Amplituden des Identifikationsimpulses noch zu erhalten. Aus der Darstellung der Figuren 13a und 14a läßt sich erkennen, daß Identifikationsimpulsbereiche 105a, 105b jeweils zweimal während eines vollständigen Abtastzyklus von 0 Grad bis 360 Grad (0 Grad) Phasenverschiebung auftreten, so daß nunmehr, da die Adresse, also das Ausmaß der gegenseitigen Phasenverschiebung der Keilprismnen bekannt ist, auch die Rotations-Suchbewegung des Kartenhalters auf den Scannerablauf synchronisiert werden kann, und zwar dahingehend, daß ein jeweils neuer Verschiebe-Suchschritt des Kartenhaltersimmer schon nach jeweils einem halben Abtastzyklus erfolgt, so daß sich der gesamte Identifikationsvorgang auf das Doppelte beschleunigen läßt.

Die Verifizierung, daß der Identifikations-Algorithm us einwandfrei und wahr ist, läßt sich dann noch mindestens einem weiteren Prüfkriterium unterwerfen und zwar abgestimmt auf die Häufigkeit des Nacheinanderauftretens der einzelnen Identifikationsimpulse bei gegebener Abtast-Drehgeschwindigkeit der Keilprismen des Scanners. Bei der erwähnten beispielhaften Umdrehungsgeschwindigkeit der Scanner-Keilprismen tritt jeder Identifikationsimpuls in einem Abstand von 8 msec. auf, und ein weiteres Identifikations-Kriterium kann darin bestehen daß als Minimum drei Identifikationsimpulse aufeinanderfolgend im 8 msec.-Zeitabstand im nichtzentralen Abtastbereich auftreten müssen, um eine GUT-Anzeige zuzulassen. Dieses Identifikations-Kriterium ist deshalb sinnvoll, weil die nicht völlig auszuschließende Möglichkeit besteht, daß durch eine auf eine gewollte Täuschung gerichteten schnellen Fingerbewegung im Bereich des Prismas 73 bestimmte Impulse erzeugt werden können, die die Auswerteelektronik gegebenenfalls als zutreffend, da die gewünschte Amplitude erreichend, erkennt. Solche Impulse können aber keinesfalls im genauen Zeitabstand wie bei ordnungsgemäßer Abtastung erzengt werden, so daß sich hier eine einwandfreie Möglichkeit bietet, Täuschungen auszuschließen.

Ein weiteres Identifikations-Kriterium besteht dann noch darin, daß man das allmähliche Ansteigen der Amplitude aufeinanderfolgender Identifikationsimpulse bei Annäherung an den Identifikationsbereich durch die spiralige Abtastung auswertet und nur dann eine GUT-Anzeige zuläßt, wenn jeder nachfolgender Identifikationsimpuls monoton zu- oder abnimmt, bezogen auf den vorhergehenden.

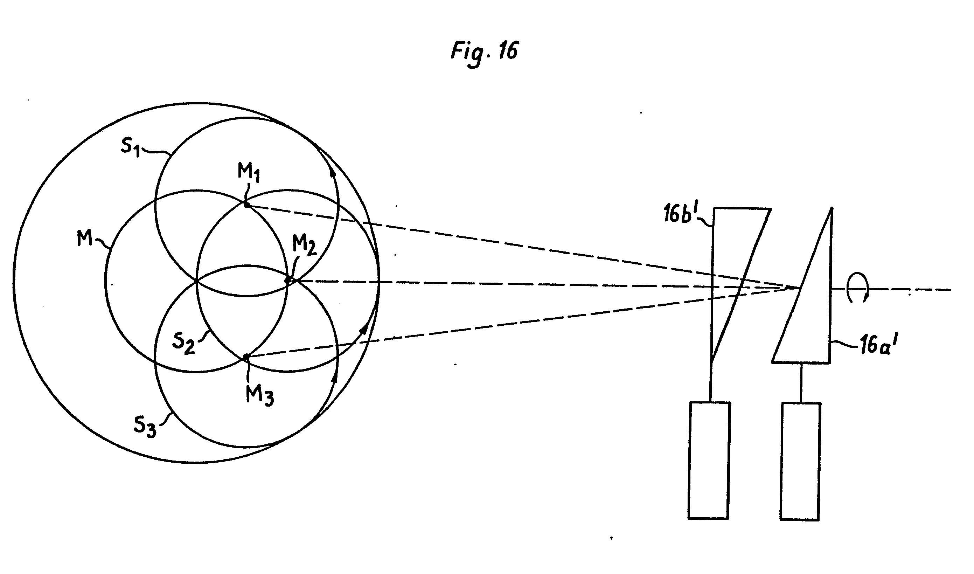

Schließlich ist eine weitere besonders bevorzugte Ausgestaltung des Scanners möglich, die auch die Probleme beseitigt, die sich bei der Abtastung im zentralen Bereich ergeben. Bei dieser Ausgestaltung sind die beiden Scanner-Keilprismen nicht mit schneller, sich nur geringfügig unterscheidender Drehgeschwindigkeit angetrieben, sondern eines der Keilprismen, in Fig. 16 das Keilprisma 16a' wird, bezogen auf den dynamischen Abtastvorgang, als praktisch quasistationär betrachtet. Mit anderen Worten, das erste Keilprisma 16a' verdreht sich so langsam oder ist inkremental von einem Schrittmotor um jeweilige Winkelbeträge so angetrieben, daß das zweite Keilprisma 16b', welches sich mit hoher Umdrehungsgeschwindigkeit, etwa angetrieben von einem Gleichstrom- oder Wechselstrommotor ständig dreht, mindestens eine volle Dreh- und Ablenkbewegungin einem Abtastteilausschnitt durchgeführt hat, bevor eine merkliche Weiterführung dieses kreisförmigen Abtastbereichs durch das quasistationäre Keilprisma erfolgt. Es ergibt sich dann bei der Abtastung der X-Y-Ebene (Abtastebene) die Wirkung, daß das erste Keilprisma 16a' den Mittelpunkt einer kreisförmigen Abtastbewegung jeweils um vorgegebene, quasistationär eingehaltene Orte verlagert, während das Keilprisma 16b' um diese Orte eine schnelle kreisförmige Abtast-Suchbewegung, jetzt mit konstanter Geschwindigkeit, durchführt. In Fig. 16, bei welcher der Anschaulichkeit halber die Abtastebene in Draufsicht dargestellt ist und die Keilprismen schematisch in einer Seitenansicht, ist die kreisförmige Bahn der einzelnen Orte M1, M2, M3 mit M bezeichnet, während die Bahnen der schnellen Abtastbewegung, hervorgerufen durch das zweite Keilprisma 16b', mit S1, S2 ... bezeichnet sind.

Man erkennt, daß sich Geschwindigkeitsunterschiede während des dynamischen Abtastvorgangs im Verlauf eines vollen Abtastzyklus nicht mehr ergeben können, denn die Ortsverlagerung der Mittelpunkte M1, M2 ... für die kreisförmige Abtast-Suchbewegung durch das erste Keilprisma 16a' erfolgt, gesehen von der schnellen Drehbewegung des zweiten Keilprismas 16b' stationär, so daß die Geschwindigkeiten sich nicht mehr überlagern. Die Geschwindigkeit der Strahlverschiebung durch das zweite Keilprisma 16b' ist daher an allen Punkten der Bahnen S1, S2 ..., auch beim Überstreichen des zentralen Bereichs konstant. Der Grund hierfür liegt darin, daß der Radius, um welchen die schnellen Such-Drehbewegungen durchgeführt sind, konstant ist und den Kreis M mit den Orten M1, M2... beschreibt.

Durch diese neue Scanner-Ausbildung als alternative Ausgestaltung gelingt es, die Abtastprobleme im zentralen Bereich zu beseitigen, so daß sich gegebenenfalls auch einige der weiter vorn geschilderten Maßnahmen erübrigen können.

Zur Auswertung der sich durch die vorliegende Erfindung noch zusätzlich ergebenden Prüfkriterien, nämlich präzise Abstandsbestimmung und Auswertung von mindestens drei aufeinanderfolgenden Identifikationsimpulsen kann ein Zähler vorgesehen sein, der nur dann an seinen Ausgängen eine solche Konfiguration eines Ausgangssignals zuläßt bzw. bei Ausbildung als sogenannter Johnson-Zählers erst nach Eingang eines dritten aufeinanderfolgenden Identifikationsimpulses ein GUT-Ausgangssignal erzeugt, wobei dem Zähler eine Torschaltung vorgeschaltetist, die in durch die Umdrehungsgeschwindigkeit vorgegebenen Zeitabständen (8 msec.) geöffnet, sonst gesperrt ist. Die Steuerung der Torschaltung kann mit Hilfe eines monostabilen Gliedes erfolgen, welches für einen vorgegebenen Zeitabstand, bestimmt durch die Umdrehungsgeschwindigkeit der Prismen, in seinem metastabilen Zustand verbleibt.

Die im folgenden beschriebenen Maßnahmen beziehen sich im wesentlichen auf weitere Ausgestaltungen das soweit beschriebenen Grundsystems.

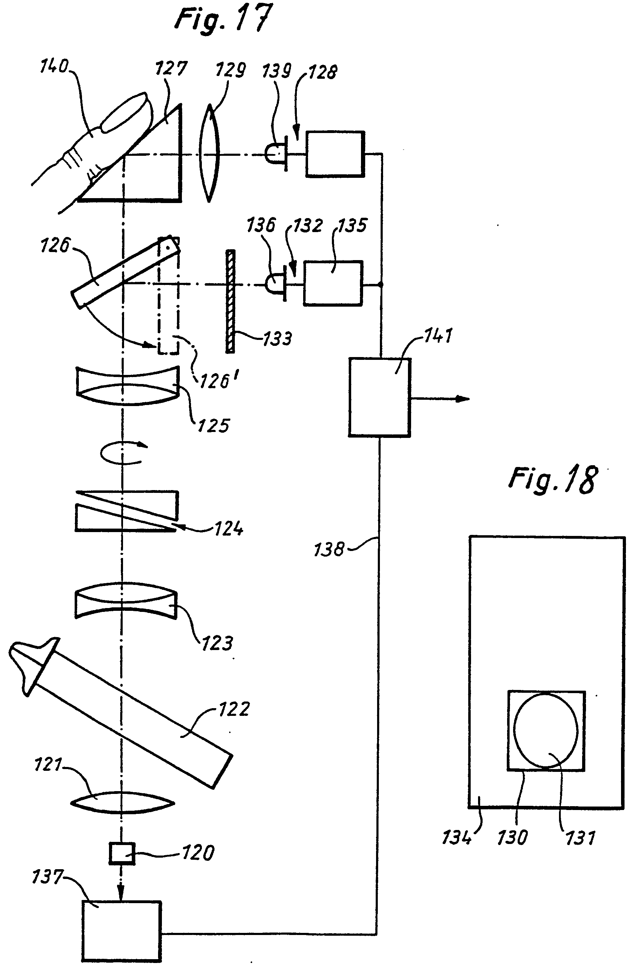

Die in Fig. 17 gezeigte optische Bank eines Prüfgeräts besteht aus einem das eingehende optische Signal in ein elektrisches Signal umwandelnden Ausgangsdetektor 120, einer vorgeschalteten Linse 121, dem Kartenhalter 122, in welchen die Meistersymbol und Fingerabdruck tragende Identifizierungskarte eingeschoban wird, einer dem Kartenhalter 122 vorgeschalteten weiteren Linse 123, dem optischen Abtastsystem, nämlich dem Scanner 124 dessen Aufbau beispielsweise mit der bevorzugten Ausführungsart des in Fig. 16 gezeigten Scanners identisch sein kann, elner weiteren Linse 125 sowie einem im optischen Strahlengang für beide Prüfkriterien liegendem optischen Element 126.

Für die Durchführung des Fingerabdruckvergleichs ist ein Prisma 127 vorgesehen, auf den der Finger der zu überprüfenden Person aufgelegt und von einer eigenen Beleuchtungseinrichtung 128 über eine Linse 129 beleuchtet wird. Wie üblich ist in der Darstellung der Fig. 17 lediglich der Mittenstrahl dargestellt, wobei es sich im übrigen versteht, daß die bisher und in der Folge jeweils erwähnten Komponenten der optischen Bank und des Überprüfungsgeräts nicht jeweils in der dargestellten Form und an der erwähnten Position erforderlich sind, sondern nur insoweit, als die Funktion des Prüfgeräts zur Durchführung der erfindungsgemäßen Vergleichsvorgänge dies notwendig macht.

Entscheidend ist nämlich, daß bis auf die getrennten Beleuchtungssysteme die sonstigen Komponenten der optischen Bank, bei dem dargestellten Ausführungsbeispiel also die Elemente mit den Bezugszeichen 120 bis 126, dem Prüfgerät gemeinsam sind, wobei in einer besonders vorteilhaften Ausgestaltung der Erfindung die zu überprüfenden gespeicherten Bilder des Fingerabdrucks und des Meistersymbols auf der Karte sich an der gleichen Stelle, also in überlagerter optischer Position befinden, wie dies in Fig. 18 dargestellt ist. In Fig. 18 ist beispielsweise das Meistersymbol durch die rechteckige Umrandung 130, das Abbild des Fingerabdrucks durch den Kreis 131 dargestellt. Gespeicherter Fingerabdruck und Meistersymbol auf der Karte sind hierdurch in der Vielzahl der sich in diesem Bereich befindlichen Linien völlig ununterscheidbar; das Prüfgerät ist aber aufgrund seiner besonderen Ausgestaltung in der Lage, in der beabsichtigten zeitlichen Reihenfolge der Überprüfungsbedingungen jeweils entsprechende Identifikationsimpulse zu erzeugen und auszuwerten, wie gleich noch erläutert wird. Das Beleuchtungssystem für das Meistersymbol ist in Fig. 17 mit 132 bezeichnet; das Transparent des Meistersymbols, welches in ständiger Speicherung stationär im Prüfgerät gehalten ist, trägt das Bezugszeichen 133.

Für die Durchführung der Überprüfung sei angenommen, daß das Gerät zunächst die Übereinstimmung des Meistersymbols auf dem Speichermittel oder Transparent 133 mit dem Meistersymbol vornimmt, welches sich bei 130 auf der Karte 134 befindet, die in den Kartenhalter 122 eingeschoben ist. Über eine Treiber- oder Verstärkerschaltung 135 wird dann zunächst die Lampe 136 für die Meistersymbolüberprüfung angesteuert, wobei es sich bei der Lampe 136 bevorzugt um lichtemittierende Dioden, sog. LED handelt, die ebenfalls bevorzugt im Infrarotbereich arbeiten. Das Licht von den LED 136 gelangt über das Transparent 133 auf das optische Element 126, bei dem es sich entsprechend einem bevorzugten Ausführungsbeispiel um einen sog. "beam splitter" handelt, der in diesem Fall dann stationär in der mit durchgezogenen Linien dargestellten Position angeordnet ist und das auffallende Meistersymbol-Strahlenbündel rechtwinklig umlenkt und den weiteren Komponenten 120 bis 125 zuführt. Durch die Abtastbewegung des Scanners 124 erfolgt dann die Identitätsüberprüfung und das deckungsgleiche Auffinden (Koinzidenz) zwischen gespeichertem Meistersymbol bei 133 und dem eingeschobenen Meistersymbol 130 auf der Karte 134. Es ergibt sich am Ausgang des Detektors 120 ein erstes elektrisches Signal, welches der nachgeschalteten elektronischen Auswerteschaltung 137 zugeführt wird. Die elektronische Auswerteschaltung 137 ist so ausgebildet, daß für eine endgültige GUT-Anzeige zwei in zeitlicher Abfolge als richtig erkannte Identifikationsimpulse erfaßt und ausgewertet werden müssen, wobei die Impulse von der Meistersymbolüberprüfung und der Fingerabdrucküberprüfung stammen.

Nach Durchführung der Meistersymbolüberprüfung, wie soeben geschildert, erfolgt dann die Überprüfung auf Übereinstimmung der Fingerabdrücke, und zwar bevorzugt zunächst unabhängig davon, ob sich bei der jeweils vorhergehenden Prüfung, hier also der Meistersymbolprüfung, ein richtiges oder falsches Resultat ergeben hat. Es wird nunmehr über die Verbindungsleitung 138 von der elektronischen Auswerteschaltung 137 die zweite Beleuchtungseinheit 128 mit Lampe 139 angesteuert und das erzeugte Lichtbündel fällt nach Reflexion an dem Prisma 137, nunmehr ein latentes Abbild der Fingerabdrucklinien des aufgelegten Fingers 140 enthaltend, auf das optische Element 126, tritt durch dieses ohne Beeinflussung hindurch und erfährt die gleiche Behandlung an den weiteren Elementen 120 bis 125, wobei sich bei Übereinstimmung des durch das Prisma 127 erfaßten Fingerabdrucks mit dem auf der Karte bei 131 gespeicherten Fingerabdruck wiederum ein entsprechender Identifikationsimpuls am Ausgang des Detektors 120 ergibt.

Die Überprüfung des Ausgangssignals des Detektors 120 kann dabei so wie weiter vorn im einzelnen geschildert erfolgen, wobei der sich bei Identität der Muster ergebene Identifikationsimpuls einem oder mehreren der dort genannten unterschiedlichen Prüfkriterien unterworfen wird.

Die elektronischen Auswerteschaltung 137 ist so ausgebildet bzw. kann einen im folgenden nicht weiter zu erläuternden Mikroprozessor enthalten, der so programmiert ist, daß der soeben geschilderte zeitliche Ablauf in der Abfrage der einzelnen Untersuchungen in der Abfolge Vergleich Meistersymbol-Fingerabdruck oder umgekehrt durchgeführt wird.

Bei dem optischen Element 126 kann es sich in vorteilhafter Ausgestaltung um einen semitransparenten Spiegel handeln, der einen Teil der auf ihn jeweils auffallenden Strahlung ungehindert passieren läßt und einen Teil entsprechend den optischen Gesetzen reflektiert. Daher kann dieses optische Element 126 ohne Positionsänderung für die Durchführung beider Messungen mit dem Beleuchtungssystem 128 und 132 verwendet werden; es ist aber auch möglich, das Element 126 als echten Spiegel auszubilden, welches bei der Messung auf Übereinstimmung des Meistersymbols mit dem Beleuchtungssystem 132 in der durchgezogenen Position angeordnet ist und für die Durchführung der Fingerabdruck-Vergleichsüberprüfung aus dem Strahlengang in die gestrichelte Position 126' entsprechend der Pfeilrichtung abgekippt wird.

Eine weitere vorteilhafte Ausgestaltung der vorliegenden Erfindung besteht darin, die Darstellung des Meistersymbols im optisch überlagerten Bild 130, 131 auf der Karte 134 besonders transparent und durchsichtig, also im Grunde undeutlich vorzunehmen, da sich wegen der Unveränderbarkeit der sich beim Vergleich ergebenen Randbedingungen - es werden stets zwei gespeicherte und insofern zeitlich invariante Muster miteinander verglichen - stets ein Identifikationsimpuls ausreichender Qualität bei eindeutiger Übereinstimmung ergibt. Aus diesem Grunde und wegen der Überlagerung ist auch dann, wenn man auf die weiter vorn erläuterten zusätzlichen Verzerrungsmöglichkeiten verzichtet, eine auch nur bildliche Erfassung des Meistersymbols ausgeschlossen, selbst dann, wenn man in den Besitz einer echten Karte mit überlagerter Meistersymbol- und Fingerabdruckdarstellung gelangt. Lediglich als Hinweis und zum besseren Verständnis wird darauf aufmerksam gemacht, daß es sich bei dem Meistersymbol beispielsweise um ein weiteres Fingerabdruckbild handeln kann, welches etwa von einer leitenden Person des jeweiligen Unternehmens, dem die Karten gehören, stammen kann. Es ergeben sich dann vollkommen ineinander verschlungene und verwirrte Linien der überlagerten Darstellung auf der Karte, deren Isolierung unmöglich ist, die aber für eine Fälschung unbedingt isoliert werden müßten, da das Gerät die Überprüfung im zeitlich getrennten Ablauf, wie soeben geschildert, vornimmt und eindeutig auf das Vorhandensein des Meistersymbols einerseits und auf die Übereinstimmung der Fingerabdrücke andererseits abstellt.

In einer weiteren vorteilhaften Ausgestaltung vorliegender Erfindung wird eine sonstige, noch denkbare Fälschungsmöglichkeit dadurch ausgeschlossen, daß eine zusätzliche Sensorschaltung 141 vorgesehen ist, die in die Rückführleitung zur Regelung der Lampenhelligkeit eingeschaltet ist. Diese Rückführleitung ist in der Fig. 1 mit 63 bezeichnet und sie dient dafür, die Helligkeit der Lampe jeweils nachzuregeln, wenn sich am Ausgang des Fotodetektors 120 eine insgesamt zu schwache Signalhöhe ergibt, die auf eine zu starke Schwächung des die Auswertung und den Vergleich ermöglichenden Lichtbündels zurückzuführen ist.

Wird nun unrechtmäßig versucht, entsprechend starke und daher eine GUT-Anzeige bewirkende Identifikationsimpulse dadurch zu erzeugen, daß man beim Auflegen des Fingers auf das Prisma 127 den Finger sehr schnell ruckartig abhebt und wieder auflegt, dann führt dies neben der impulsförmigen Erzeugung von Ausgangssignalen am Detektor 120 automatisch zu einem entsprechenden Ansprechen der Regelschaltung für die Lampenhelligkeit. Dies ist darauf zurückzuführen, daß die Fingerbewegung nicht beliebig schnell durchgeführt werden kann, sondern die durch diese Fingerbewegung hervorgerufene Frequenz innerhalb des Regel- und Ansprechbereichs der Regeleinrichtung für die Lampenhelligkeit liegt. Es versteht sich, daß diese Regelschaltung so ausgelegt ist, daß sie nicht ausgleichend auf die bei den Messungen auftretenden Frequenzen und Impulse einwirken kann. Es ist daher möglich, durch eine Erfassung der Frequenz des rückgeführten Regelsignals für die Lampenhelligkeit mittels der Schaltung 141 ein Alarmsignal oder eine Fehleranzeige dann zu erzeugen, wenn diese Frequenz der auszugleichenden Helligkeitsschwankungen in dem Bereich liegt, der sich ergibt, wenn durch rhythmische Fingerbewegungen Identifikationsimpulse unrechtmäßig erzeugt werden. In diesem Fall kann das ganze System in einen Fehleranzeigezustand überführt werden. Die Frequenz für die Erfassung von Fingerbewegungen liegt dabei etwa zwischen Null bis höchstens 100 Hz und damit außerhalb des Frequenzbandes, welches beim üblichen Vergleich als Wechselspannungsgemisch am Ausgang des Detektors auftritt. Die Sensorschaltung 141 weist entsprechende Filter und Systeme auf, die dann ansprechen, wenn mit einer solchen Frequenz erfolgende Helligkeitsschwankungen der Lampe auszugleichen sind.

Eine weitere bevorzugte Ausgestaltung bezüglich einer Fälschungssicherheit des Systems besteht darin, das in dem Gerät zum Vergleich gespeicherte Meistersymbol in jeweils unterschiedlichen Drehpositionen anzuordnen, wobei Winkelunterschiede zwischen 3 bis 4° vollkommen ausreichen. Die Winkelverdrehung des Meistersymbols kann manuell oder motorisch erfolgen; bei einem widerrechtlichen Öffnen des Geräts zur Ermittlung der Meistersymboldarstellung springt dann das Meistersymbol in eine Nullposition, aus welcher die tatsächlich zum Vergleich herangezogene Verdrehposition nicht mehr abgeleitet werden kann. Eine solche Möglichkeit zur Fälschungssicherheit kann als Absolut-Winkelverdrehposition bezeichnet werden. Darüber hinaus ist es möglich, das Meistersymbol aus n sich überlagernden, daher vorzugsweise übereinanderliegenden Teilsymbolen herzustellen. Auch diese Teilsymbole können zusätzlich zum Absolut-Winkel jeweils relative Verdrehpositionen zueinander einnehmen, die beim gewaltsamen Öffnen in eine Nullposition rückgeführt werden.

Bezüglich der Karte ist es auch möglich, auf dieser in einander überlagernder Darstellung zwei oder mehr Fingerabdrücke einer Person, gegebenenfalls auch mehrerer Personen anzubringen, wobei das Vergleichssystem aus der überlagerten Fingerabdruckdarstellung auf der Karte mit höchster Zuverlässigkeit das Abbild des Abdrucks herausfindet, welches zum jeweiligen Zeitpunkt verglichen und überprüft werden soll. Auf diese Weise ist es möglich, daß der Kartenträger seine Identität durch Auflegen von mehreren Fingern auf das Meßprisma des Gerätes nachweisen kann; es ist aber auch möglich, auf diese Weise eine Karte für zwei oder sogar mehrere Personen zu benutzen.

Eine weitere Maßnahme zur verbesserten Diskriminierung, auch zur Fälschungssicherheit und überhaupt, um die Wahlmöglichkeiten und Alternativen des Geräts besser auszunützen, besteht darin, mit Licht verschiedener Wellenlängen zu arbeiten, wobei beispielsweise polychromatisch beleuchtet, jedoch monochromatisch detektiert wird. Detektoren, die nur auf Lichteinstrahlung bestimmter Wellenlängen oder Wellenlängenbänder ansprechen, sind bekannt; die Verwendung relativ monochromatischer Detektoren und/oder Lichtquellen ergibt daher noch bessere Möglichkeiten zur Diskriminierung und Auswertung.

Schließlich besteht ein weiteres bevorzugtes Ausführungsbeispiel vorliegender Erfindung darin, im Prüfgerät so viele Fingerabdrücke zu speichern, wie Personen vorhanden sind, die durch ein solches erfindungsgemäßes System überprüft und über deren Zuverlässigkeit oder Unzulässigkeit, etwa beim Betreten eines Gebäudes, entschieden werden muß.

So ist es beispielsweise möglich, das Gerät so auszubilden, daß die jeweils zu überprüfende Person in das Gerät einen bestimmten, sie ausschließlich betreffenden Code eingibt, der ein Zahlencode oder auch nur ihr eigener Name sein kann, und das Gerät transportiert dann aus der Vielzahl der vorhandenen gespeicherten Fingerabdrücke den Fingerabdruck in den weiter vorn beschriebenen Bereich des Kartenhalters, der mit dem Fingerabdruck der Person übereinstimmen soll, die ihren Code soeben eingegeben hat. Die Überprüfung erfolgt dann in der üblichen Weise, wie weiter vorn ausführlich beschrieben und das Gerät kann den Zugang freigeben, sobald die Überprüfung die einwandfreie Identität der Person festgestellt hat. Die Speicherung dieser Vielzahl der Fingerabdrücke kann dabei auf vielfältige Art und Weise erfolgen; beispielsweise ist es möglich, an einem entfernteren Ort in Form einer Filmrolle die Fingerabdrücke aufzubewahren und dann den entsprechenden Fingerabdruck herauszusuchen und mechanisch an den Durchstrahlungsort zum Vergleich zu transportieren oder auch nur ein Lichtbündel an diesen Ort zu bringen, welches das Abbild des gespeicherten Fingerabdrucks latent enthält.

Eine Speicherung von Fingerabdrücken ist aber auch durch digitale Mittel möglich, beispielsweise also unter Verwendung der bekannten ROM oder RAM, wobei ein derart digital gespeicherter Fingerabdruck zunächst in einen analogen Bezugsrahmen umzuwandeln wäre, bevor dann der vorzugsweise auch hier wieder optisch vorzunehmende Vergleich durchgeführt wird. Allgemein ausgedrückt kann daher die Speicherung analog oder digital erfolgen, die Darstellung zum Vergleich erfolgt dann in der analogen Form.

## Patentansprüche

1. Verfahren zur Durchführung eines Vergleichs von Fingerabdruckmustern mit einer auf einer Karte, einem Ausweis, einer Kreditkarte, einem schlüsselähnlichen Kartenteil, einem Identifikationsdokument o. dgl. befindlichen Aufzeichnung desselben Fingerabdruckmusters, wobei das mit der Aufzeichnung zu vergleichende Fingerabdruckmuster durch Auflage eines Fingers auf eine Unterlage als Fingerabdruckmuster-Abbild entsteht oder selbst eine Aufzeichnung ist und die Muster bei gleichzeitiger Durchführung einer Such- oder Abtastbewegung optisch verglichen werden und eine nach fotoelektrischer Umwandlung erhaltene elektrische Größe ausgewertet, ein sich im zeitlichen Verlauf der elektrischen Größe (Detektorsignal) bei Identität der Muster ergebender Identifikationsimpuls Prüfkriterien unterworfen und das Ergebnis mit einem einstellbaren Schwellwert verglichen wird, wobei eine GUT-Anzeige bei überschreiten des Schwellwerts ergeht, dadurch gekennzeichnet, daß das mit der Aufzeichnung zu vergleichende Fingerabdruckmuster (Abbild oder Aufzeichnung) einer durch die Differenzbewegung von zwei hintereinander angeordneten, mit vorgegebener Differenzgeschwindigkeit drehangetriebenen Keilprismen gebildeten Suchbewegung unterworfen wird und daß der sich aus der Vergleichsprüfung ergebende Identifikationsimpuls (14, 15a, 15b) neben der Bestimmung des prozentualen Korrelationsverhältnisses der Identifikationsimpuls-Amplitude zum Grundsignal mindestens zwei weiteren Prüfkriterien mit im Detektorsignal enthaltenen, weiteren elektrischen Größen bzw. sonstigen Angaben unterworfen wird, nämlich einer Vergleichsüberprüfung der Amplitude des negativen Identifikationsimpulses mit der Amplitude eines höherfrequenten Störsignals (-P/A), einer Überprüfung der Amplitude von den negativen Identifikationsimpuls begleitenden positiven Impulsen mit dem Mittelwert des hochfrequenten Störsignals (+P/A), einem Vergleich der Amplitude des negativen Identifikationsimpulses mit der Höhe des im Detektorsignal vorhandenen Gleichstrompegels (-P/DC), einer Messung des Zeitabstandes (T) des wiederholten Auftretens des negativen Identifikationsimpulses u. dgl. und daß die Ergebnisse dieser Überprüfungen anschließend mit einer vorgegebenen Sicherheitsschwelle verglichen werden.

2. Verfahren nach Anspruch 1, dadurch gekennzeichnet, daß das durch Reflexion an einem Prisma (5) gewonnene Abbild des Fingerabdruckmusters durch die Rotation der zwei einander zugeordneten Keilprismen einer spiralförmigen Suchbewegung in der Ebene der Aufzeichnung unterworfen wird, derart, daß jeweils bei Eintritt der Deckungsgleichheit des Abbilds mit der Aufzeichnung der zum Identifikationsimpuls führende sich deutlich abhebende, unterschiedliche optische Energiezustand erreicht wird.

3. Verfahren nach Anspruch 1 oder 2, dadurch gekennzeichnet, daß der Aufzeichnung des Fingerabdrucks auf der Karte die Aufzeichnung eines Meistersymbols an der gleichen Stelle überlagernd zugeordnet wird, welches im zeitlichen Abstand zum Vergleich der Fingerabdrücke verglichen wird mit einem im Prüfgerät angeordneten Meistersymbolabbild.

4. Verfahren nach Anspruch 3, dadurch gekennzeichnet, daß die überlagerte Darstellung von Fingerabdruck einerseits und einem Meistersymbol andererseits auf dem Aufzeichnungsträger (Karte 2, 134) gleichzeitig optisch durchstrahlt und erfaßt, der Vergleich mit dem Fingerabdruckmuster der die Identifikationsunterlage tragenden Person bzw. mit dem gespeicherten Meistersymbol jedoch in zeitlicher Aufeinanderfolge durchgeführt wird.

5. Verfahren nach einem der Ansprüche 1 bis 4, dadurch gekennzeichnet, daß eine Fingerabdruck-Aufzeichnung oder ein unmittelbar gewonnenes Fingerabdruck-Abbild verglichen wird mit mindestens zwei, vorzugsweise einer größeren Anzahl von identischen Aufzeichnungen zur Erhöhung der Identifizierungssicherheit.

6. Verfahren nach Anspruch 5, dadurch gekennzeichnet, daß der Mehrfachvergleich eines Abbilds oder einer Aufzeichnung parallel und zur im wesentlichen gleichen Zeit (bei einem Abtastzyklus im Aufzeichnungsbereich) durchgeführt wird.

7. Verfahren nach einem der Ansprüche 1 bis 6, dadurch gekennzeichnet, daß mehrere unterschiedliche Fingerabdruck-Aufzeichnungen im Aufzeichnungsbereich zeitlich aufeinanderfolgend verglichen werden mit unterschiedlichen, jedoch jeweils unmittelbar zum Vergleichszeitpunkt gewonnenen Fingerabdruck-Abbildungen.

8. Verfahren nach einem der Ansprüche 1 bis 7, dadurch gekennzeichnet, daß mit Beginn der Vergleichsmessung der den Aufzeichnungsträger (Karte 2, 134) lagernde Kartenträger (3) einer zusätzlichen mechanischen Verschiebebewegung, vorzugsweise einer Drehbewegung, unterworfen wird zur Optimierung des Vergleichsergebnisses durch geometrische Korrektur der jeweils erzielten Deckungsgleichheit.

9. Verfahren nach Anspruch 8, dadurch gekennzeichnet, daß ein erster Wert des vergleichenden Meßergebnisses zwischengespeichert und mit einem zweiten, nach der mechanischen, korrigierenden Verschiebebewegung des Kartenhalters auftretenden Wert verglichen wird.

10. Verfahren nach einem der Ansprüche 1 bis 9, dadurch gekennzeichnet, daß durch Änderung der Lampenhelligkeit ein konstanter Pegel der für den Vergleich benötigten elektromagnetischen Strahlungsenergie (Licht) aufrechterhalten wird.

11. Verfahren nach einem der Ansprüche 1 bis 10, dadurch gekennzeichnet, daß durch Einbringen einer optischen Verzerrungseinrichtung (Linsen, Teleskop mit zylindrischen Linsen) in den Strahlengang der optischen Vergleichseinrichtung sowohl bei der Herstellung der aufgezeichneten Muster als auch beim Meßvorgang der Strahlengang im Sinne eines speziellen optischen Codes gegen Fälschungen verzerrt wird.

12. Verfahren nach Anspruch 4, dadurch gekennzeichnet, daß zunächst eine Beleuchtungseinrichtung (132) für die Durchführung des Meistersymbolvergleichs angesteuert, das ein Abbild des Meistersymbols tragende Strahlenbündel von einer vorgegebenen Stelle an den gemeinsamen optischen Strahlengang bis zu dem einen Ausgangsdetektor (120) geführt und anschließend nach Auswertung des auf den Meistersymbolvergleich zurückgehenden Identifikationsimpulses eine Beleuchtungseinrichtung (128) für den Fingerabdruckvergleich angesteuert und das ein Abbild des Fingerabdrucks latent tragende Strahlenbündel an der gleichen Stelle längs des gemeinsamen Weges bis zum Ausgangsdetektor geführt wird.

13. Verfahren nach Anspruch 1, dadurch gekennzeichnet, daß die Phasenverschiebung der sich bei der Suchbewegung mit geringfügig unterschiedlicher Geschwindigkeit drehenden Keilprismen mittels optischer Sensoren erfaßt und in zugeordnete Rechteckimpulsfolgen umgewandelt wird zur Bestimmung eines vorgegebenen Zeitraums während eines vollständigen Abtastzyklus, in welchem die Abtastung mit geringer linearer Geschwindigkeit im wesentlichen im zentralen Bereich der Abtastebene erfolgt.

14. Verfahren nach Anspruch 13, dadurch gekennzeichnet, daß beim Erreichen eines zentralen Bereichs der Abtastebene durch das die Muster abtastende optische Strahlenbündel der Identifikationsvorgang unterbrochen wird.

15. Verfahren nach Anspruch 14, dadurch gekennzeichnet, daß bei Erreichen des zentralen Bereichs im Abtastzyklus ein den Strahlengang in den Abtast-Randbereich ablenkendes weiteres optisches Element (drittes Keilprisma) eingeführt wird.

16. Verfahren nach Anspruch 15, dadurch gekennzeichnet, daß durch das Ausgangssignal eines Phasenvergleichers (101) ein das dritte Keilprisma transportierender Sclenoid betätigt wird.

17. Verfahren nach Anspruch 15 oder 16, dadurch gekennzeichnet, daß das dritte Keilprisma nur dann in den Strahlengang eingebracht wird, wenn das Ergebnis des Prüfkriteriums Identifikationsimpuls über Grundschwingung (P/SG) kleiner ist als das Ergebnis des Prüfkriteriums Identifikationsimpuls über Gleichstrompegel (P/DC).

18. Verfahren nach einem der Ansprüche 1 bis 12, dadurch gekennzeichnet, daß ein vollständiger Abtastzyklus der Suchbewegung dann beendet ist, wenn die Keilprismen (16a, 16b) erneut einen geometrischen Gleichstand erreichen, wobei der durch die Basisumdrehungsgeschwindigkeit bestimmte zeitliche Abstand der Identifikationsimpulse (14) jedes während eines vollständigen Abtastzyklus

**0 031 163**

zweimal auftretenden Identifikationsbereichs (105a, 105b) als weiteres Prüfkriterium für die Richtigkeit der GUT-Anzeige verwendet wird.

19. Verfahren nach Anspruch 18, dadurch gekennzeichnet, daß mindestens drei aufeinanderfolgende Identifikationsimpulse im nichtzentralen Abtastbereich als Erfordernis eines weiteren Prüfkriteriums im vorgegebenen Zeitabstand ausgewertet werden.

20. Verfahren nach einem oder mehreren der Ansprüche 1 bis 19, dadurch gekennzeichnet, daß die Rotations-Suchbewegung des Kartenhalters (76) so abgestimmt ist, daß jeweils eine erneute inkrementale Drehbewegung dann erfolgt, wenn ein Identifikationsbereich (105a, 105b) innerhalb eines gesamten Abtastzyklus abgeschlossen ist, d.h. zweimal während eines Abtastzyklus.

21. Verfahren nach einem der Ansprüche 1 bis 12, dadurch gekennzeichnet, daß die Suchbewegung des durch die Keilprismen abgelenkten optischen Strahlenbündels so erfolgt, daß die Drehbewegung eines ersten Keilprismas (16a') quasistationär gehalten ist mit Bezug auf die schnelle konstante Umdrehungsbewegung des zweiten Keilprismas (16b'), derart, daß eine mit Bezug auf das Abtastergebnis merkliche Veränderung des Ablenkwinkels durch eine langsam stetige oder inkremental schrittweise Drehbewegung des ersten Keilprismas (16a') erst dann erfolgt, wenn das zweite Keilprisma (16b') mindestens einen vollen, den zentralen Abtastbereich mit überdeckenden kreisförmigen Ablenkvorgang auf das Strahlenbündel ausgeübt hat mit in dem jeweiligen Abtastteilbereich konstanter linearer Geschwindigkeit.

22. Vorrichtung zur Durchführung eines Vergleichs von Fingerabdruckmustern mit einer auf einer Karte, einem Ausweis, einer Kreditkarte, einem schlüsselähnlichen Kartenteil, einem Identifikationsdokument o. dgl. befindlichen ersten Aufzeichnung desselben Fingerabdruckmusters, mit einer Beleuchtungseinrichtung, einem optischen System zum Vergleich des unmittelbar durch Auflage eines Fingers auf einer Unterlage entstehenden Fingerabdruckmuster-Abbilds oder einer zweiten Aufzeichnung davon mit einer ersten Aufzeichnung des Fingerabdruckmusters, einem Bewegungssucher (Scanner) zur Durchführung einer Suchbewegung, einem lichtelektrischen Empfänger (Detektor) sowie mit einer diesem nachgeschalteten elektrischen Auswerteeinrichtung, durch welche der im Detektorsignal enthaltende, sich bei Identität der jeweiligen Muster ergebende Identifikationsimpuls Prüfkriterien unterworfen und das Ergebnis mit einem einstellbaren Schwellwert verglichen wird, mit einer GUT-Anzeige bei Überschreiten des Schwellwertes, zur Durchführung des Verfahrens nach einem der Ansprüche 1 bis 21, dadurch gekennzeichnet, daß der Bewegungssucher (Scanner 9) aus zwei im Abstand hintereinander angeordneten Keilprismen (16a, 16b) besteht, die motorisch mit vorgegebener Differenzgeschwindigkeit zur Durchführung einer Rotationsbewegung angetrieben sind und daß zusätzlich zu einem ersten Prüfkriterium-Schaltungsblock (23), der das prozentuale Korrelationsverhältnis der Identifikationsimpuls-Amplitude zum Grundsignal (Grundschwingung) erfaßt, mindestens zwei weitere Schaltungsblöcke (24, 25, 26, 27, 28) vorgesehen sind für die Vergleichsprüfung des sich bei der Identität ergebenden Identifikationsimpulses (14, 15a, 15b) mit im Detektorsignal enthaltenden, weiteren elektrischen Größen bzw. sonstigen Angaben, nämlich einem Sinus-Grundschwingungssignal, einem hochfrequenten Oberschwingungssignal, einem Gleichspannungssignal, einer Bezugsmessung des Zeitabstandes T mit Bezug auf das jeweilige Auftreten des Identifikationsimpulses u. dgl. und daß die Ausgangssignale sämtlicher, Vergleichskriterien durchführender Blöcke (23, 24, 25, 26, 27, 28) mit einem gemeinsamen, summierenden Verstärker (43') verbunden sind, dem ein Vergleicher (45') nachgeschaltet ist, der das Ausgangs-Gesamtsignal (Identifikations-Vorsignal) mit einem vorgegebenen Sicherheitsschwellwert vergleicht.

23. Vorrichtung nach Anspruch 22, dadurch gekennzeichnet, daß die Keilprismen (16a, 16b) des Scanners (9) mit relativ geringfügig unterschiedlicher Geschwindigkeit drehangetrieben sind.

24. Vorrichtung nach Anspruch 22, dadurch gekennzeichnet, daß die Schaltungsanordnung zur Bestimmung des prozentualen Korrelationsverhältnisses einen ersten subtrahierenden Verstärker (34) umfaßt, dessen einem (negativem) Eingang das unveränderte Detektor-Ausgangssignal (DS) zugeführt ist und dessen anderer Eingang verbunden ist mit dem Ausgang (Grundschwingungssignal SG) eines phasenkorrigierten Tiefpaßfilters (32, 33), dessen Eingang ebenfalls das Detektorsignal zugeführt ist, daß der Ausgang des subtrahierenden Verstärkers (34) mit einem Eingang einer analogen Teilerschaltung (35) verbunden ist, dessen anderem Eingang erneut das Grundschwingungssignal (SG) zugeführt ist und daß der Ausgang der Teilerschaltung, gegebenenfalls nach Verstärkung mit einem Spitzenwertdetektor (37) verbunden ist, der einen maximal auftretenden Amplitudenwert nach Art eines Speichers für einen vorgegebenen Zeitraum festhält.

25. Vorrichtung nach Anspruch 22, dadurch gekennzeichnet, daß ein Schaltungsblock (25) vorgesehen ist zur Bestimmung des Verhältnisses zwischen der Amplitude des negativen Spitzenimpulses und dem Mittelwert der hochfrequenten Störgröße (-P/A), bestehend aus einer analogen Teilerschaltung (38), deren einem Eingang das Ausgangssignal des subtrahierenden Verstärkers (34) bei der Feststellung des prozentualen Korrelationsverhältnisses direkt und dessen anderem Eingang dieses Signal über ein Tiefpaßfilter (39) zugeführt ist mit einem weiteren, der Teilerschaltung (38) nachgeschalteten Spitzenwertdetektor (41).

26. Vorrichtung nach Anspruch 22, dadurch gekennzeichnet, daß ein Schaltungsblock (24) vorgesehen ist zur Bestimmung des Verhältniswertes zwischen der Amplitude von angrenzend an den negativen Identifikationsimpuls auftretenden positiven Zusatzimpulsen zum Mittelwert des hochfrequenten Störsignals (+P/A) bestehend aus einem weiteren subtrahierenden Verstärker (42), dessen positivem Eingang das Detektorsignal und dessen anderem Eingang das Grundschwingungssignal (SG) zugeführt ist mit einer dem subtrahierenden Verstärker (42) nachgeschalteten Teilerschaltung (38'), dessen einem Eingang das Ausgangssignal des subtrahierenden Verstärkers (42) direkt und dessen anderem Eingang dieses Ausgangssignal über einen Tiefpaßfilter (39') zugeführt ist, wobei der analogen Teilerschaltung (38') ein Spitzenwertdetektor (41') nachgeschaltet ist.

27. Vorrichtung nach Anspruch 22, dadurch gekennzeichnet, daß eine Schaltungsanordnung (26) zur Feststellung des Amplitudenverhältnisses des negativen Identifikationsimpulses zum Gleichstrompegel (-P/DC) vorgesehen ist, umfassend eine analoge Teilerschaltung (45), deren erstem Eingang das Detektorsignal (DS) über ein Hochpaßfilter (43) und dessen anderem Eingang das gleiche Detektorsignal (DS) über ein Tiefpaßfilter (44) zugeführt ist, mit einem der analogen Teilerschaltung (45) nachgeschalteten Spitzenwertdetektor (47).

28. Vorrichtung nach Anspruch 22, dadurch gekennzeichnet, daß eine Schaltung (27) zur Bestimmung der innerhalb einer vorgegebenen Dauer liegenden Zeitabstände (T) des Auftretens des negativen Identifikationsimpulses vorgesehen ist, umfassend ein von jedem negativen Identifikationsimpuls getriggertes monostabiles Zeitglied mit einer nachgeschalteten Auswerteschaltung, die bei überschreiten einer vorgegebenen Zeitdauer oder bei Auftreten mehrerer Impulse innerhalb der vorgegebenen Zeitdauer eine Fehleranzeige veranlaßt.

29. Vorrichtung nach einem der Ansprüche 22 bis 28, dadurch gekennzeichnet, daß die Ausgangssignale (-P/DC, -P/A; +P/A; -P/SG) der Spitzenwertdetektoren (47, 41, 41', 37), gegebenenfalls nach entsprechender Gewichtung, mit den Eingängen eines nachgeschalteten Summierverstärkers (43') verbunden sind, dessen Gesamtausgangssignal einer Vergleichsschaltung (45') zugeführt ist, deren anderem Eingang ein Sicherheits-Schwellwertsignal von einer Schwellwertschaltung (44') zugeführt ist und daß dem Vergleicher (45') eine logische Entscheidungsschaltung (46') nachgeschaltet ist, der neben dem endgültigen Identifikationssignal (IS) zusätzliche, eine einwandfreie Funktion des Gesamtsystems angebende Signale zugeführt sind.

30. Vorrichtung nach einem der Ansprüche 22 bis 29, dadurch gekennzeichnet, daß eine Zwischenspeicherschaltung (Sample and Hold 49) mit dem Ausgang des Summierverstärkers (43') verbunden ist, daß eine weitere mechanische Korrektureinrichtung vorgesehen ist, die einen Schrittmotor (62) umfaßt und dem Kartenhalter (3) eine Zusatzbewegung in der X-Y-Koordinatenebene verleiht zur Optimierung der Deckungsgleichheit zwischen Abbild und Aufzeichnung, wobei der Schrittmotor (62) von einem Vergleicher (60) angesteuert ist, deren beiden Eingängen von der Sample and Hold-Schaltung (49) jeweils ein erstes und ein zweites, nach der mechanischen Verstellung durch den Schrittmotor (62) sich ergebendes Ausgangssignal des Summierverstärkers (43') zugeführt sind.

31. Vorrichtung nach einem der Ansprüche 22 bis 30, dadurch gekennzeichnet, daß eine Lampenhelligkeits-Regelschaltung vorgesehen ist, die entsprechend dem Pegel des sich am Ausgang des Photodetektors ergebenden elektrischen Signals die Lampenhelligkeit nachführt.

32. Vorrichtung nach einem oder mehreren der Ansprüche 22 bis 31, dadurch gekennzeichnet, daß in den Strahlengang zwischen Abbild und Aufzeichnung optische Verzerrungsmittel (54) angeordnet sind, die sowohl bei der einmaligen Anfertigung der Aufzeichnung (1) als auch bei dem wiederholten Vergleich von Abbild mit Aufzeichnung das optische Strahlenbündel zur Vermeidung von Fälschungen entsprechend einem vorgegebenen optischen Code verzerren.

33. Vorrichtung nach Anspruch 32, dadurch gekennzeichnet, daß die optischen Verzerrermittel (54) eine teleskopartige Einrichtung mit Zylinderlinsen sind.

34. Vorrichtung nach einem der Ansprüche 22 bis 33, dadurch gekennzeichnet, daß zur Erhöhung der Identifizierungs-Sicherheit auf dem Aufzeichnungsträger eine Vielzahl identischer oder unterschiedlicher Fingerabdruck-Aufzeichnungen angeordnet sind zum praktisch gleichartigen Vergleich mit einem oder mehreren, unmittelbar gewonnenen Abbildern.

35. Vorrichtung nach einem der Ansprüche 22 bis 34, dadurch gekennzeichnet, daß in einem gemeinsamen Gehäuse (70) eine weitere Auswerteeinrichtung für den opto-elektrischen Vergleich eines weiteren, auf der Karte befindlichen Meistersymbols mit einem im Gerät gespeicherten Meistersymbol (Transparent 87) vorgesehen ist, die mindestens Teile der optischen und/oder elektronischen Ausrüstung des Mustervergleichsystems benutzt.

36. Vorrichtung nach Anspruch 35, dadurch gekennzeichnet, daß von einer gemeinsamen Lampe (71) ausgehend ein separates Strahlenbündel abgespalten und durch das das Meistersymbol tragende Transparent (87) geleitet ist, daß dem Transparent (87) ein Bewegungssucher (Scanner 89) nachgeschaltet ist und daß Umlenkeinrichtungen (91, 92) vorgesehen sind, die den durch das Transparent (87) geführten Strahlengang durch einen entsprechenden Kartenbereich auf ein separates Detektorsystem (93, 94) für die Auswertung des Meistersymbols werfen.

37. Vorrichtung nach Anspruch 36, dadurch gekennzeichnet, daß der Scanner (89) für die Identifizierung des Meistersymbols angetrieben ist von den motorischen Mitteln, die auch den Scanner (79) für den Mustervergleich antreiben.

38. Vorrichtung nach Anspruch 36, dadurch gekennzeichnet, daß zusätzliche Umlenkmittel vorgesehen sind, die das Strahlenbündel für den Meistersymbolvergleich durch den lediglich einen vorhandenen Scanner (79) leiten, der zu einem späteren Zeitpunkt dem Mustervergleich dient.

39. Vorrichtung nach einem der Ansprüche 35 bis 38, dadurch gekennzeichnet, daß eine Umschalteinrichtung (U1) vorgesehen ist, deren beide Eingänge mit dem, Ausgang des für den Mustervergleich zuständigen Detektorsystems (85) sowie mit dem Detektorsystem (93) für den Meistersymbolvergleich verbunden ist und deren Ausgangssignale nacheinander der einen gemeinsamen Auswertelogik zugeführt sind.

40. Vorrichtung nach einem der Ansprüche 22 bis 39, dadurch gekennzeichnet, daß den Antriebsmitteln für die Keilprismen bzw. den Keilprismen selbst Markierungen zugeordnet sind, daß die Markierungen abtastende optoelektrische Systeme (lichtemittierende Diode, Fototransistor) vorgesehen sind, die der Drehbewegung des jeweiligen Prismas entsprechende Ausgangsimpulsfolgen erzeugen und daß eine Phasenvergleichseinrichtung (101) vorgesehen ist, die ein auf die Abtastung des zentralen Bereichs der Abtastebene bezogenes Ausgangssignal erzeugt.

41. Vorrichtung nach Anspruch 40, dadurch gekennzeichnet, daß die Markierungen gebildet sind von synchron mit den Keilprismen umlaufenden, teilweise transparenten und teilweise opaken Scheiben.

42. Vorrichtung nach einem der Ansprüche 22 bis 41, dadurch gekennzeichnet, daß eine automatische Geschwindigkeitsregelung (104) vorgesehen ist derart, daß eines der Keilprismen sich mit konstanter Umdrehungsgeschwindigkeit und das andere mit geringfügig schnellerer Geschwindigkeit dreht.

43. Vorrichtung nach Anspruch 40, dadurch gekennzeichnet, daß das Ausgangssignal der Phasenvergleichseinrichtung (101) einer Solenoidsteuerung zugeführt ist, die ein drittes Keilprisma zur Vermeidung einer zentralen Abtastung in den Strahlengang einbringt.

44. Vorrichtung nach einem der Ansprüche 22 bis 43, dadurch gekennzeichnet, daß ein erstes Keilprisma (16a') des Scanners von Antriebsmitteln (langsamer Gleich- oder Wechselstrommotor; Schrittmotor) quasistationär angetrieben ist mit Bezug auf ein zweites, eine schnelle Drehbewegung durchführendes Keilprisma (16b'), derart, daß die Führung des abtastenden Strahlenbündels in der Abtastebene mit einer konstanten, auch den zentralen Bereich überstreichenden Geschwindigkeit kreisförmig erfolgt mit einer allmählichen, stetigen Verlagerung oder einer durch eine inkrementale Schrittbewegung erfolgenden Verlagerung längs einer durch die Bewegung des ersten Keilprismas (16a') vorgegebenen Kurve konstanten Radius.

45. Vorrichtung nach einem der Ansprüche 22 bis 44, dadurch gekennzeichnet, daß die Aufzeichnung (131) des Fingerabdrucks und die Darstellung (130) des Meistersymbols auf der Karte (134) an einer gemeinsamen Stelle und sich gegenseitig überlagernd angeordnet sind und daß das Prüfgerät eine optische Bank aufweist, die über einen gemeinsamen Strahlengang für die optische Erfassung und Vergleichsdurchführung, beginnend bei einem die Strahlenbündel für die Durchführung des Fingerabdruckvergleichs und des Meistersymbolvergleichs zusammenführenden Element (126) bis zum gemeinsamen Ausgangsdetektor (120) verfügt sowie über zunächst getrennte Strahlenbündel erzeugende und in zeitlicher Abfolge angesteuerte Beleuchtungseinrichtungen (128, 132) jeweils für den Fingerabdruck- und den Meistersymbolvergleich.

46. Vorrichtung nach Anspruch 45, dadurch gekennzeichnet, daß das die Strahlenbündel von den Beleuchtungseinrichtungen jeweils für den Fingerabdruckvergleich und dem Meistersymbolvergleich zusammenführende optische Element (126) ein bewegbarer Kippspiegel ist oder ein semitransparentes Element (beam splitter).

47. Vorrichtung nach Anspruch 45 oder 46, dadurch gekennzeichnet, daß die Beleuchtungsmittel der Beleuchtungseinrichtung (128, 132) lichtemittierende Dioden (LED 136, 139) sind.

48. Vorrichtung nach einem der Ansprüche 22 bis 47, dadurch gekennzeichnet, daß in der Rückführleitung (138) von der elektronischen Auswerteschaltung (137) zu den Ansteuerschaltungen (135) der Beleuchtungsmittel zur Helligkeitsregelung eine Sensorschaltung (141) geschaltet ist, die auf einen Fälschungsversuch zurückzuführende, abrupte, Helligkeitsschwankungen ausgleichende Spannungsstöße in der Rückführleitung erfaßt und zur Fehlererkennung auswertet.

49. Vorrichtung nach einem der Ansprüche 22 bis 48, dadurch gekennzeichnet, daß zur Fälschungssicherheit das im Gerät gespeicherte Meistersymbol in einem vorgegebenen, nach außen nicht erkennbaren Verdrehwinkel (Absolutverdrehwinkel) zu einer Nullposition angeordnet ist, auf die, etwa bei gewaltsamem Öffnen des Geräts das Meistersymbol rückführbar ist.

50. Vorrichtung nach einem der Ansprüche 22 bis 49, dadurch gekennzeichnet, daß zur Fälschungssicherheit das Meistersymbol aus einander überlagerten Teilsymbolbereichen besteht, die jeweils zueinander vorgegebene einstellbare Relativwinkel - bezogen auf eine Nullposition - zusätzlich zur Absolutwinkelposition einnehmen, wobei die Relativwinkel ebenfalls bei gewaltsamer Geräteöffnung in die Nullposition rückführbar sind.

51. Vorrichtung nach einem der Ansprüche 22 bis 50, dadurch gekennzeichnet, daß die Karte die überlagerte Darstellung von zwei oder mehr Fingerabdrücken einer oder mehrerer Personen aufweist, die Kartenträger sind.

52. Vorrichtung nach einem oder mehreren der Ansprüche 22 bis 51, dadurch gekennzeichnet, daß zur Erhöhung der Unterscheidungsmerkmale für die Diskriminierung die Beleuchtung mit monochromatischem oder polychromatischem Licht erfolgt und auf ein relativ monochromatisches Lichtfrequenzband ansprechende Detektoren vorgesehen sind.

53. Vorrichtung nach einem oder mehreren der Ansprüche 22 bis 52, dadurch gekennzeichnet, daß das Abbild des Fingerabdrucks oder des Meistersymbols anstelle auf der Karte analog oder digital im Gerät gespeichert und bei Angabe eines Trägercodes an die Vergleichsstelle transportierbar ist.

54. Vorrichtung nach Anspruch 53, dadurch gekennzeichnet, daß die Muster im Gerät analog oder digital gespeichert und in analoger Form zum optischen Vergleich zugeführt sind.

55. Vorrichtung nach einem der Ansprüche 22 bis 54, dadurch gekennzeichnet, daß der lichterzeugende Bereich der Beleuchtungseinrichtung (Lampenwendel) in der optischen Achse liegend derart fokussiert ist, daß bei den Suchbewegungen der Keilprismen (16a, 16b) eine optische Positionsverlagerung bezüglich des Fotodetektors (12) vermieden ist.

56. Vorrichtung nach einem der Ansprüche 45 bis 47, dadurch gekennzeichnet, daß die gemeinsamen Elemente der optischen Bank, die sich an das die Strahlenbündel von den Beleuchtungseinrichtungen zusammenführende optische Element (126) anschließen, eine erste Linse (125) und darauf folgend den Scanner (124) mit den beiden sich drehenden Keilprismen umfassen, an den sich eine weitere Linse (123) anschließt.

57. Vorrichtung nach Anspruch 56, dadurch gekennzeichnet, daß sich die optische Bank nach der auf den Scanner folgenden weiteren Linse (123) vervollständigt durch den die Identifizierungskarte mit Meistersymbol und Fingerabdruck aufnehmenden Kartenhalter (122) und einer sich an diesen anschließenden, dem Ausgangsdetektor (120) unmittelbar vorgeschalteten Linse (121).

**Claims**

1. A method for carrying out a comparison between patterns of fingerprints with a recorded image of the same fingerprint pattern arranged on a card, an identity card, a credit card, a key-like card element, an identification document or the like, whereby the fingerprint pattern to be compard with the recorded image is obtained in the form of a fingerprint pattern image by application of a finger upon a base or is a recorded image itself and whereby the patterns are optically compared by simultaneously performing a search- or scanning movement and the electrical value obtained by photoelectric conversion is evaluated, an identification pulse resulting during the time behaviour of the electrical value (detector signal) is subjected to test criteria and the result is compared with an adjustable threshold value, wherein a GOOD indication issues if the threshold value is exceeded, characterized in that the fingerprint pattern (image or recorded image) to be compared with the recorded image is subjected to a scanning movement by means of the rotation of two wedge prisms arranged one after the other and driven at different speed from one another and that the identification pulse (14, 15a, 15b) resulting from that comparison test is subjected additionally to the determination of the percentage-wise correlation of the amplitude of the identification pulse with the fundamental signal at least two further test criteria with other electric values contained in the detector signal or with other data, namely a comparison test of the amplitude of the negative identification pulse as compared with the amplitude of a higher-frequency interference signal (-P/A), a test of the amplitude of positive pulses accompanying the negative identification pulse with the average value of the higher-frequency interference signal (+P/A), a comparison of the amplitude of the negative identification pulse with the height of the direct-current level (-P/DC) present in the detector signal, a measurement of the time interval (T) of the repeated appearance of the negative identification pulse and the like and in that the results of these test criteria are then compared with a given safety threshold value.

2. A method according to claim 1, characterized in that the image of the fingerprint obtained by means of reflection at a prism (5) is subjected to a spiral scanning movement in the plane of the recorded image, by means of the rotation of the two wedge prisms associated with one another, in such a manner that upon each occurrence of identical congruence of the image with the recorded image, a distinct, different optical energy status is attained.

3. A method according to claim 1 or 2, characterized in that the recorded image of the fingerprint on the card and the recorded image of a master symbol are disposed at the same location and being superimposed upon one another, the master symbol being compard with a master symbol sample disposed in the test appliance, this comparison being performed at a time interval relative to the comparison of the fingerprints.

4. A method according to claim 3, characterized in that the superimposed representation of the fingerprint on the one hand and of a master symbol on the other on the identification carrier (card 2, 134) is simultaneously optically irradiated and detected, but, the comparison with the fingerprint of the person in possession of the identification carrier or with the stored master symbol is performed in a sequence over time.

5. A method, according to one of the claims 1 through 4, characterized in that a recorded fingerprint image or a fingerprint image directly obtained is compared with at least two, preferably a multiplicity of identical recorded images in order to increase the reliability of identification.

6. A method according to claim 5, characterized in that the multiple comparison of an image or of a recorded image is performed parallel and at substantially the same time (during a scanning cycle in the region of the recorded representation).

7. A method according to one of the claims 1 through 6, characterized in that a multiplicity of different recorded fingerprint images is compared in the region of the recorded images in sequence over time with different fingerprint images, obtained directly at the instant of comparison.

8. A method according to one of the claims 1 through 7, characterized in that with the onset of the comparative measurement, the card carrier (3) supporting the carrier (card 2) of the recorded images is subjected to an additional mechanical shifting movement, preferably a rotary movement, in order to optimize the result of comparison by means of geometrical correction of the identity of congruence.

9. A method according to claim 8, characterized in that a first value of the comparing measurement result is stored in an intermediate fashion and is compared with a second value appearing subsequent to the mechanical, corrective shifting movement of the card holder.

10. A method according to one of the claims 1 through 9, characterized in that by means of varying the lamp brightness, a constant level of the electromagnetic radiation energy (light) required for the comparison is maintained.

11. A method according to one of the claims 1 through 10, characterized in that by means of the introduction of an optical distortion device (lenses, telescope with cylindrical lenses) into the beam path of the optical comparison device, the path of the beam is distorted in the manner of a specialized optical code, to protect against counterfeiting, both during the production of the recorded patterns and during the measurement process.

12. A method according to claim 4, characterized by first triggering a lamp (132) for the performance of a master symbol comparison so that a beam carrying an image of the master symbol is carried from a given location to a common optical beam path and to the output detector (120), and finally, after evaluation of an identification pulse resulting from the master symbol comparison, a lamp (128) for the fingerprint comparison is triggered and the beam latently carrying an image of the fingerprint is carried at the same location along the common optical path to the output detector.

13. A method according to claim 1, characterized in that a phase displacement of said wedge prisms of a scanner which rotate during the scanning movement at a slightly different speed from one another is detected by means of optical sensors and converted into associated rectangular pulse trains, in order to determine a given period of time during one complete scanning cycle in which the scanning is effected at a low linear speed substantially in the central region of a scanning plane.

14. A method according to claim 13, characterized in that upon reaching a central region of the scanning plane on the part of the optical beam scanning the patterns, the identification process is interrupted.

15. A method according to claim 14, characterized in that upon reaching the central area in the scanning cycle, a further optical element (third wedge prism) is introduced which deflects the beam path into the rim of the scanning area.

16. A method according to claim 15, characterized in that a solenoid transporting the third wedge prism is actuated by means of the output of a phase comparator (101).

17. A method according to claim 15 or 16, characterized in that the third wedge prism is introducted into the beam path only whenever the result of the test criterion identification pulse over fundamental oscillation (P/SG) is smaller than the result of the test criterion identification pulse over direct-current level (P/DC).

18. A method according to one of the claims 1 through 12, characterized in that one complete scanning cycle of the searching movement is terminated at such time as said wedge prisms of a scanner newly attain a geometric balance, wherein the time interval determined by the basic rotation speed, between the identification pulses of each identification area appearing twice during one complete scanning cycle is utilized as a further test criterion for the accuracy of the GOOD indication.

19. A method according to claim 18, characterized in that at least three sequential identification pulses in the non-central scanning area are evaluated as the requirement for a further test criterion within a given time interval.

20. A method according to one or more of the claims 1 through 19, characterized in that the rotational search movement of the card holder (76) is adapted such that a renewed incremental rotation movement occurs each time one identification area (105a, 105b) has been completed within one total scanning cycle, that is, the renewed incremental rotation movement occurs twice during one scanning cycle.

21. A method according to one of the claims 1 through 12, characterized in that the search movement of the optical light beam deflected by the wedge prisms is effected such that the rotational movement of a first wedge prism (16a') forming the scanner is held quasistationary with respect to the rapid constant rotational movement of the second wedge prism (16b'), in such a manner that a variation of the deflection angle which is noticable with the respect to the result of scanning is effected by means of a slow rotational movement, which is either steady or incrementally, on the part of the first wedge prism only after the second wedge prism has executed at least one complete, circular deflection procedure, also overlapping the central scanning area, upon the light beam, having a constant linear speed in the associated partial scanning area.

22. A device for carrying out a comparison of fingerprint patterns with a first recorded image of the same fingerprint pattern located on a card, an identity card, a ccredit card, a key-like card, an identification document or the like comprising a light source, an optical system for the comparision of a fingerprint pattern image obtained directly by the application of a finger upon a base or a second recorded image of the same with a first recorded image of the fingerprint pattern, a scanner for performing a search movement, a light-electric receiver (detector) and an electric evaluation means connected therewith by which the identification pulse contained in the detector signal and obtained by identity of the respective patterns is subjected test criteria and the result is compared with an adjustable threshold value and a GOOD indication is issued if the threshold value is exceeded, for performing the method according one of the claims 1 through 21, characterized in that the optical scanner (9) includes first and second spaced wedge prisms (16a, 16b), driven by motor at given different speeds performing a rotational movement and in that additionally to a first test criterion circuit block (23) for the determination of the percentage-wise correlation ratio of the amplitude of the identification pulse to the fundamental signal (fundamental oscillation) at least two further circuit blocks (24, 25, 26, 27, 28) are provided for the comparison testing of the identification pulse (14, 15a, 15b) resulting in the case of identity with further electrical variables contained in the detector signal or the further data, namely a sinus fundamental oscillation signal, a high-frequency harmonic oscillation signal, a direct-voltage signal, a reference measurement of the time interval T related to the respective appearances of the identification pulse and the like and in that the output signals of each block (23, 24, 25, 26, 27, 28) carrying out comparison criteria are connected with a common summing amplifier (43'), to which a comparator (45') is connected for the purpose of comparing of the total output signal (identification-presignal) with a given safety threshold value.

23. A device according to claim 22, characterized in that the wedge prisms (16a, 16b) of the scanner (9) are rotationally driven at relatively slightly different speed.

24. A device according to claim 22, characterized in that the circuit for determining the percentage-wise correlation ratio includes a first subtracting amplifier (34) having two imputs, whose first (negative) input is carried to an unaltered detector output signal (DS) and whose other input is connected with an output (fundamental oscillation signal SG) of a phase-corrected low-pass filter (32, 33), whose input is likewise supplied with the detector output signal, further that the output of the subtracting amplifier (34) is connected with one input of an analog divider circuit (35), whose other input is newly supplied with the fundamental oscillation (SG) and that the output of the divider circuit, if necessary after amplification, is connected with a peak detector (37) which for a predetermined period of time, in the manner of a memory, holds at a fixed value of a maximum amplitude value which may occur.

25. A device according to claim 22, characterized in that a circuit block (25) is provided for determining the ratio between the amplitude of the negative peak pulse and the average value of the high-frequency interference variable (-P/A), comprising an analog divider circuit (38), whose first input is supplied directly with the output signal of the subtracting amplifier (34) during the ascertainment of the percentage-wise correlation ratio, and whose other input is supplied with this signal by way of a low-pass filter (39), with a further peak detector (41) being switched subsequent to the divider circuit (38).

26. A device according to claim 22, characterized in that a circuit block (24) is provided for determining the value of the ratio between the amplitude of positive supplementary pulses appearing adjacent to the negative identification pulse to the average value of the highfrequency interference signal (+P/A), comprising a further subtracting amplifier (42), to whose positive input the detector signal is supplied and to whose other input the fundamental oscillation signal (SG) is supplied, having a divider circuit (38') switched subsequent to the subtracting amplifier (42), the first input of which divider circuit is supplied directly with the output signal of the subtracting amplifier (42) and whose other input is supplied with this output by way of a low-pass filter (39'), the analog divider circuit (38') having a peak detector (41') switched subsequent to it.

27. A device according to claim 22, characterized in that a circuit (26) is provided for ascertaining the amplitude ratio of the negative identification pulse to the direct-current level (-P/DC), including an analog divider circuit, to the first input of which the detector signal (DS) is supplied by way of a high-pass filter (43) and to the other input of which the same detector signal (DS) is supplied by way of a low-pass filter (44), with a peak detector (47) switched subsequent to the analog divider circuit (45).

28. A device according to claim 22, characterized in that a dircuit (27) is provided for determining the time intervals (T), located within a predetermined period, between the appearances of the negative identification pulses, including a monostable timing element, triggered by each negative identification pulse, having a subsequent evaluator circuit, which upon the exceeding of a predetermined period of time or upon the appearance of a multiplicity of pulses within the predetermined period of time, issues an error indication.

29. A device according to one of the claims 22 through 28, characterized in that the output signals (-P/DC; -P/A; +P/A; -P/SG) of the peak detectors (47, 41, 41', 37) after corresponding weighting as necessary, are connected with the inputs of a subsequent summing amplifier (43'), whose total output signal is supplied to a comparator circuit (45') to the other input of which a safety threshold signal is supplied by a threshold circuit (44'), and that switched subsequent to the comparator (45') is a logical decision circuit (46') which is supplied in addition to the final identification signal (IS) with supplementary signals indicating satisfactory functioning of the total system.

30. A device according to one of the claims 22 through 29, characterized in that an intermediate memory circuit (Sample and Hold 49) is connected with the output of the summing amplifier (43'), that a further mechanical corrective device is provided which includes a stepping motor (62) and imparts to the card holder (3) a supplementary movement in the X-Y coordinate plane in order to optimize the identity of congruence between the image and the recorded image, wherein the stepping motor (62) is triggered by a comparator (60) to the two inputs of which, respectively, a first and a second output signal of the summing amplifier (43'), resulting after the mechanical adjustment effected by the stepping motor (62) are delivered from the Sample and Hold circuit (49).

31. A device according to one of the claims 22 through 30, characterized in that a closed-loop lamp brightness circuit is provided, which follows up the lamp brightness in accordance with the level of the electrical signal produced at the output of the photo detector.

32. A device according to one or more of the claims 22 through 31, characterized in that optical distortion means (54) are disposed in the beam path between the image and the recorded image, these means distorting the optical beam in accordance with a predetermined optical code, for the purpose of preventing counterfeiting, both during the one-time preparation of the recorded image (1) and during the repeated comparison of the image with the recorded image.

33. A device according to claim 32, characterized in that the optical distortion means (54) are a telescope-like device having cylindrical lenses.

34. A device according to one of the claims 22 through 33, characterized in that in order to increase the accuracy of identification, a multiplicity of identical or different recorded images of fingerprints are disposed on the carrier of the purpose of practically simultaneous comparison with on ore more images of the fingerprints obtained directly at this time.

35. A device according to one of the claims 22 through 34, characterized in that a further evaluation device is provided in a common housing (70) for the opto-electrical comparison of a further master symbol, located on the card, with a master symbol (transparency 87) stored in the appliance, this further evaluation device utilizing at least parts of the optical and/or electronic equipment of the pattern comparison system.

36. A device according to claim 35, characterized in that, originating from a common lamp (71), a separate beam is split off and directed through the transparency (87) carrying the master symbol, that a moving scanner (89) is switched subsequent to the transparency (87), and that deflection devices (91, 92) are provided which project the beam path directed through the transparency (87) onto a separate detector system (93, 94), through a corresponding region of the card, for the purpose of evaluating the master symbol.

37. A device according to claim 36, characterized in that the scanner (89) for the identification of the master symbol is driven by motor means which also drives the scanner (79) intended for the comparison of patterns.

38. A device according to claim 36, characterized in that supplementary deflection means are provided, which direct the beam intended for the master symbol comparison through the single existing scanner (79) which at a later time serves the purpose of comparing the patterns.

39. A device according to one of the claims 35 through 38, characterized in that a switchover device (U1) is provided whose two inputs are connected with an output of the detector system (85) responsible for the pattern comparison and with a detector system (93) for the master symbol comparison and whose output signals are carried in sequence to the one, common evaluation logic.

40. A device according to one of the claims 22 through 39, characterized in that markings are associated with the drive means for the wedge prisms, or with the wedge prisms themselves, that opto-electrical systems (light-emitting diode, photo transistor) scanning the markings are provided, which generate output pulse trains corresponding to the rotary movement of the respective prism, and that a phase comparison device (101) is provided which generates an output signal related to the scanning of the central area of the scanning plane.

41. A device according to 40, characterized in that the markings are embodied by discs, which are partially transparent and partially opaque, revolving in synchronism with the wedge prisms.

42. A device according to one of the claims 22 through 41, characterized in that a closed-loop automatic speed control means (104) is provided in such a manner that one of the wedge prisms rotates with a constant rotational speed and the other wedge prism rotates with a slightly faster speed.

43. A device according to claim 40, characterized in that the output signal of the phase comparison device (101) is delivered to a solenoid control means, which introduces a third wedge prism into the beam path in order to avoid a central scanning operation.

44. A device according to one of the claims 22 through 43, characterized in that a first wedge prism (16a') of the scanner is driven by drive means (slow DC- or AC-motor, stepping motor) in a quasi-stationary manner with respect to said second wedge prism (16b') executing a rapid rotational movement, in such a manner that the guidance of the scanning beam is effected in a circular manner in the scanning plane with a constant speed which also passes over the central area, with a gradual, steady shifting or with a shifting effected by means of an incremental stepping movement, along a curve of constant radius predetermined by the movement of the first wedge prism (16a').

45. A device according to one of the claims 22 through 44, characterized in that the recorded image (131) of the fingerprint and the representation (130) of the master symbol on the card (134) are disposed at a common location and are superimposed upon one another and that the test appliance has an optical bench having a common beam path for the optical detection and performance of coparison, beginning with an element (126) combining the optical beam for the performance of the fingerprint comparison and the comparison of the master symbol up to the common output detector (120) and further has illumination devices (128, 132) generating beams which are at first separated and said illumination devices being triggered in a sequence over time, these illumination devices being intended respectively for the fingerprint comparison and the master symbol comparison.

46. A device according to claim 45, characterized in that the optical element (126) combining the beams from the illumination device respectively for the fingerprint comparison and the master symbol comparison is a movable tilting mirror or a semitransparent element (beam splitter).

47. A device according to claim 45 or 46, characterized in that the illumination means of the illumination device (128, 132) are light-emitting diodes (LED 136, 139).

48. A device according to one of the claims 22 through 47, characterized in that a sensor circuit (141) is switched in a feedback line (138) from the electronic evaluation circuit (137) to a trigger circuit (135) of the illumination means for brightness regulation, which sensor circuit detects abrupt voltage surges in the feedback line, caused by a counterfeiting attempt and compensating for brightness fluctuations, and evaluates them for the purpose of error recognition.

49. A device according to one of the claims 22 through 48, characterized in that for the purpose of security against counterfeiting the master symbol stored in the appliance is disposed at a predetermined rotation angle (absolute rotational angle) relative to a zero position, this angle not being recognizable from the outside, to which zero position the master symbol can be returned in case of such an event as an attempt to open the appliance by force.

50. A device according to one of the claims 22 through 49, characterized in that for the purpose of security against counterfeiting the master symbol comprises partial symbol areas superimposed upon one another, each assuming relative angles, adjustable in a predetermined manner, relative to one another and to a zero position, in addition to the absolute angle position, the relative angles also being capable of being returned to the zero position in case of an attempt to open the appliance by force.

51. A device according to one of the claims 22 through 50, characterized in that the card has the superimposed representation of two or more fingerprints of one or more persons who are carriers of the card.

52. A device according to one or more of the claims 22 through 51, characterized in that for the purpose of increasing the distinguishing characteristics for discriminating purposes, the illumination is effected with monochromatic or polychromatic light, and detectors are provided which respond to a relatively monochromatic light frequency band.

53. A device according to one ore more of the claims 22 through 52, characterized in that the image of the fingerprint or of the master symbol, instead of being placed on the card, is stored in either analog or digital fashion in the appliance and is transportable to the location for comparison when a carrier code is furnished.

54. A device according to claim 53, characterized in that the patterns are stored in memory in the appliance in analog or digital fashion and are furnished for comparison purposes in an analog fashion.

55. A device according to one of the claims 22 through 54, characterized in that the light-generating area of the light source (lamp spiral), located in the optical axis, is focused in such a manner that upon the scanning movements of the wedge prisms (16a, 16b) an optical shift in position with respect to the photodetector (12) is avoided.

56. A device according to one of the claims 45 through 47, characterized in that the common elements of the optical bench, arranged after the optical element (126) combining the optical beams of the illumination devices include a first lens (125) preceding the scanner (124) which includes the rotating wedge prisms and which is followed by a further lens (123).

57. A device according to claim 56, characterized in that for completing the optical bench subsequent to the further lens (123) which is preceded by the scanner the cardholder (122) is arranged carrying the identification card with master symbol and fingerprint and in that a further lens (121) is provided directly preceding the output detector (120).

## Revendications

1. Procédé pour réaliser une comparaison d'échantillon d'empreinte digitale avec un enregistrement de ce même échantillon d'empreinte digitale, se trouvant sur une carte, une carte d'identité, une carte de crédit, une partie de carte analogue à une clé, un document d'identification, etc..., l'échantillon d'empreinte digitale à comparer avec l'enregistrement étant obtenu pour servir d'image de l'échantillon d'empreinte digitale par application d'un doigt sur un support, ou bien étant lui-même un enregistrement, et les échantillons étant comparés optiquement en procédant simultanément à un déplacement de recherche ou de balayage, et une grandeur électrique obtenue après conversion photo-électrique étant exploitée, une impulsion d'identification obtenue, en cas d'identité des échantillons, au cours du déroulement dans le temps de la grandeur électrique (signal détecteur) étant soumise à des critères de contrôle et le résultat étant comparé avec une valeur de seuil réglable, auquel cas, une signalisation "BON" apparaît lors du dépassement de la valeur de seuil, procédé caractérisé en ce que l'échantillon d'empreinte digitale (image ou enregistrement) à comparer avec l'enregistrement, est soumis à un déplacement de recherche obtenu par le déplacement différentiel de deux prismes en forme de coins disposés l'un derrière l'autre et entraînés en rotation avec une vitesse différentielle prédéfinie, et que l'impulsion d'identification (14, 15a, 15b) résultant du contrôle de comparaison, en dehors de la détermination du rapport de corrélation en pourcentage de l'amplitude de l'impulsion d'identification par rapport au signal de base, est soumise à au moins deux autres critères de contrôle avec d'autres grandeurs électriques ou bien d'autres données contenues dans le signal détecteur, notamment à une vérification par comparaison de l'amplitude de l'impulsion négative d'identification avec l'amplitude d'un signal parasite de plus haute fréquence (-P/A) à une vérification de l'amplitude des impulsions positives accompagnant l'impulsion négative d'identification, avec la valeur moyenne du signal parasite haute fréquence (+P/A), à une comparaison de l'amplitude de l'impulsion négative d'identification avec la hauteur du niveau du courant continu présent dans le signal détecteur (-P/DC), à une mesure de l'intervalle de temps (T) de l'apparition répétée de l'impulsion négative d'identification, etc..., et que les résultats de ces vérifications sont ensuite comparés avec un seuil de sécurité prédéfini.

2. Procédé selon la revendication 1, caractérisé en ce que l'image, obtenue par réflexion sur un prisme (5), de l'échantillon d'empreinte digitale, est soumise, par rotation des deux prismes en forme de coins associés l'un à l'autre, à un déplacement de recherche en forme de spirales dans le plan de l'enregistrement, de sorte qu'à chaque apparition d'une identité entre l'image et l'enregistrement, on obtienne l'état d'énergie optique, différent et se détachant nettement, qui se traduit par l'impulsion d'identification.

3. Procédé selon la revendication 1 ou 2, caractérisé en ce qu'à l'enregistrement de l'empreinte digitale sur la carte, est associé, par superposition, au même emplacement, l'enregistrement d'un symbole-maître, qui est comparé périodiquement à l'occasion de la comparaison des empreintes digitales avec une image de symbole-maître disposée dans un appareil de contrôle.

4. Procédé selon la revendication 3, caractérisé en ce que la représentation superposée de l'empreinte digitale d'une part, et d'un symbole-maître d'autre part, sur le support d'enregistrement (cartes 2, 134) est simultanément examinée optiquement par transparence et détectée, tandis que la comparaison avec l'échantillon d'empreinte digitale de la personne portant le support d'identification ou avec le symbole-maître mémorisé, s'effectue en succession dans le temps.

5. Procédé selon une des revendications 1 à 4, caractérisé en ce qu'un enregistrement d'empreinte digitale ou bien une image d'empreinte digitale obtenue directement, est comparé avec au moins deux enregistrements identiques, et de préférence avec un plus grand nombre d'enregistrements identiques, pour augmenter la sécurité d'identification.

6. Procédé selon la revendication 5, caractérisé en ce que la comparaison multiple d'une image ou d'un enregistrement, s'effectue en parallèle et pratiquement en même temps (lors d'un cycle de balayage dans la zone d'enregistrement).

7. Procédé selon une des revendications 1 à 6, caractérisé en ce que plusieurs enregistrements différents d'empreintes digitales sont comparés successivement dans le temps dans la zone d'enregistrement, avec des images d'empreintes digitales différentes, mais toutefois obtenues dans chaque cas immédiatement à l'instant de la comparaison.

8. Procédé selon une des revendications 1 à 7, caractérisé en ce que, au début de la mesure de comparaison, le support de cartes (3) où sont logés les supports d'enregistrements (cartes 2, 134) est soumis à un déplacement mécanique supplémentaire, de préférence à un déplacement en rotation, pour optimaliser le résultat de comparaison par correction géométrique de la coïncidence de recouvrement respectivement obtenue.

9. Procédé selon la revendication 8, caractérisé en ce qu'une première valeur du résultat de mesures comparatives est mémorisé de façon intermédiaire et est comparée avec une deuxième valeur apparaissant après le déplacement mécanique de correction du support de cartes.

10. Procédé selon une des revendications 1 à 9, caractérisé en ce que par modification de la brillance des lampes, on maintient à un niveau constant de l'énergie électro-magnétique de rayonnement (lumière) utilisée pour la comparaison.

11. Procédé selon une des revendications 1 à 10, caractérisé en ce que par introduction d'un dispositif optique de distorsion (lentilles, télescope avec des lentilles cylindriques) sur le trajet du faisceau du dispositif optique de comparaison, aussi bien lors de la réalisation de l'échantillon enregistré qu'également lors du processus de mesure, on provoque une distorsion du faisceau correspondant à un code optique spécial de protection contre les falsifications.

12. Procédé selon la revendication 4, caractérisé en ce qu'on commande tout d'abord un dispositif d'éclairage (132) pour effectuer la comparaison du symbole-maître, qu'un faisceau portant une image du symbole-maître est guidé d'un emplacement prédéfini sur le trajet du faisceau optique commun jusqu'à un détecteur de sortie (120) et qu'ensuite, après exploitation de l'impulsion d'identification provenant de la comparaison du symbole-maître, un dispositif d'éclairement (128) pour la comparaison de l'empreinte digitale est commandé et un faisceau portant une image latente de cette empreinte digitale, est guidé au même emplacement le long du trajet commun jusqu'au détecteur de sortie.

13. Procédé selon la revendication 1, caractérisé en ce que le décalage de phases des prismes en forme de coins tournant lors du déplacement de recherche avec des vitesses légèrement différentes, est détecté au moyen de détecteurs optiques et converti en successions d'impulsions rectangulaires associées, pour déterminer un laps de temps prédéfini pendant un cycle de balayage complet, laps de temps pendant lequel le balayage s'effectue essentiellement dans la zone centrale du plan de balayage, avec une vitesse linéaire réduite.

14. Procédé selon la revendication 13, caractérisé en ce que lorsque le faisceau optique balayant l'échantillon atteint une zone centrale du plan de balayage, le processus d'identification est interrompu.

15. Procédé selon la revendication 14, caractérisé en ce que, lorsque la zone centrale est atteinte dans le cycle de balayage, on introduit un autre élément optique (troisième prisme en forme de coin) déviant le faisceau dans la zone de bordure du balayage.

16. Procédé selon la revendication 15, caractérisé en ce qu'un solénoïde transportant le troisième prisme en forme de coin, est actionné par le signal de sortie d'un comparateur de phases (101).

17. Procédé selon la revendication 15 ou 16, caractérisé en ce que le troisième prisme en forme de coin n'est introduit dans le trajet du faisceau que lorsque le résultat du critère de contrôle de l'impulsion d'identification par l'oscillation de base (P/SG) est inférieur au résultat du critère de contrôle de l'impulsion d'identification par le niveau du courant continu (P/DC).

18. Procédé selon une des revendications 1 à 12, caractérisé en ce qu'un cycle complet de balayage du déplacement de recherche, est terminé lorsque les prismes en forme de coins (16a, 16b) atteignent à nouveau un étage géomètrique identique, l'intervalle dans le temps déterminé par la vitesse des révolution de base des impulsions d'identification (14) de chaque zone d'identification (105a, 105b) apparaissant deux fois pendant un cycle complet de balayage, étant utilisé comme critère de contrôle supplémentaire pour la rectitude de la signalisation "BON".

19. Procédé selon la revendication 18, caractérisé en ce qu'au moins trois impulsions d'identification successives, dans la partie non centrale du balayage, sont exploitées en tant que la nécessité d'un autre critère de contrôle dans l'intervalle de temps prédéfini.

20. Procédé selon une ou plusieurs des revendications 1 à 19, caractérisé en ce que le déplacement de recherche par rotation du support de cartes (67) est ajusté de façon qu'un nouveau déplacement incrémental en rotation s'effectue lorsqu'une zone d'identification (105a, 105b) à l'intérieur d'un cycle complet de balayage, a pris fin, c'est-à-dire s'est présenté deux fois au cours d'un cycle de balayage.

21. Procédé selon une des revendications 1 à 12, caractérisé en ce que le déplacement de recherche du faisceau optique dévié par les prismes en forme de coins, s'effectue de façon que le déplacement en rotation d'un premier prisme en forme de coin (16a') est maintenu quasistationnaire par rapport au déplacement rapide constsant en rotation du second prisme en forme de coin (16b'), de façon qu'une modification notable par rapport au résultat de balayage de l'angle de déviation, ne s'effectue par un déplacement en rotation constant de longue durée ou bien s'effectuant incrémentalement pas à pas, du premier prisme en forme de coin (16a') que lorsque le second prisme en forme de coin (16b') a exercé au moins sur le faisceau un processus complet de déviation circulaire en recouvrant en même temps la zone centrale de balayage avec, dans la zone partielle de balayage considérée, une vitesse linéaire constante.

22. Dispositif pour la mise en oeuvre d'une comparaison d'échantillons d'empreintes digitales avec un premier enregistrement du même échantillon d'empreinte digitale se trouvant sur une carte, une carte d'identité, une carte de crédit, une partie de carte analogue à une clé, un document d'identification, etc..., avec un dispositif d'éclairage, un système optique pour la comparaison de l'image de l'échantillon d'empreinte digitale résultant directement de l'application d'un doigt sur un support, ou bien d'un second enregistrement de cet échantillon, avec un premier enregistrement de l'échantillon d'empreinte digitale, un explorateur de déplacement (scanner) pour l'accomplissement d'un déplacement de recherche, un récepteur opto-électrique (détecteur) ainsi qu'avec un dispositif électrique d'exploitation branché à la suite de ce détecteur, grâce auquel l'impulsion d'identification contenue dans le signal détecteur, et résultant de l'identité de l'échantillon considéré, est soumise à des critères de contrôle, tandis que le résultat est comparé avec une valeur de seuil réglable, avec une signalisation "BON" lors du dépassement de cette valeur de seuil pour mettre en oeuvre le procédé, selon une des revendications 1 à 21, dispositif caractérisé en ce que l'explorateur de déplacement (scanner 9) est constitué de deux prismes en forme de coins (16a, 16b) disposés à une certaine distance l'un derrière l'autre, qui sont entraînés par un moteur avec une vitesse différentielle prédéfinie pour accomplir un déplacement en rotation et que, en supplément à un premier bloc de commutation (23) de critère de contrôle, qui détecte le rapport de corrélation en pourcent de l'amplitude de l'impulsion d'identification par rapport au signal de base (oscillation de base), il est prévu au moins deux autres blocs de commutation (24, 25, 26, 27, 28) pour le contrôle par comparaison de l'impulsion d'identification (14, 15a, 15b) résultant de l'identité, avec d'autres grandeurs électriques ou bien d'autres données contenues dans le signal détecteur, à savoir avec un signal sinusoïdal d'oscillation de base, un signal d'oscillation harmonique à haute fréquence, un signal de tension continue, une mesure de référence du laps de temps T par rapport à l'apparition respective de l'impulsion d'identification, etc..., tandis que les signaux de sortie de l'ensemble des blocs (23, 24, 25, 26, 27, 28) effectuant des critères de comparaison, sont appliqués à un amplificateur totalisateur commun (43') à la suite duquel est branché un comparateur (45') qui compare le signal total de sortie (signal préalable d'identification) avec une valeur de seuil de sécurité prédéfinie.

23. Dispositif selon la revendication 22, caractérisé en ce que les prismes en forme de coins (16a, 16b) du scanner (9) sont entraînés en rotation avec une vitesse ne différant que de façon relativement réduite.

24. Dispositif selon la revendication 22, caractérisé en ce que le dispositif de branchement pour la détermination du rapport de corrélation en pourcent, comprend un premier amplificateur de soustraction (34), à une entrée (négative) duquel est appliqué le signal de sortie non modifié du détecteur, et dont l'autre entrée est reliée à la sortie (signal SG d'oscillation de base) d'un filtre passe-bas corrigé en phases (32, 33) à l'entrée duquel est également appliqué le signal détecteur, la sortie de l'amplificateur de soustraction (34) étant reliée à une entrée d'un circuit analogique diviseur (35) à l'autre entrée duquel est à nouveau appliqué le signal (SG) de l'oscillation de base, tandis que la sortie du circuit diviseur, éventuellement après amplification, est reliée à un détecteur de valeur de pointe (35) qui retient à la façon d'une mémoire, pour un laps de temps prédéfini, une valeur d'amplitude maximale apparaissant.

25. Dispositif selon la revendication 22, caractérisé en ce qu'un bloc de commutation (25) est prévu pour déterminer le rapport entre l'amplitude de l'impulsion négative de pointe et la valeur moyenne de la grandeur parasite à haute fréquence (-P/A), ce bloc étant constitué d'un circuit analogique diviseur (38) à une entrée duquel est appliqué directement le signal de sortie de l'amplificateur de soustraction (34) lors de la détermination du rapport de corrélation en pourcentage, et à l'autre entrée duquel ce signal est appliqué par l'intermédiaire d'un filtre passe-bas (39) avec un autre détecteur de valeur de pointe (41) branché à la suite du circuit diviseur (38).

26. Dispositif selon la revendication 22, caractérisé en ce qu'il est prévu un bloc de commutation (24) pour déterminer la valeur du rapport entre l'amplitude d'impulsions supplémentaires positives apparaissant de façon contigue à l'impulsion négative d'identification, par rapport à la valeur moyenne du signal parasite de haute fréquence (+P/A), ce bloc étant constitué d'un autre amplificateur de soustraction (42), à l'entrée positive duquel est appliqué le signal détecteur, et à l'autre entrée duquel est appliqué le signal d'oscillation de base (SG), avec un circuit diviseur (38') branché à la suite de l'amplificateur de soustraction (42) et à l'entrée duquel est directement appliqué le signal de sortie de l'amplificateur de soustraction (42), tandis qu'à l'autre entrée de ce circuit diviseur, ce signal de sortie est appliqué par l'intermédiaire d'un filtre passe-bas (39'), un détecteur de valeur de pointe (41') étant branché à la suite du circuit analogique diviseur (38').

27. Dispositif selon la revendication 22, caractérisé en ce qu'il est prévu un dispositif de circuit (26) pour la détermination du rapport des amplitudes de l'impulsion négative d'identification par rapport au niveau du courant continu (-P/DC), dispositif de circuit comprenant un circuit analogique diviseur (45) à la première entrée duquel est appliqué le signal détecteur (DS) par l'intermédiaire d'un filtre passe-haut (43) et à l'autre entrée duquel est appliqué le même signal détecteur (DS) par l'intermédiaire d'un filtre passe-bas (44), avec un détecteur de valeur de pointe (47) branché à la suite du circuit analogique diviseur (45).

28. Dispositif selon la revendication 22, caractérisé en ce qu'il est prévu un circuit (27) pour déterminer les intervalles de temps (T) entre les apparitions de l'impulsion négative d'identification, qui se tituent à l'intérieur d'une durée prédéfinie, ce circuit comportant un organe de temporisation monostable déclenché par chaque impulsion négative d'identification avec un circuit d'exploitation branché à la suite, qui lors du dépassement d'une période de temps prédéfinie, ou bien lors de l'apparition de plusieurs impulsions à l'intérieur de la période de temps prédéfinie, déclenche une indication de défaut.

29. Dispositif selon une des revendications 22 à 28, caractérisé en ce que les signaux de sortie (-P/DC, -P/A; +P/A; -P/SG) des détecteurs de valeurs de pointe (47, 41, 41', 37), sont reliés, éventuellement après une pondération appropriée, aux entrées d'un amplificateur de totalisation (43') branché à la suite, dont le signal total de sortie est appliqué à un circuit de comparaison (45') à l'autre entrée duquel est appliqué un signal de valeur de seuil de sécurité en provenance d'un circuit de valeur de seuil (44'), tandis qu'à la suite du comparateur (45') est branché un circuit de décision logique (46') auquel sont appliqués, à côté du signal ultime d'identification (IS) des signaux supplémentaires indiquant un fonctionnement correct de l'ensemble du système.

30. Dispositif selon uns des revendications 22 à 29, caractérisé en ce qu'un circuit de mémorisation intermédiaire (échantillonnage et maintien 49) est relié à la sortie d'un amplificateur de totalisation (43'), qu'il est prévu un autre dispositif mécanique de correction, qui comprend un moteur pas à pas (62) et qui communique au support de cartes (3) un déplacement supplémentaire dans le plan des coordonnées X-Y pour optimaliser l'identité de recouvrement entre l'image et l'enregistrement, le moteur pas à pas (62) étant commandé par un comparateur (60), aux deux entrées duquel sont appliqués, à partir du circuit d'échantillonnage et de maintien (49), respectivement un premier et un second signal de sortie de l'amplificateur de totalisation (43') résultant du déplacement mécanique par le moteur pas à pas (62).

31. Dispositif selon une des revendications 22 à 30, caractérisé en ce qu'il est prévu un circuit de réglage de la brillance des lampes, qui règle la brillance des lampes de façon correspondante au nivsau du signal électrique ss présentant à la sortie du photo-détecteur.

32. Dispositif selon une ou plusieurs des revendications 22 à 31, caractérisé en ce que sur le trajet du faisceau entre l'image et l'enregistrement, sont disposés des moyens optiques de distorsion (54), qui aussi bien, lors de la réalisation ayant lieu une seule fois de l'enregistrement (1) que lors de la comparaison répétée de l'image et de l'enregistrement, distordent le faisceau optique selon un code optique prédéterminé pour empêcher des falsifications.

33. Dispositif selon la revendication 32, caractérisé en ce que les moyens optiques de distorsion (54) sont constitués par un dispositif télescopique avec des lentilles cylindriques.

34. Dispositif selon une des revendications 22 à 33, caractérisé en ce que pour accroître la sécurité d'identification, il est prévu sur le support d'enregistrement, une pluralité d'enregistrements d'empreintes digitales identiques ou différentes, pour une comparaison en pratique identique avec une ou plusieurs images obtenues directement.

35. Dispositif selon une des revendications 22 à 34, caractérisé en ce qu'il est prévu dans un boîtier commun (70), un autre dispositif d'exploitation pour la comparaison opto-électrique d'un autre symbole-maître se trouvant sur la carte avec un symbole-maître mémorisé dans l'appareil (transparent 87), ce dispositif utilisant au moins des parties de l'équipement optique et/ou électronique du système de comparaison des échantillons.

36. Dispositif selon la revendication 35, caractérisé en ce que, à partir d'une lampe commune (71), un faisceau séparé est détaché et dirigé à travers le transparent (87) portant le symbole-maître, en ce qu'un explorateur de déplacement (scanner 89) est branché à la suite du transparent (87) et qu'il est prévu des dispositifs de déviation (91, 92) qui projettent le faisceau passant à travers le transparent (87) à travers une zone de cartes appropriée sur un système détecteur distinct (93, 94) pour l'exploitation du symbole-maître.

37. Dispositif selon la revendication 36, caractérisé en ce que le scanner (89) est entraîné pour l'identification du symbole-maître par les moyens motorisés qui entraînent également le scanner (79) pour la comparaison des échantillons.

38. Dispositif selon la revendication 36, caractérisé en ce qu'il est prévu des moyens de déviation supplémentairs qui dirigent le faisceau pour la comparaison du symbole-maître à travers le seul scanner existant (79), qui est utilisé à un instant ultérieur pour la comparaison des échantillons.

39. Dispositif selon une des revendications 35 à 38, caractérisé en ce qu'il est prévu un dispositif de commutation (U1) dont les deux entrées sont reliées à la sortie du système détecteur (85) existant pour la comparaison des échantillons, ainsi qu'au système détecteur (93) pour la comparaison du symbole-maître, et dont les signaux de sortie sont appliqués successivement à la seule logique d'exploitation commune.

40. Dispositif selon une des revendications 22 à 39, caractérisé en ce que des repères sont associés au moyen d'entraînement pour les prismes en forme de coins ou bien aux prismes en forme de coins eux-mêmes, en ce qu'il est prévu des systèmes opto-électriques (diodes luminescentes, photo-transistors) balayant ces repères, et qui engendrent des successions d'impulsions de sortie correspondant au déplacement en rotation du prisme considéré, tandis qu'il est prévu un dispositif de comparaison de phases (101) qui engendre un signal de sortie se rapportant au balayage de la partie centrale du plan de balayage.

41. Dispositif selon la revendication 40, caractérisé en ce que les repères sont constitués par des disques partiellement transparents et partiellement opaques, tournant en synchronisme avec les prismes en forme de coins.

42. Dispositif selon une des revendications 22 à 41, caractérisé en ce qu'il est prévu une régulation automatique de vitesse de façon que l'un des prismes tourne avec une vitesse de révolution constante, tandis que l'autre tourne avec une vitesse légèrement plus rapide.

43. Dispositif selon la revendication 40, caractérisé en ce que le signal de sortie du dispositif de comparaison de phases (101) est appliqué à une commande de solénoïde qui introduit dans le trajet du faisceau, un troisième prisme en forme de coin pour éviter un balayage central.

44. Dispositif selon une des revendications 22 à 43, caractérisé en ce qu'un premier prisme en forme de coin (16a') du scanner est entraîné de façon quasistationnaire par des moyens d'entraînement (moteur lent à courant continu ou à courant alternatif; moteur pas à pas) par rapport à un second prisme en forme de coin (16b') accomplissant un déplacement en rotation rapide, de sorte que le guidage du faisceau de balayage s'effectue suivant un cercle dans le plan de balayage avec une vitesse constante, en balayant également la zone centrale, avec un déplacement constant progressif ou bien un déplacement s'effectuant incrémentalement pas à pas, le long d'une courbe de rayon constant, prédéterminée par le déplacement du premier prisme en forme de coin (16a').

45. Dispositif selon une des revendications 22 à 44, caractérisé en ce que l'enregistrement (131) de l'empreinte digitale et la représentation (130) du symbole-maître sur la carte (134) sont disposés à un emplacement connu et en se recouvrant réciproquement et que l'appareil de contrôle comporte un pan optique qui dispose d'un trajet de faisceau commun pour la détection optique et pour la mise en oeuvre de la comparaison, commençant à un élément (126) guidant simultanément le faisceau pour la mise en oeuvre de la comparaison des empreintes digitalas et de la comparaison des symboles-maîtres, et allant jusqu'au détecteur de sortie commun (120), et qui dispose également de dispositifs d'éclairement (128, 132) qui engendrent tout d'abord, de façon séparée, et qui sont commandés en succession dans le temps, respectivement pour la comparaison des empreintes digitales et des symboles-maîtres.

46. Dispositif selon la revendication 45, caractérisé en ce que l'élément optique (126) guidant ensemble les faisceaux en provenance des dispositifs d'éclairage respectivement pour la comparaison des empreintes digitales et pour la comparaison des symboles-maîtres, est un miroir basculant mobile ou bien un élément semitransparent (bean splitter).

47. Dispositif selon la revendication 45 ou 46, caractérisé en ce que les moyens d'éclairement du dispositif d'éclairement, (128, 132), sont des diodes luminescentes (LED 136, 139).

48. Dispositif selon une des revendications 22 à 47, caractérisé en ce qu'un circuit de détection (141) est branché sur la liaison de retour (138) allant du circuit électronique d'exploitation (137) aux circuits de commande (135) des moyens d'éclairement pour la régulation de la briliance, ce circuit de détection détectant dans la liaison de retour, les chocs de tension compensant les fluctuations abruptes de brillance ayant leur origine dans un essai de falsification, et les exploite pour l'identification d'un défaut.

49. Dispositif selon une des revendications 22 à 48, caractérisé en ce que pour assurer la sécurité contre les falsifications, le symbole-maître mémorisé dans l'appareil est disposé selon un angle de torsion prédéfini, non détectable de l'extérieur (angle de torsion absolu), par rapport à une position zéro sur laquelle le symbole-maître est susceptible d'être ramené par exemple en cas d'effraction de l'appareil.

50. Dispositif selon une des revendications 22 à 49, caractérisé en ce que pour assurer la sécurité contre les falsifications, le symbole-maître est constitué de zones de symboles partielles superposées les unes aux autres qui prennent respectivement les unes par rapport aux autres des angles relatifs réglables prédéfinis, rapportés à une position zéro, en supplément de la position d'angle absolue, ces angles relatifs étant également susceptibles d'être ramenés dans la position zéro en cas d'effraction de l'appareil.

51. Dispositif selon une des revendications 22 à 50, caractérisé en ce que la carte comporte la représentation superposée de deux ou plusieurs empreintes digitales d'une ou plusieurs personnes, qui sont porteuses de cartes.

52. Dispositif selon une ou plusieurs des revendications 22 à 51, caractérisé en ce que pour augmenter les caractéristiques de différenciation pour la discrimination, l'éclairement s'effectue avec de la lumière mono-chromatique ou bien poly-chromatique, et il est prévu des détecteurs réagissant à une bande de fréquence lumineuse relativement mono-chromatique.

53. Dispositif selon une ou plusieurs des revendications 22 à 52, caractérisé en ce que l'image de l'empreinte digitale ou bien du symbole-maître, au lieu d'être déposée sur la carte, est mémorisée de façon analogique ou digitale dans l'appareil et elle est susceptible d'être transportée à l'emplacement de comparaison sur l'indication d'un code porteur.

54. Dispositif selon la revendication 53, caractérisé en ce que les modèles sont mis en mémoire dans l'appareil sous forme analogique ou digitale et sont appliqués sous forme analogique pour la comparaison optique.

55. Dispositif selon une des revendications 22 à 54, caractérisé en ce que la zone émettrice de lumière du dispositif d'éclairement (filament de lampe) placée sur l'axe optique, est focalisée de façon que lors des déplacements de recherche des prismes en forme de coins (16a, 16b), un décalage optique de position par rapport au photo-détecteur (12) est évité.

56. Dispositif selon l'une des revendications 45 à 47, caractérisé en ce que les éléments communs du banc optique qui sont reliés à l'élément optique (126) qui réunit les faisceaux de rayon des dispositifs d'éclairement se composent d'un première lantille (125) suivie d'un dispositif de balayage (126) et deux prismes en forme de coins rotatifs, suivis d'une autrelentille (123).

57. Dispositif selon la revendication 56, caractérisé en ce que le banc optique est complété à la suite des autres lentilles (123) en aval du dispositif de balayage par un support de cartes (122) comportant le symbole-maître et l'empreinte digitale et une lentille (121) adjacente précédant directement le détecteur de sortie (120).

Fig. 1

## Fig.2a

17

16a  16b

18b

18c

18a

## Fig.2b

19    64    21c

20

21a    21b

## Fig.3

U

15a    15b    15a    15b

14

Detektorsignal

T

t

0031163

3

# Fig. 4

Lichtbünd. — Photodetekt. — Verstärker — Detektorsignal — % Korrelat.-Signal (23) — Summierende Bewertungsschalt. (30)

11 — 12 — 22

+ P/A (24)

− P/A (25)

− P/DC (26)

Zeitab-standsbest. (27) — TA

(28)

**Fig. 5**

DS — [32] — [33] — SG ~ Sinus-Grundschwingungssignal

**Fig. 6a**

DS, SG — (→) [34] — [35] — [36] ▷ — [37] — -P/SG

**Fig. 6b**

DS, SG — (→) [34] — [38] — [40] ▷ — [41] — -P/A

[39] OU

0 031 163

# Fig. 7

DS

(+) 42

SG

39'

38'

40'

41'

+ P/A

# Fig. 8

DS

43

44

DC

45

46

47

Spitzenwertdetektor

- P/DC

0 031 163

Fig. 9

**Fig. 10**

Fig. 11

Fig. 12a

Fig. 12b

Fig. 13 b

Fig. 14 b

Fig. 15 b

Fig. 13 a

Fig. 14 a

Fig. 15 a

Fig. 16

Fig. 17

Fig. 18